Europäisches Patentamt

European Patent Office

Office européen des brevets

(19)

(11) **EP 1 214 602 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(21) Anmeldenummer: **00953161.7**

(22) Anmeldetag: **05.08.2000**

(51) Int Cl.⁷: **G01P 3/489**, H02P 5/50, H02P 6/08

(86) Internationale Anmeldenummer:
**PCT/EP2000/007622**

(87) Internationale Veröffentlichungsnummer:
**WO 2001/022095 (29.03.2001 Gazette 2001/13)**

(54) **VERFAHREN ZUR DREHZAHLREGELUNG EINES MOTORS UND MOTOR ZUR DURCHFÜHRUNG EINES SOLCHEN VERFAHRENS**

METHOD FOR REGULATING THE ROTATIONAL SPEED OF A MOTOR AND A MOTOR FOR CARRYING OUT A METHOD OF THIS TYPE

PROCEDE DE REGULATION DU REGIME D'UN MOTEUR ET MOTEUR PERMETTANT LA MISE EN OEUVRE DUDIT PROCEDE

(84) Benannte Vertragsstaaten:
**AT BE CH CY DE DK ES FI FR GB GR IE IT LI LU MC NL PT SE**

(30) Priorität: **22.09.1999 DE 19945313**
**15.10.1999 DE 19949693**

(43) Veröffentlichungstag der Anmeldung:
**19.06.2002 Patentblatt 2002/25**

(73) Patentinhaber: **Papst-Motoren GmbH & Co. KG**
**78112 St. Georgen (DE)**

(72) Erfinder:
• **DIETERLE, Roland**
**78112 St. Georgen (DE)**

• **HAHN, Alexander**
**88605 Bad Boll (DE)**
• **RAPPENECKER, Hermann**
**78147 Vöhrenbach (DE)**

(74) Vertreter: **Raible, Tobias**
**Raible & Raible**
**Schoderstrasse 10**
**70192 Stuttgart (DE)**

(56) Entgegenhaltungen:
**GB-A- 2 192 103      US-A- 4 584 528**
**US-A- 4 788 476      US-A- 5 237 521**
**US-A- 5 502 376**

EP 1 214 602 B1

**Beschreibung**

Die Erfindung betrifft ein Verfahren zur Drehzahlregelung eines Motors und einen Motor zur Durchführung eines solchen Verfahrens.

Digitale Systeme zur Erfassung und Regelung der Drehzahl eines rotierenden Objekts ("Rotor") beruhen darauf, dass ein solcher Rotor pro Umdrehung eines oder mehrere Signale erzeugt, z.B. Nadelimpulse, Impulsflanken, oder dgl. Diese Signale werden nachfolgend auch als "Ereignisse" bezeichnet. Die Messung einer Drehzahl beruht darauf, dass der zeitliche Abstand zwischen derartigen "Ereignissen" gemessen wird, oder dass gezählt wird, wieviele solche "Ereignisse" pro Zeiteinheit auftreten. Bei einem Regelvorgang wird diese Drehzahlinformation dazu benutzt, um die Drehzahl eines Motors auf einem vorgegebenen Wert zu halten. Unter Motor (prime mover) wird hier jede Art von Motor verstanden, z.B. eine Brennkraftmaschine, ein Elektromotor, ein pneumatisch oder hydraulisch arbeitender Motor, eine Turbine, etc. Die Erfindung findet bevorzugte Anwendung bei der Drehzahlregelung von Elektromotoren.

Da mit zunehmender Drehzahl die Zahl solcher "Ereignisse" pro Zeiteinheit zunimmt, wird zu ihrer Verarbeitung in einem digitalen System umso mehr Rechenzeit benötigt, je höher die Drehzahl ist, so dass die Rechenzeit abnimmt, die für andere Prozesse zur Verfügung steht.

Aus der US-A-4 788 476 ist eine Läppmaschine bekannt, bei der zwei Zahnräder jeweils über einen zugehörigen Motor angetrieben werden. Die Läppmaschine weist ein elektronisches Getriebe und einen Drehmomentregler auf. Durch den separaten Antrieb kann selektiv an bestimmten Zähnen der Zahnräder geläppt werden.

Es ist eine Aufgabe der Erfindung, ein neues Verfahren zum Regeln der Drehzahl eines Motors, und einen Motor zur Durchführung eines solchen Verfahrens, bereitzustellen.

Nach einem ersten Aspekt der Erfindung wird diese Aufgabe gelöst durch ein Verfahren gemäß Patentanspruch 1. Dadurch, dass zwei numerische Frequenzwerte gebildet werden, ist es möglich, einen oder auch beide dieser Frequenzwerte einer mathematischen Transformation zu unterziehen und so mittels des digitalen Reglers eine gewünschte Beziehung zwischen erstem und zweitem Frequenzwert herzustellen. Häufig wird man einen der numerischen Frequenzwerte, oder auch beide, mit einem konstanten Faktor multiplizieren, was digital oft durch Kommaverschiebung möglich ist und in einfacher Weise ein elektronisches Getriebe ermöglicht, doch sind auch andere Beziehungen denkbar, z.B. eine Exponentialfunktion, oder eine sonstige mathematische Funktion, entsprechend den Forderungen der jeweiligen Antriebsaufgabe.

Eine besonders vorteilhafte Ausgestaltung der Erfindung ist Gegenstand des Anspruchs 5. Dadurch, dass mit einer Messung mehrere "Ereignisse" des Frequenzsignals erfasst werden können, findet eine Mittelwertbildung bei der Messung der Frequenzinformation statt. Wird die Frequenz nämlich durch eine Mehrzahl kurzer Messungen ermittelt, so muss man oft aus mehreren Messwerten durch Rechnung einen gleitenden Mittelwert (moving average) bilden. Dagegen erhält man durch die Erfindung ohne zusätzliche Rechnung einen Mittelwert, wodurch z.B. ein Mikroprozessor oder Mikrocontroller, beides im folgenden kurz µC genannt, zusätzlich entlastet wird. Und trotz der ungefähren Vorgabe einer Messdauer durch die vorgegebenen Zeitpunkte findet bei dem Verfahren die eigentliche Messung genau zwischen zwei Ereignissen des Frequenzsignals statt. Dies hat sich als besonders vorteilhaft erwiesen, da die Messung genau zwischen zwei vorgegebenen Ereignissen eines Frequenzsignals eine besonders hohe Genauigkeit ermöglicht.

Eine andere vorteilhafte Weiterbildung der Erfindung ist Gegenstand des Anspruchs 8. Hierdurch wird erreicht, dass bei der Messung einer Drehzahlinformation bei einem Rotor mit einer festen Anzahl von "Ereignissen" pro Rotorumdrehung immer zwischen solchen "Ereignissen" gemessen wird, welche derselben Drehstellung des Rotors zugeordnet sind, d.h. es werden volle Umdrehungen gemessen. Dies ist insbesondere bei Rotoren interessant, welche mehrere "Marken" zur Erzeugung des Rotorstellungssignals aufweisen, welche Marken nicht die gleichen Winkelabstände haben. Durch die Weiterbildung gemäß Anspruch 8 wird also immer an derselben Stelle des Rotors gemessen, so dass die Exaktheit der Winkelabstände keine Rolle spielt. Es ergibt sich hierdurch eine hohe Genauigkeit der Messung. Unter "Marken" werden hier auch unsichtbare Marken verstanden, z.B. ein Muster in der Magnetisierung eines permanentmagnetische Rotors.

Eine andere vorteilhafte Weiterbildung der Erfindung ist Gegenstand des Anspruchs 12. Durch ein solches Verfahren wird kontinuierlich eine Frequenzinformation gemessen, denn die folgende Messung schließt sich nahtlos an die momentane Messung an. In der Nähe von jedem vorgegebenen Zeitpunkt wird eine momentane Messung beendet und eine neue Messung begonnen. Wenn die vorgegebenen Zeitpunkte jeweils nach einer Zeit T_A auftreten, so findet im Mittel jeweils nach der Zeit T_A eine Messung statt. Die Verarbeitung der Messungen, z.B. in einem µC, findet somit in regelmäßigen Abständen statt, welche unabhängig von der Drehzahl sind. Hierdurch wird der µC für diese Aufgaben bei allen Drehzahlen gleichmäßig beansprucht. Da in diesem Fall keine Pause zwischen den einzelnen Messungen liegt, ist dieses Verfahren besonders gut geeignet, wenn für die Messung bzw. Regelung jede einzelne Umdrehung des Rotors berücksichtigt werden muss, wie es z.B. bei Motoren mit hochgenauen Reglern, oder bei Schrittmotoren, notwendig ist.

Die Erfindung betrifft ferner ein Verfahren gemäß Anspruch 16. Durch die Berücksichtigung des Rests in der nachfolgenden Messung wird bei einer Berechnung der Frequenzinformation mittels Division bewirkt, dass durch Rundung keine Frequenzinformation verlorengeht. Dies führt in sehr vorteilhafter Weise zu einer Erhöhung der Genauigkeit der Messung und ist von großem Vorteil bei komplizierten Regelvorgängen, die hohe Präzision erfordern. Zwei oder mehr Motoren können dadurch, dass man allen diesen Motoren dasselbe Frequenzsignal zuführt, also ohne übergeordneten Regler, synchron miteinander laufen. Systeme mit übergeordneten Reglern sind relativ langsam, haben lange Einschwingvorgänge, und sie neigen zu Oszillationen, besonders bei niedrigen Drehzahlen. Dagegen arbeitet ein Verfahren nach der Erfindung schnell, denn die Berücksichtigung des Rests erfordert nur wenige Programmschritte. Auch kann ein erfindungsgemäßes Verfahren leicht auf andere Parameter umgestellt werden, z.B. auf einen anderen "Getriebefaktor", auf andere Regelparameter, etc.

Die bevorzugte Verwendung eines Ringzählers gemäß Anspruch 38, und die Weiterbildung gemäß Anspruch 39, haben den Vorteil, dass der Stopp der einen Messung und der Start der nachfolgenden Messung gleichzeitig sind, weil der Ringzähler ständig läuft, so dass keine Fehler durch eine Messverzögerung auftreten können und sich etwaige Verzögerungen, z.B. durch das gleichzeitige Auftreten von zwei Interrupts, nachfolgend sofort ausgleichen, weil die Zeit des nachfolgenden Messzyklus automatisch etwas zu kurz wird.

Dies ermöglicht eine lückenlose Erfassung der Drehzahl, und einen mittleren Fehler der Drehzahlerfassung, der bei Null liegt, da bei der Messung kein Bit verlorengeht. Ein solcher Ringzähler hat gewöhnlich einen sogenannten Pre-Scaler, mit dem die Frequenz eingestellt werden kann, mit der dieser Zähler zählt. Durch bitweises Einstellen dieser Funktion kann der Ringzähler mit verschiedenen festen Vielfachen der Quarzfrequenz des µC getaktet werden. Dadurch können Zählfrequenz und Auflösung des Ringzählers für den Anwendungsfall optimiert werden. Diese Einstellung kann über einen Parameter erfolgen, der im Motor in einem nichtflüchtigen Speicher gespeichert ist. Auf diese Weise kann die Auflösung des Ringzählers für unterschiedliche Drehzahlbereiche durch unterschiedliche Parameter optimiert sein.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:

Fig. 1    eine Prinzipdarstellung einer erfindungsgemäßen Anordnung zur Regelung der Drehzahl eines Motors auf einen Wert, der durch ein Frequenzsignal f_s von außen vorgegeben wird,

Fig. 2    die Pinbelegung eines beim Ausführungsbeispiel verwendeten µC, hier des Typs PIC 16C72 von Microchip,

Fig. 3    ein Prinzipschaltbild einer bevorzugten Ausführungsform eines Motors nach der Erfindung, hier mit einem Elektromotor 32,

Fig. 4    ein Frequenzsignal f vor und nach der Signalbearbeitung,

Fig. 5    eine schematische Darstellung zur Erläuterung einer Einzelheit der Fig. 3,

Fig. 6    eine schematische Darstellung zur Erläuterung einer Einzelheit der Fig. 3,

Fig. 7    ein schematisierte Darstellung einer Regelanordnung, welche ein "elektronisches Getriebe" ermöglicht,

Fig. 8    ein Flussdiagramm mit einer Übersicht über das Gesamtprogramm, hier in Form eines sogenannten Funktionsmanagers,

Fig. 9    ein Funktionsregister, welches im Zusammenhang mit Fig. 8 verwendet wird,

Fig. 10    ein Zustandsdiagramm für ein bevorzugtes Messverfahren zur Messung eines Frequenzsignals,

Fig. 11    ein Diagramm, welches beispielhaft die quasi gleichzeitige Messung einer Sollfrequenz f_s und einer Istfrequenz f zeigt,

Fig. 12    ein Flussdiagramm für eine Funktion TIMER0-Interrupt,

Fig. 13    ein Flussdiagramm für eine Funktion Hall-Interrupt,

Fig. 14    ein Flussdiagramm für eine Funktion f_s-Interrupt,

Fig. 15    ein Flussdiagramm für eine Funktion CALC_n zur Berechnung des aktuellen Werts der Drehzahl (Ist-Drehzahl),

Fig. 16    ein Flussdiagramm für eine Funktion CALC_n_s zur Berechnung einer Soll-Drehzahl n_s,

Fig. 17    ein Flussdiagramm für eine Funktion RGL_ON, welche bestimmt, wann die Funktion RGL der Fig. 18 gestartet wird,

Fig. 18    ein Flussdiagramm für die Funktion RGL zur Regelung der Drehzahl; diese Funktion ermöglicht ein "elektronisches Getriebe",

Fig. 19    ein Zustandsdiagramm für den prinzipiellen Ablauf des Regelvorgangs,

Fig. 20    ein Zustandsdiagramm für einen Regler, bei welchem auch die Soll-Drehzahl n_s = 0 eingestellt werden kann,

Fig. 21    ein Flussdiagramm für eine Funktion RGL_ON2, welche an das Zustandsdiagramm der Fig. 20 angepasst ist,

Fig. 22    eine Prinzipdarstellung zur Erläuterung eines bevorzugten Messverfahrens bei einem Rotor mit einer einzigen Marke 290,

Fig. 23    eine schematische Darstellung einer Drehzahlberechnungsfunktion,

Fig. 24    eine Prinzipdarstellung einer bevorzugten Art der Messung bei einem Rotor mit zwei Marken 291 und 292,

Fig. 25    eine Prinzipdarstellung einer Messung analog Fig. 24, bei welcher ein Störsignal S auftritt, zur Erläuterung des hierbei auftretenden Vorgänge,

Fig. 26    eine Darstellung mit drei Elektromotoren 181, 183, 185, welche unterschiedliche Rotorpolzahlen haben und welche hier durch das gleich Sollfrequenzsignal f_s auf dieselbe Drehzahl n geregelt werden,

Fig. 27    eine stark schematisierte Darstellung eines Kopiergeräts, das drei Antriebsmotoren M1, M2 und M3 hat, welche alle dasselbe Steuersignal f_s für ihre Drehzahl erhalten und welche vermöge der Getriebefunktion mit unterschiedlichen Drehzahlen laufen, die in vorgegebenen numerischen Verhältnissen zu f_s stehen,

Fig. 28    eine schematisierte Darstellung mit drei Motoren M1, M2, M3, von denen M1 der Master-Motor ist, welcher den beiden anderen Motoren M2 und M3 ein Signal TACHO liefert, das ein Maß für die Drehzahl von M1 darstellt und die Drehzahlen der beiden anderen Motoren so regelt, dass diese Drehzahlen stets in einem vorgegebenen Verhältnis zur Drehzahl des Motors M1 stehen, und

Fig. 29    eine schematische Darstellung analog Fig. 6, welche die Kommutierung eines elektronisch kommutierten Motors 32" durch den µC 23 zeigt.

Gleiche oder gleich wirkende Teile werden nachfolgend mit denselben Bezugszeichen bezeichnet und gewöhnlich nur einmal beschrieben.

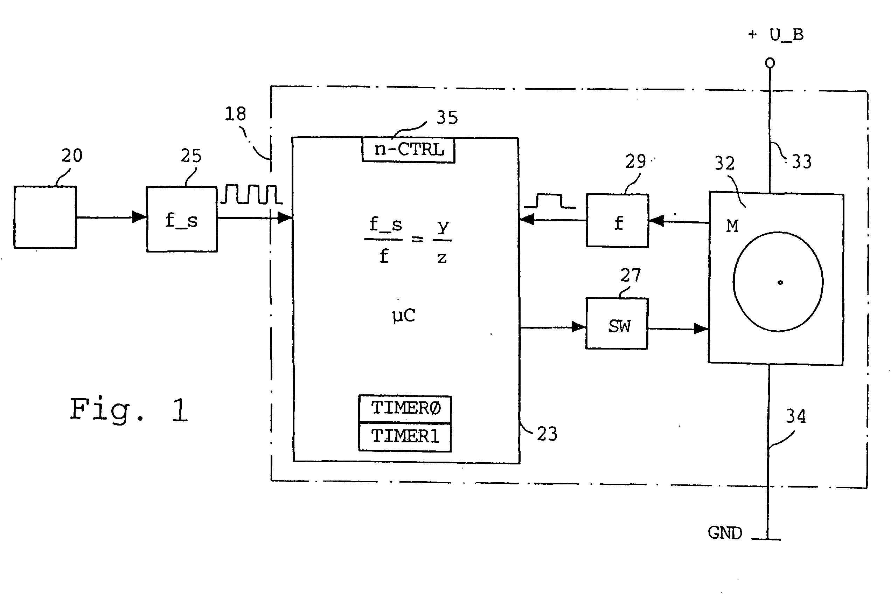

**Fig. 1** zeigt ein Blockschaltbild einer erfindungsgemäßen Anordnung 18 mit einem Motor M. Dieser ist hier als Elektromotor 32 dargestellt, könnte aber ein beliebiger anderer Motor sein, dessen Drehzahl mittels eines Stellsignals verändert werden kann, z.B. bei einer Brennkraftmaschine mittels einer Änderung der Kraftstoffzufuhr, bei einer Dampfturbine über die Änderung der Dampfzufuhr, etc.

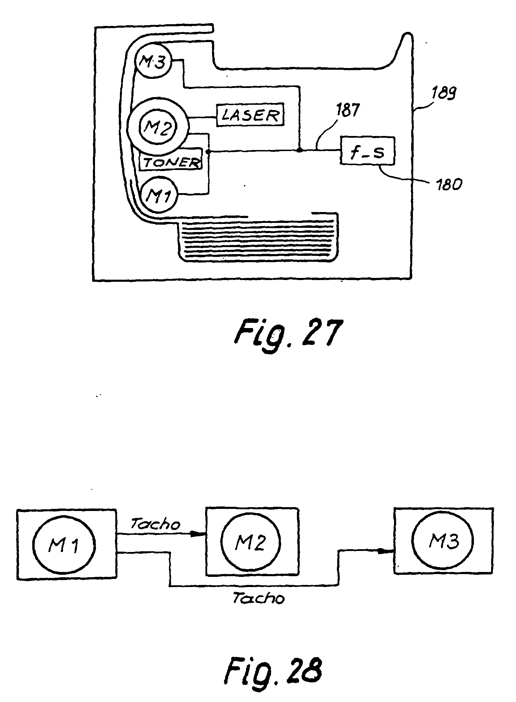

Der Elektromotor 32 ist mit einem Anschluss 33 mit einer positiven Betriebsspannung + U_B und mit einem anderen Anschluss 34 mit Masse GND verbunden. Mittels eines Stellwerts SW 27 wird die Bestromung des Motors 32 gesteuert, um dessen Drehzahl zu regeln. Ein Rotorstellungssignal des Motors 32 wird als Frequenz f 29 einem Mikroprozessor oder Mikrocontroller, im folgenden µC 23 genannt, zugeführt. Eine Sollfrequenz f_s 25 wird ebenfalls dem µC 23 zugeführt, z.B. von einem Frequenzgeber 20, der beispielsweise auch ein anderer Elektromotor sein kann, wie nachfolgend bei Fig. 28 beschrieben. Bei Fig. 28 gibt der Motor M1 über sein Ausgangssignal die Drehzahl der Motoren M2 und M3 vor, d.h. diese können z.B. mit derselben Drehzahl laufen wie der Motor M1, oder mit anderen Drehzahlen, die zur Drehzahl des Motors M1 in einem gewünschten Drehzahlverhältnis stehen. Da der µC 23 klein ist, kann er zusammen mit dem Motor 32 zu der Baueinheit 18 zusammengefasst werden, nämlich zu einer Motoreinheit 18 mit "elektronischem Getriebe". Dies ist auch bei Elektromotoren möglich, die man nach der gängigen Definition als Kleinmotoren oder Kleinstmotoren bezeichnet.

In dem μC 23 ist ein Drehzahlregler n-CTRL 35 realisiert, welcher den Stellwert SW 27 so regelt, dass ein festes Verhältnis zwischen der Sollfrequenz f_s und der Istfrequenz f entsteht, welches folgendermaßen beschrieben werden kann

$$f\_s / f = y/z \tag{1}$$

wobei y und z ganze Zahlen sind. Dies ist also das vorstehend erwähnte "elektronische Getriebe".

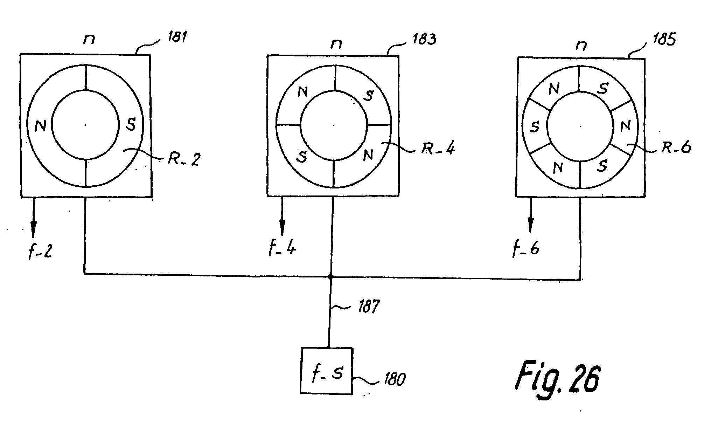

Hierdurch wird es z.B. möglich, einen Motor 181 mit zweipoligem Rotor R_2, einen Motor 183 mit vierpoligem Rotor R_4 und einen Motor 185 mit sechspoligem Rotor R_6 mit einer einzigen Sollfrequenz f_s synchron zu steuern, wie das in Fig. 26 dargestellt ist, so dass z.B. alle drei Motoren mit derselben gewünschten Drehzahl n rotieren, die in einem bestimmten Verhältnis zu f_s steht.

Hierzu wird z.B. f_s / f_2 = 20 / 2,

f_s / f_4 = 20 / 4 und

f_s / f_6 = 20 / 6

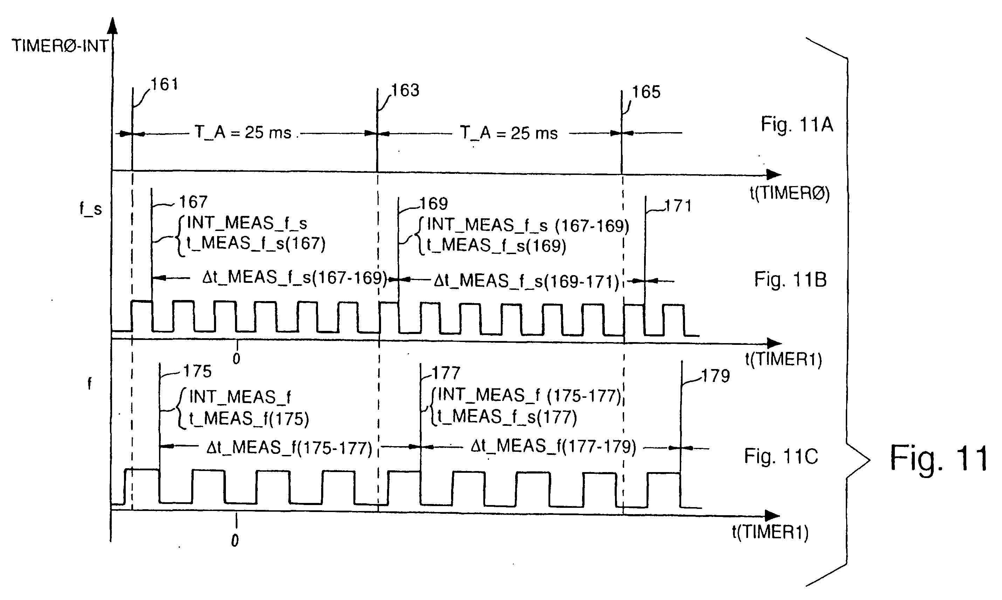

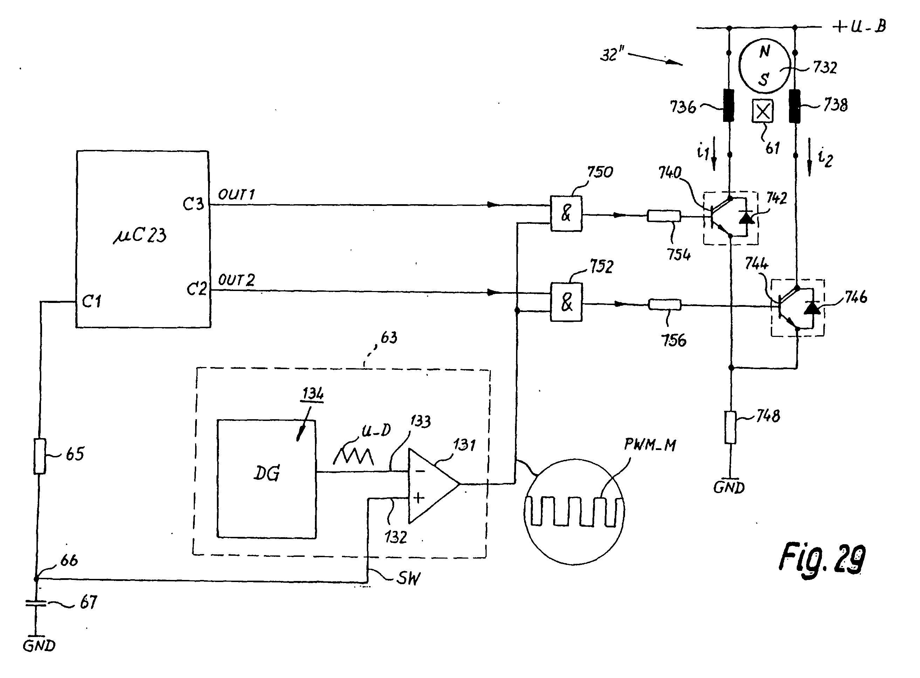

eingestellt, wobei f_2 die Istfrequenz des zweipoligen Rotors R_2, f_4 die Istfrequenz des vierpoligen Rotors R_4 und f_6 die Istfrequenz des Rotors R_6 ist. Die Darstellung nach Fig. 26 geht davon aus, dass dort in der üblichen Weise zur Erfassung der Rotorstellung ein Hallgenerator verwendet wird, der vom Magnetfeld des betreffenden Rotors gesteuert wird, vgl. Fig. 11C und Fig. 29. Die Verhältnisse ergeben sich dadurch, dass bei dem zweipoligen Rotor R_2 zwei Wechsel des Hallsignals ("Hallwechsel") pro Umdrehung stattfinden, während bei dem vierpoligen Rotor R_4 vier Hallwechsel pro Umdrehung und bei dem sechspoligen Rotor R_6 sechs Hallwechsel pro Umdrehung stattfinden.

Eine solche Anordnung ist vor allem für Geräte mit mehreren Motoren interessant, bei welchen die Motoren ein festes Drehzahlverhältnis zueinander haben müssen.

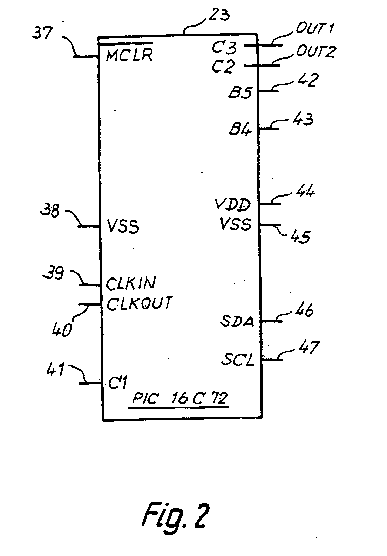

**Fig. 2** zeigt die Anschlüsse eines μC 23. Bei diesem Ausführungsbeispiel wird ein Mikrocontroller der Firma Microchip vom Typ PIC 16C72 verwendet. Dies ist ein 8 Bit-Prozessor. Er enthält einen 16 Bit-Tmer und einen 8 Bit-Timer, zwei PWM-Register, und mehrere Interruptfunktionen. Naturgemäß stellt dieser Prozessor nur ein Beispiel dar, hat sich aber für die beschriebene Ausführungsform als die bevorzugte Lösung (best mode) erwiesen.

Der μC 23 hat u.a. die Anschlüsse MCLR 37, VSS 38, CLKIN 39, CLKOUT 40, C1 41, B5 42, B4 43, VDD 44, VSS 45, SDA 46 und SCL 47.

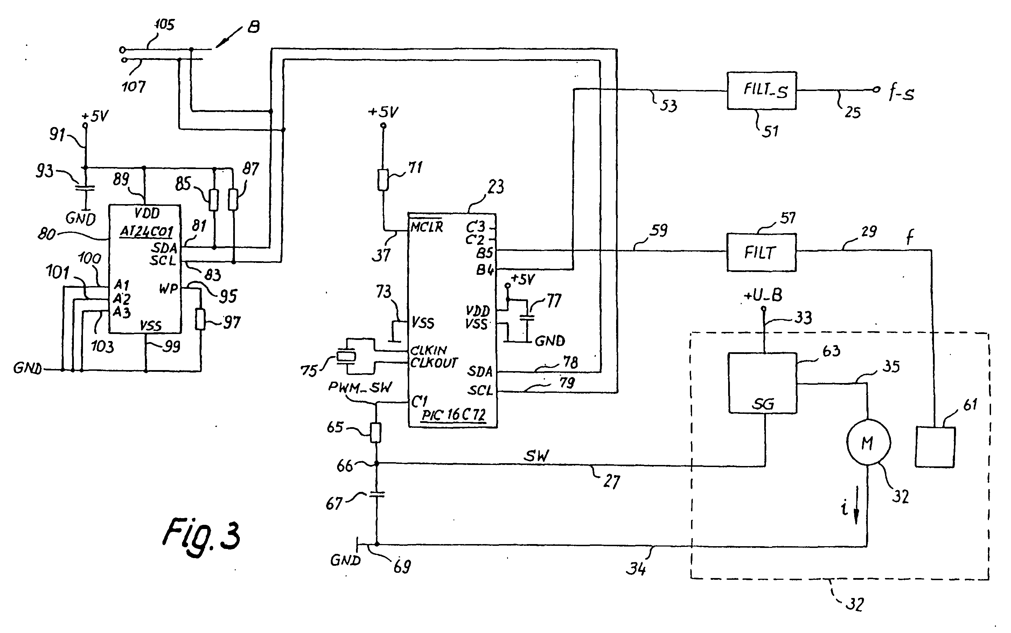

**Fig. 3** zeigt ein stark schematisiertes Schaltbild einer bevorzugte Anordnung mit einem Elektromotor 32.

Die Anschlüsse des μC 23 sind in Fig. 2 dargestellt, und die entsprechenden Bezugszeichen werden weiter verwendet. Der Anschluss MCLR/ 37 ist über einen Widerstand 71 an einer Plus-Spannung + 5 V angeschlossen. Die Anschlüsse CLKIN 39 und CLKOUT 40 sind mit einem Oszillatorquarz 75 verbunden. Der Anschluss VDD 44 ist an + 5 V angeschlossen, der Anschluss VSS 45 an Masse GND, und die beiden Anschlüsse sind über einen Kondensator 77 miteinander verbunden. Der μC 23 weist zwei Timer TIMER0 und TIMER1 auf, die in Fig. 1 schematisch dargestellt sind.

Die Sollfrequenz f_s gelangt über eine Leitung 25 zu einem Filter FILT_s 51, und von dort über eine Leitung 53 zum Anschluss B4.

Die durch einen Rotorstellungssensor 61 erfasste Istfrequenz f (entsprechend der Drehzahl des Motors 32) gelangt über eine Leitung 29 zu einem Filter FILT 57, und von dort über die Leitung 59 zum Anschluss B5 42 des μC 23.

Ein EEPROM 80 weist Anschlüsse SDA 81, SCL 83, VDD 89, WP 95, VSS 99, A1 100, A2 101 und A3 103 auf.

Der Anschluss SDA 46 des μC 23 ist über eine Leitung 78 mit dem Anschluss SDA 81 des EEPROM 80 und mit einem externen Anschluss 105 verbunden.

Der Anschluss SCL 47 des μC 23 ist über eine Leitung 79 mit dem Anschluss SCL 83 des EEPROM 80 und mit einem externen Anschluss 107 verbunden. Die Anschlüsse 105, 107 dienen zur Verbindung mit einem Kommunikationsbus B.

Die Anschlüsse VSS 99, A1 100, A2 101, A3 103 des EEPROM 80 sind mit Masse GND verbunden. Der Anschluss WP 95 ist über einen Widerstand 97 mit Masse GND verbunden. Die Anschlüsse SDA 81 bzw. SCL 83 sind über Pullup-Widerstände 85 bzw. 87 mit + 5 V verbunden. Der Anschluss VDD 89 ist über eine Leitung 91 mit + 5 V und über einen Kondensator 93 mit Masse GND verbunden.

Der Motor 32 weist ein Stellglied SG 63 auf, welches die Größe eines durch den Motor 32 fließenden Stromes i beeinflusst.

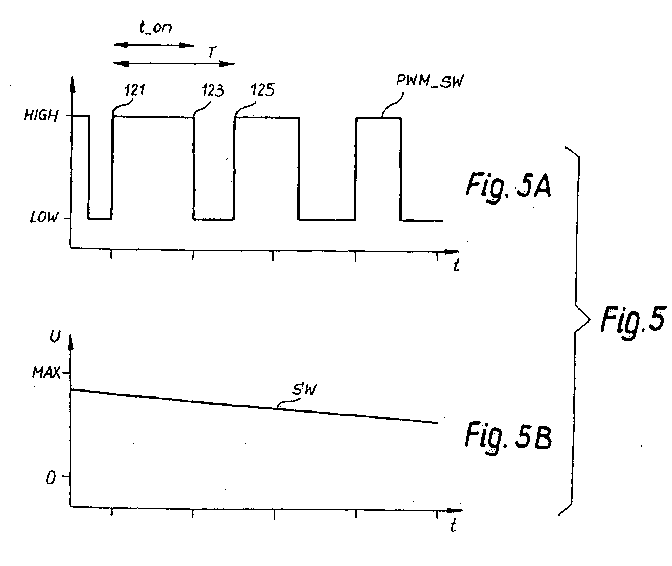

Das Stellglied 63 ist über eine Leitung 33 an die Spannung + U_B angeschlossen, und ein Stellwert SW wird dem Stellglied SG 63 über eine Leitung 27 von dem Anschluss C1 des μC 23 zugeführt, um die Größe des Stromes i zu beeinflussen. Zwischen dem Anschluss C1 des μC 23 und der Leitung 27 liegt ein Widerstand 65, und der Punkt 66 ist über einen Kondensator 67 mit Masse GND verbunden. Widerstand 65 und Kondensator 67 bilden zusammen ein Integrierglied, dessen Funktion nachfolgend anhand von Fig. 5 erläutert wird.

**Arbeitsweise**

Der µC 23 erhält seine Betriebsspannung über den Anschluss VDD 44 an + 5 V und VSS 45 an Masse GND. Über einen Siebkondensator 77 wird die Versorgungsspannung gegen Spannungsspitzen und -einbrüche gesichert. Die Taktfrequenz des µC 23 wird mit Hilfe des an die Anschlüsse CLKIN 39 und CLKOUT 40 angeschlossenen Oszillators 75 erzeugt.

Die Anschlüsse SDA 46 bzw. SCL 47 des µC 23 dienen zur seriellen Übertragung von Daten zwischen dem µC 23 und dem EEPROM 80, dort die Anschlüsse SDA 81 bzw. SCL 83, sowie den externen Anschlüssen 105 bzw. 107, die z.B. an den externen Bus B geschaltet sind.

Das EEPROM 80 erhält seine Spannung über den Anschluss VDD 89, der über die Leitung 91 mit + 5 V verbunden und zusätzlich über einen Kondensator 93 gegen Spannungsspitzen gesichert ist, sowie durch den Anschluss VSS 99, der an Masse GND angeschlossen ist. Der Schreibschutz-Anschluss WP 95 ist über den Widerstand 97 auf Masse GND gezogen, so dass in diesem Ausführungsbeispiel kein Beschreiben des EEPROM 80 möglich ist. Aus demselben Grund sind auch die Anschlüsse A1 100, A2 101, A3 103, die zur Adresscodierung dienen, auf Masse GND gezogen. In diesem Ausführungsbeispiel sind die Parameter im EEPROM 80 festgeschrieben. Varianten mit durch den µC 23 oder über den Bus B beschreibbarem EEPROM 80 sind in gleicher Weise möglich, vgl. z.B. die PCT-Anmeldung PCT/EP99/05186 der Anmelderin vom 21. 07.1999 (PCT216=PCT-3036).

Die beiden Ausgänge SDA 81 bzw. SCL 83 sind als Open-Collector-Ausgänge ausgebildet, und sie sind deshalb mit den Pull-Up-Widerständen 85 bzw. 87 beschaltet.

Die Sollfrequenz f_s wird von extern, z.B. von einem Frequenzgenerator oder einem anderen Motor, geliefert. Die Istfrequenz f wird hier von dem Sensor 61 geliefert, welcher eine konstante Anzahl von Impulsen pro Umdrehung liefert. Als Sensor 61 kann jede bekannte Art von Sensor verwendet werden, z.B. ein Resolver, ein Tachogenerator, welcher an seinem Ausgang eine Wechselspannung liefert, ein Hallgenerator, oder ein optischer, induktiver oder sonstiger Sensor. Da bei elektronisch kommutierten Motoren die Rotorstellung gewöhnlich mittels eines oder mehrerer Hallgeneratoren erfasst wird, kann das Ausgangssignal eines solchen Sensors auch als Istfrequenz verwendet werden, da dann Zusatzkosten für einen Tachogenerator entfallen. Die Verwendung eines Tachogenerators kann jedoch dann vorteilhaft sein, wenn man eine hohe Frequenz des Signals f für die Istfrequenz wünscht, z.B. bei niedrigen Drehzahlen, z.B. bei einem Schiffsdiesel mit sehr niedriger Drehzahl.

Die Filter FILT_s 51 bzw. FILT 57 dienen zur Aufbereitung der Flanken der Sollfrequenz f_s bzw. der Istfrequenz f, so dass bei einer Flanke an den interruptfähigen Eingängen B5 42 bzw. B4 43 sicher ein Interrupt ausgelöst wird. Die Filter FILT_s 51 bzw. FILT 57 können z.B. als RC-Glied oder als Schmitt-Trigger ausgebildet sein.

Bei geeigneten Signalen f bzw. f_s kann auch eines oder beide der Filter FILT_s 51 und FILT 57 entfallen.

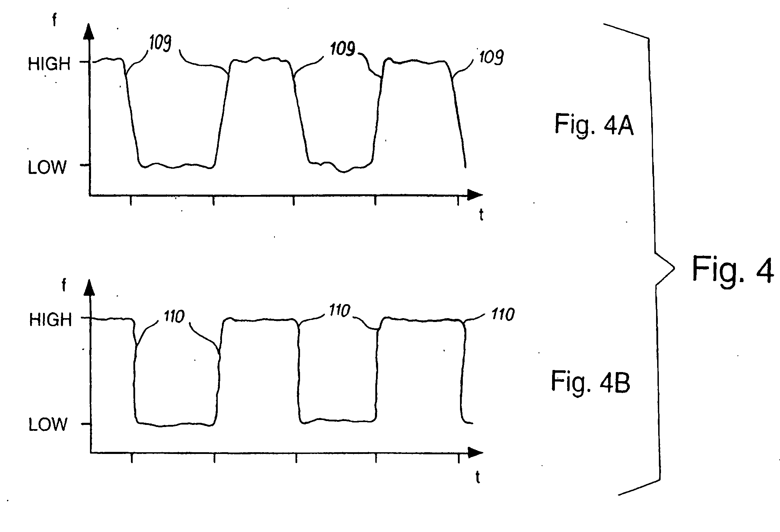

Ein Beispiel für die Wirkung der Filter ist in Fig. 4 gezeigt.

**Fig. 4A** zeigt die Istfrequenz f, bevor sie in das Filter FILT 57 gelangt, und **Fig. 4B** zeigt die Istfrequenz f, nachdem sie in dem Filter FILT 57 aufbereitet wurde.

Die Istfrequenz f aus Fig. 4A stammt z.B. von einem Hallgenerator, und die Flanken 109 sind weniger steil.

Die Istfrequenz f aus Fig. 4B ist durch das Filter FILT 57 aufbereitet worden. Die Flanken 110 sind steil, und es kann sicher durch die Flanken 110 im µC 23 ein Interrupt ausgelöst werden.

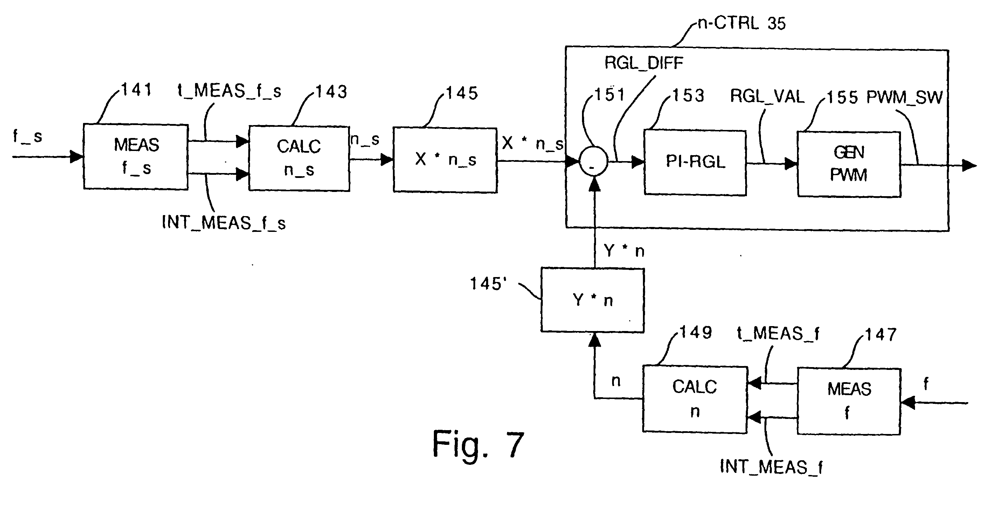

Ein in dem µC 23 berechneter Stellwert RGL_VAL (Fig. 7) wird über den Anschluss C1 41 als pulsweitenmoduliertes Signal (PWM-Signal) PWM_SW ausgegeben. Das Signal PWM_SW wird über ein aus dem Widerstand 65 und dem Kondensator 67 bestehendes RC-Glied zu einer dem µC-internen Stellwert RGL_VAL etwa proportionalen analogen Spannung umgewandelt, welche als Stellwert SW bezeichnet wird und dem Stellglied SG 63 über die Leitung 27 zugeführt wird. Das Stellglied SG 63 steuert die Stromzufuhr für den Motor M 32. Das Stellglied SG 63 kann z.B. als analoger Längssteller oder als PWM-Stellglied ausgeführt sein, oder in sonstiger Weise.

**Fig. 5A** zeigt das PWM-Signal PWM_SW von Anschluss C1 41 aus Fig. 3, und **Fig. 5B** zeigt in idealisierter Form den Stellwert SW, welcher am Punkt 66 aus Fig. 3 durch das aus dem Widerstand 65 und dem Kondensator 67 gebildeten RC-Glied entsteht, wenn das Tastverhältnis von PWM_SW abnimmt.

Je nach Tastverhältnis TV_SW des PWM-Signals PWM_SW aus Fig. 5A hat der Stellwert SW aus Fig. 5B eine bestimmte Spannung U zwischen 0 und MAX.

Das Tastverhältnis TV ist allgemein definiert als

$$TV = t\_on/T \qquad\qquad (2)$$

also dem Quotienten aus der Zeit t_on (Fig. 5A), die das PWM-Signal auf HIGH ist, hier von 121 bis 123, und aus der Periodendauer T des PWM-Signals, hier von 121 bis 125. Das Tastverhältnis wird in Prozent angegeben, so dass es die Werte 0 Prozent bis 100 Prozent annehmen kann.

In Fig. 5A nimmt das Tastverhältnis von links nach rechts ab, so dass auch das Signal SW in Fig. 5B von links nach rechts abnimmt.

Das Signal SW wird dem Stellglied SG 63 aus Fig. 3 über die Leitung 27 zugeführt, und so kann durch das Tastverhältnis TV_SW die Motordrehzahl gesteuert werden.

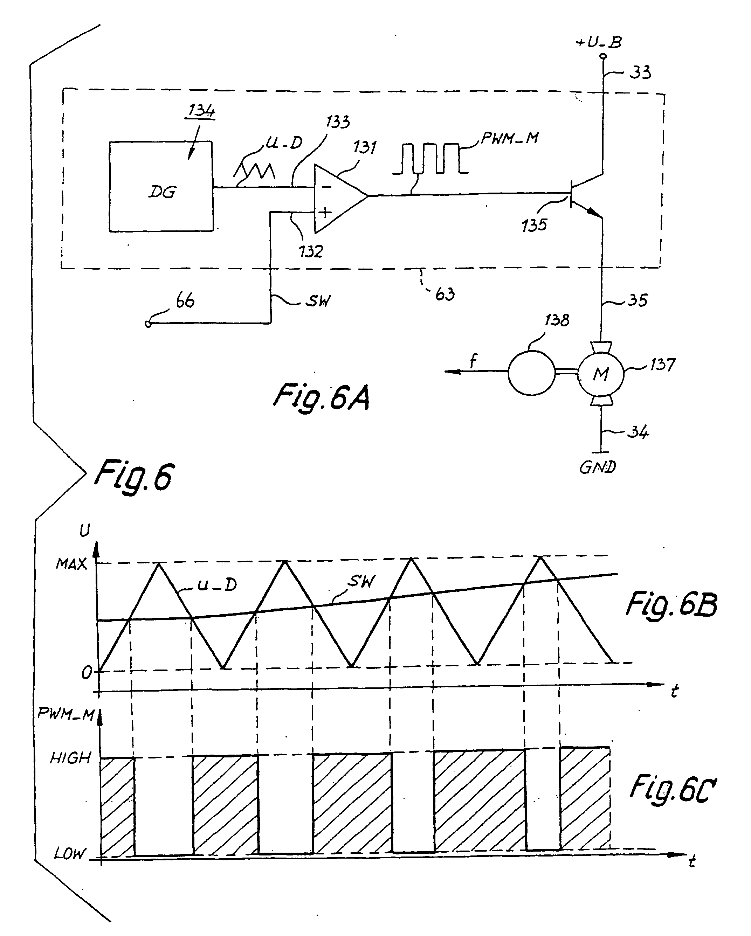

Fig. 6A zeigt rein beispielhaft ein Ausführungsbeispiel für das Stellglied SG 63 aus Fig. 3, welches zur Steuerung der Drehzahl n eines Motors 137 dient, der hier als Kollektormotor dargestellt ist.

Das Stellglied SG 63 weist einen Komparator 131 mit einem Pluseingang 132 und einem Minuseingang 133, einen Dreiecksgenerator DG 134 und einen npn-Transistor 135 auf.

Von Punkt 66 wird dem Pluseingang 132 des Komparators 131 das Signal SW zugeführt. Das von dem Dreiecksgenerator DG 134 erzeugte Dreieckssignal u_D wird dem Minuseingang 133 des Komparators 131 zugeführt. Am Ausgang des Komparators 131 entsteht ein PWM-Signat PWM_M, welches dem Transistor 135 zugeführt wird. Der Transistor 135 schaltet zwischen der über die Leitung 33 angeschlossenen Betriebsspannung + U_B und dem über die Leitung 35 verbundenen Motor M 137, dem ein Tachogenerator 138 zur Erzeugung einer drehzahlproportionalen Frequenz f zugeordnet ist.

**Fig. 6B** zeigt einen Beispielverlauf für die Spannungen u_D und SW, und **Fig. 6C** zeigt ein sich daraus ergebendes Signal PWM_M, mit dem der Transistor 135 ein- und ausgeschaltet wird.

Der Komparator 131 vergleicht die beiden Signale u_D und SW. Ist der Stellwert SW größer als die Dreiecksspannung u_D, so ist das PWM-Signal PWM_M auf HIGH, ansonsten ist es auf LOW. Durch die Höhe des Stellwerts SW wird also das Tastverhältnis des PWM-Signals PWM_M gesteuert. In Fig. 6B nimmt das Signal SW von links nach rechts zu. Dadurch wird auch das Tastverhältnis des Signals PWM_M in Fig. 6C von links nach rechts erhöht.

Da der Motor 137 bei einem höheren Tastverhältnis des Signals PWM_M über den Transistor 135 auch mehr Strom und damit Leistung erhält, kann über die Höhe des Stellwerts SW die Motordrehzahl gesteuert werden.

**Fig. 29** zeigt eine Variante zu Fig. 6. Gleiche oder gleich wirkende Teile erhalten deshalb dieselben Bezugszeichen wie in Fig. 6. - Der Motor ist hier als sogenannter zweisträngiger, zweipulsiger elektronisch kommutierter Motor (ECM) 32" dargestellt, der als Beispiel einen zweipoligen permanentmagnetischen Rotor 732 hat. Dieser steuert durch sein Magnetfeld einen Hallgenerator 61, welcher das Signal f erzeugt und mit diesem Signal auch die Kommutierung des ECM 32" steuert. Der ECM 32" kann z.B. gemäß der DE 23 46 380 C2 gebaut sein. Naturgemäß ist dies nur ein Beispiel. Die Erfindung eignet sich in gleicher Weise für ECMs mit einer anderen Zahl von Strängen und einer anderen Zahl von Rotorpolen, wie das für den Fachmann selbstverständlich ist.

Die beiden Stränge des ECM 32" sind mit 736 und 738 bezeichnet. Der Strom $i_1$ im Strang 736 wird gesteuert von einem npn-Darlingtontransistor 740 mit Freilaufdiode 742, und zur Steuerung des Stromes $i_2$ im Strang 738 dient ein npn-Darlingtontransistor 744 mit Freilaufdiode 746. Die Emitter der Transistoren 740, 744 sind miteinander und über einen Widerstand 748 mit GND verbunden.

Der Transistor 740 wird von einem Port OUT1 des μC 23 über ein UND-Glied 750 gesteuert, dessen anderem Eingang das Signal PWM_M vom PWM-Steller 63 zugeführt wird. Fig. 29 zeigt schematisch die Form dieses Ausgangssignals. Es handelt sich um Rechteckimpulse mit z.B. 25 kHz. Die Breite dieser Impulse wird durch die Höhe der Spannung am Eingang 132 des Stellers 63 bestimmt. Der Transistor 740 wird nur leitend gesteuert, wenn sowohl am Ausgang des Stellers 63 wie am Ausgang OUT1 des μC 23 das logische Signal "1" vorhanden ist.

Ebenso wird der Transistor 744 von einem Port OUT2 des μC 23 über ein UND-Glied 752 gesteuert, dessen anderem Eingang das Signal PWM_M vom Steller 63 zugeführt wird. Der Transistor 744 wird also nur leitend gesteuert, wenn sowohl am Ausgang des PWM-Stellers 63 wie am Ausgang OUT2 des μC 23 das logische Signal "1" vorhanden ist.

Zwischen dem Ausgang des UND-Glieds 750 und der Basis des Transistors 740 liegt ein Widerstand 754, und analog beim Transistor 744 ein Widerstand 756.

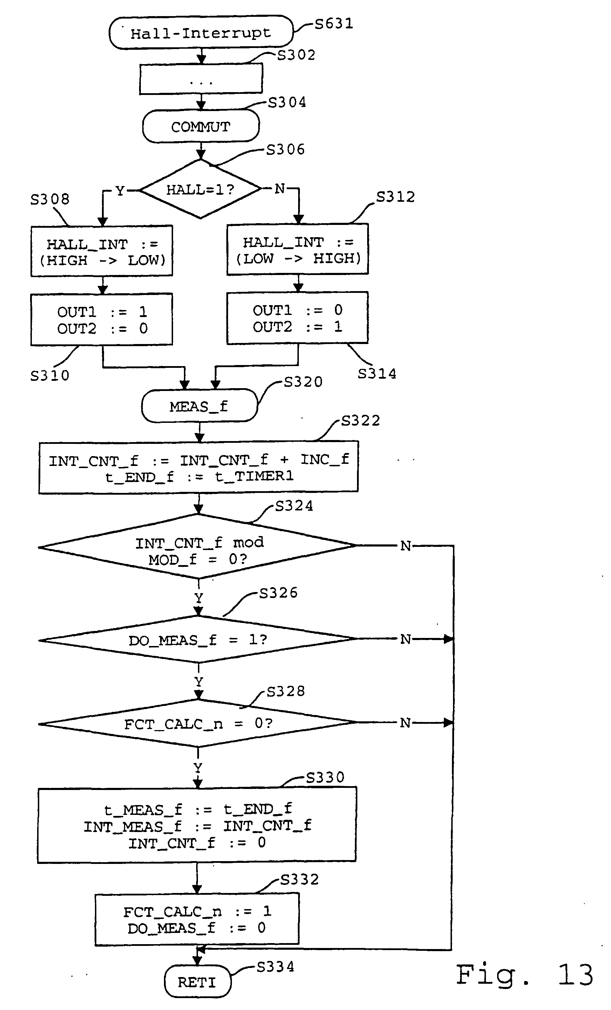

Wie nachfolgend bei Fig. 13, S310 und S314 beschrieben wird, werden die Ausgänge OUT1 und OUT2 des μC 23 alternierend auf High und Low geschaltet und steuern dadurch, welcher der beiden Stränge 736, 738 Strom erhalten soll. Die Höhe der Ströme i1, i2 wird vom Signal am Punkt 66 bestimmt, welches das Tastverhältnis des Signals PWM_M bestimmt, wie bei Fig. 6 ausführlich beschrieben.

**Schematische Übersicht über eine bevorzugte Ausführungsform des Programms**

Fig. 7 zeigt eine Übersicht über das in dem μC 23 ablaufende Programm. Das Programm weist eine Sollwertmessung "MEAS f_s" 141 und eine Sollwertberechnung "CALC n_s" 143, eine Istwertmessung "MEAS f" 147 und eine Istwertberechnung "CALC n" 149 , ein "Getriebe" 145 und den Drehzahlregler n-CTRL 35 (Fig. 1) auf. Der digitale Drehzahlregler n-CTRL 35 weist hier einen Regeldifferenzberechner 151, einen PI-Regler "PI-RGL" 153 und eine Stellwertausgabe "GEN PWM" 155 auf, an deren Ausgang das Signal PWM_SW erzeugt wird.

Die Sollfrequenz f_s wird in "MEAS f_s" 141 gemessen. Es werden dabei die Anzahl der Flanken (110 in Fig. 4) seit der letzten Messung in einer Variablen INT_MEAS_f_s und der Zeitpunkt der aktuellen Messung in einer Variablen t_MEAS_f_s gemessen.

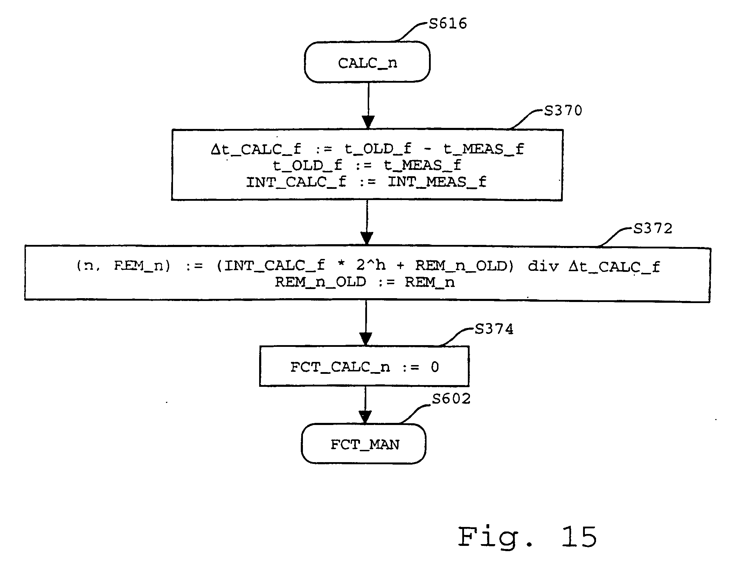

Die Sollwertberechnung "CALC n_s" 143 berechnet hieraus die Solldrehzahl n_s. Dies wird nachfolgend anhand von Fig. 15 erläutert.

Die Messung der Istfrequenz f in "MEAS f" 147 und die Berechnung der Istdrehzahl n in "CALC n" 149 geschieht völlig analog zu der Messung der Sollfrequenz f_s in "MEAS f_s" 141 und die Solldrehzahl n_s wird in "CALC n_s" 143 berechnet.

Die Solldrehzahl n_s wird in "X * n_s" 145 mit einem Faktor X multipliziert, und dieses Produkt, sowie die Istdrehzahl n, werden dem Regeldifferenzberechner 151 zugeführt. Mit X = 2 wird z.B. erreicht, dass dem Regeldifferenzberechner 151 der doppelte Wert der gemessenen Solldrehzahl zugeführt wird, während z.B. bei X = 1/2 dem Regeldifferenzberechner 151 ein Wert zugeführt wird, welcher der halben Solldrehzahl entspricht. So wird durch "X * n_s" 145 eine Getriebefunktion erreicht, wobei sehr vorteilhaft ist, dass hierbei auch Faktoren eingestellt werden können wie z.B. X = 1,733.

Fig. 7 zeigt auch - gestrichelt - eine Variante mit dem Block 145', in dem die Ist-Drehzahl n mit einem Faktor Y multipliziert wird. Im Normalfall wird man die Variante 145 bevorzugen, also X * n_s, weil dann alle Motoren eines Systems gleich aufgebaut sein können und man den Getriebefaktor X überall nach denselben Regeln einstellen kann.

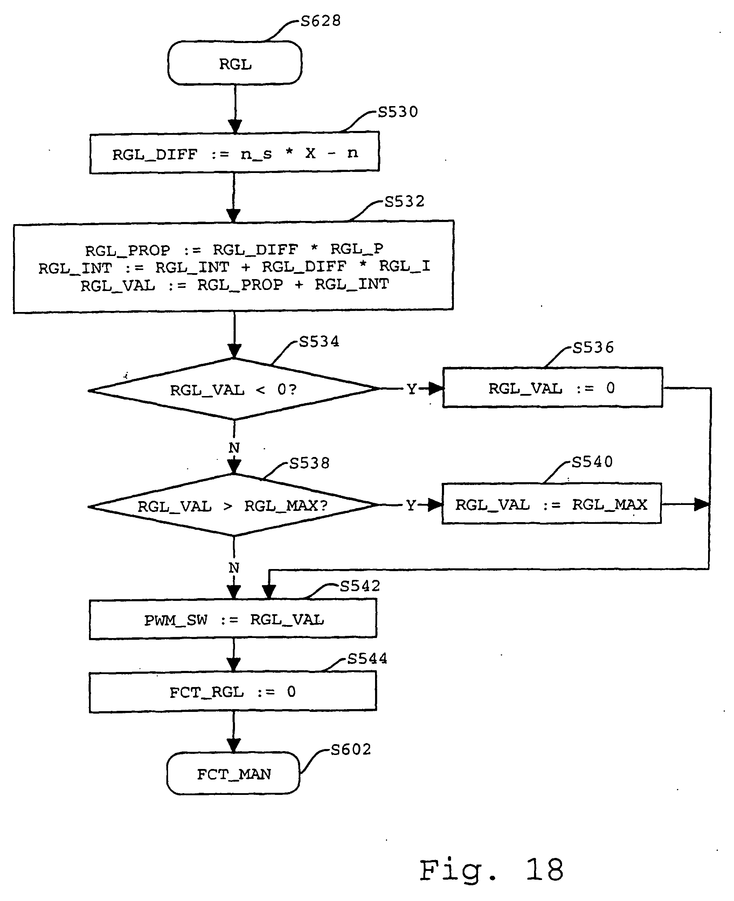

Eine in dem Regeldifferenzberechner 151 berechnete Regeldifferenz RGL_DIFF wird der Reglerfunktion "PI-RGL" 153 zugeführt, welcher hieraus den Reglerwert RGL_VAL berechnet. Wie dies geschieht, wird nachfolgend anhand von Fig. 18 ausführlich beschrieben.

Der Wert RGL_VAL wird der Stellwertausgabe "GEN PWM" 155 zugeführt, welche ihn bei diesem Beispiel in ein PWM-Signal PWM_SW umwandelt, welches am Ausgang C1 des μC 23 in Fig. 3 ausgegeben wird, und welches in Fig. 5 näher beschrieben ist. Mit Hilfe des Signals PWM_SW wird die Drehzahl des Motors M so gesteuert, dass die Regeldifferenz RGL_DIFF zu Null wird.

**Allgemeiner Aufbau des Gesamtprogramms; Funktionsmanager**

Im folgenden wird an einem bevorzugten Ausführungsbeispiel die Architektur des in dem μC 23 ablaufenden Gesamtprogramms beschrieben. Anschließend werden die Unterprogramme im einzelnen beschrieben. Diese sind speziell für einen preiswerten Mikrocontroller ausgelegt. Wird ein teurer Prozessor verwendet, so sind im Rahmen der Erfindung auch andere Lösungen möglich, doch hat die beschriebene Version den Vorzug, dass sie sehr kostengünstig realisiert werden kann, so dass sich gegenüber einem mechanischen Getriebe hohe Einsparungen ergeben können.

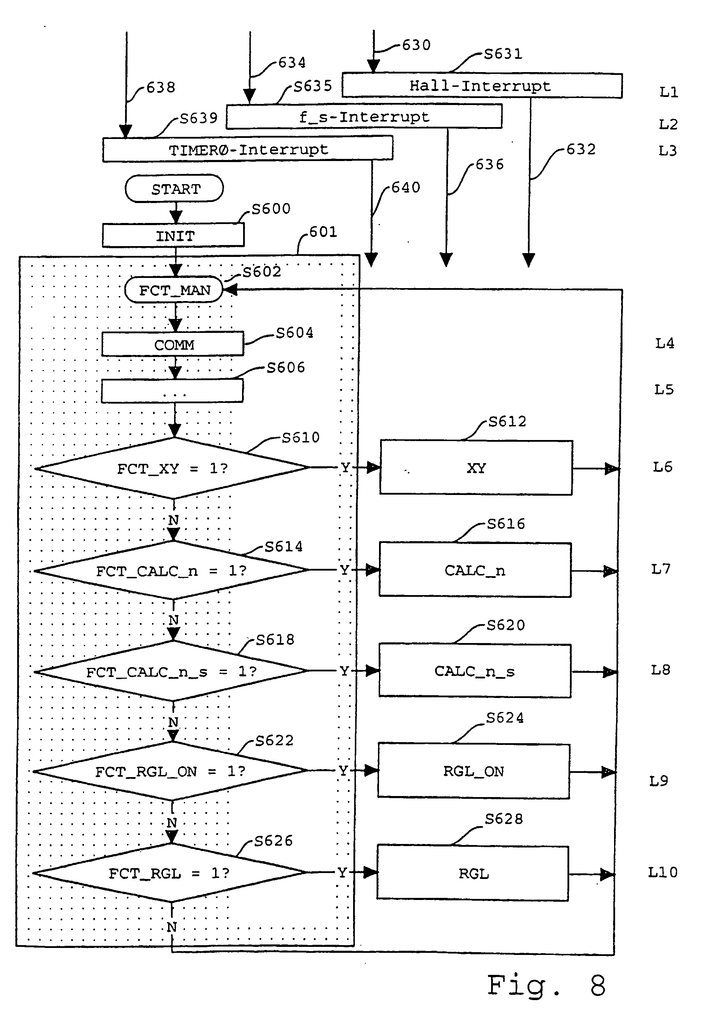

**Fig. 8** zeigt ein Flussdiagramm mit einer bevorzugten Ausführungsform des in dem μC 23 ablaufenden Gesamtprogramms.

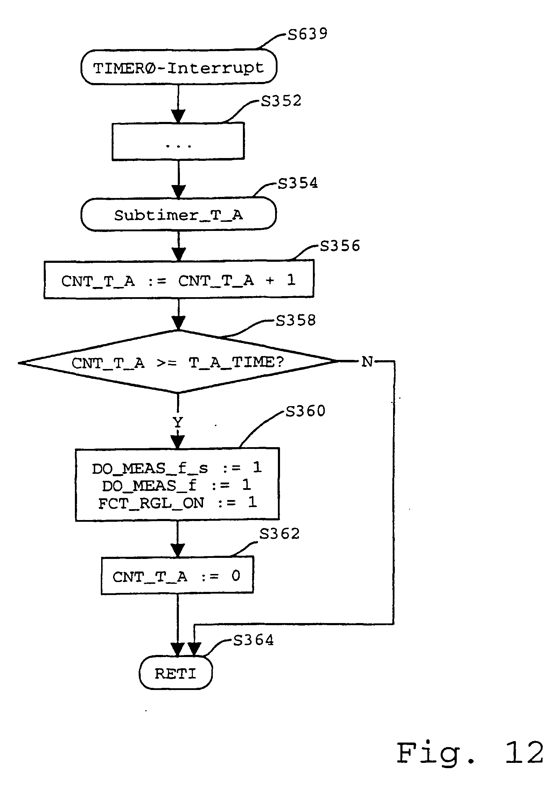

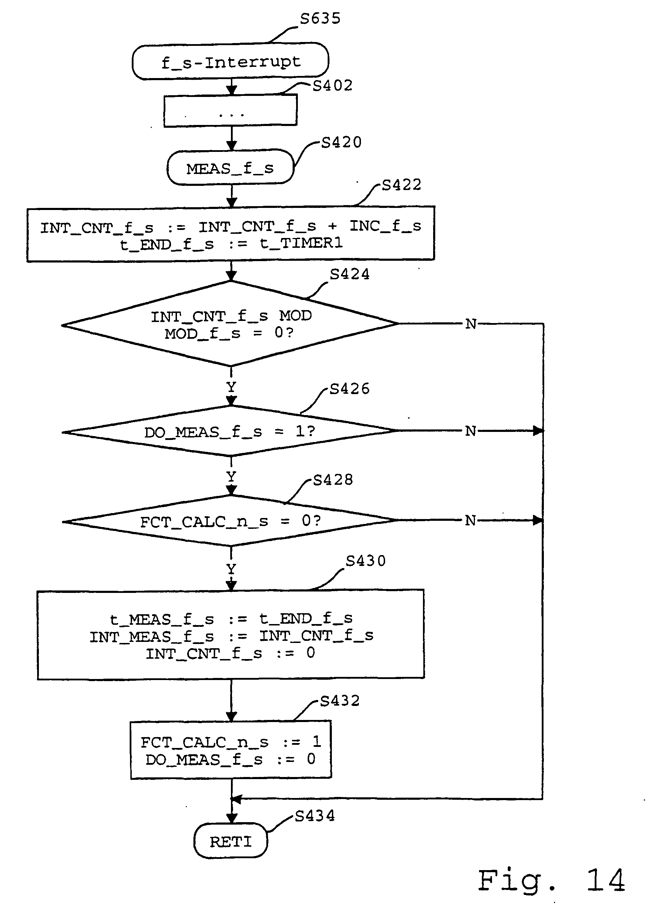

Ganz oben stehen drei Interruptroutinen Hall-Interrupt S631 (Fig. 13), f_s-Interrupt S635 (Fig. 14) und TIMER0-Interrupt S639 (Fig. 12), welche beim Auftreten des jeweiligen Interrupts 630, 634 bzw 638 ausgeführt werden, und welche über 632, 636, 640 auf das Hauptprogramm einwirken. Dabei nimmt die Priorität, also die Reihenfolge, in der die einzelnen Programmteile ausgeführt werden, von oben nach unten ab. Die Prioritäten sind deshalb auf der rechten Seite mit L1 bis L10 bezeichnet, wobei L1 die höchste Priorität hat.

Unter den Interruptroutinen ist das Hauptprogramm dargestellt. Nach dem Einschalten des Motors 32 wird in dem μC 23 ein interner Reset ausgelöst. In S600 erfolgt die Initialisierung des μC 23. Es werden z.B. Parameter aus dem EEPROM 80 ausgelesen und in das RAM des μC 23 übertragen.

Nach der Initialisierung erfolgt ein Sprung in einen sogenannten Funktionsmanager 601, der in S602 beginnt. Der Funktionsmanager 601 regelt den Ablauf der einzelnen Unterprogramme.

Als erstes werden die Funktionen abgearbeitet, die zeitkritisch sind und bei jedem Durchlauf ausgeführt werden müssen. Hierzu zählt z.B. eine Kommunikationsfunktion COMM in S604, welche die Datenübertragung zwischen dem μC 23, dem EEPROM 80 und dem externen Busanschluss B durchführt. S606 steht für evtl. vorhandene weitere zeitkritische Funktionen.

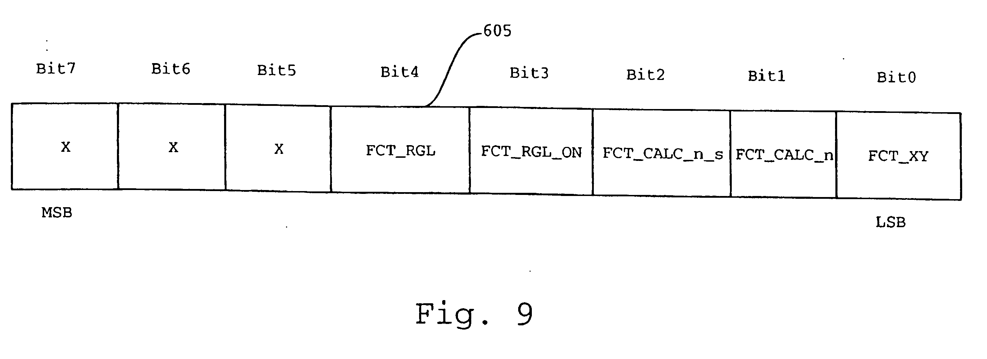

**Fig. 9** zeigt ein beispielhaftes Funktionsregister 605, in dem für jede weitere Funktion aus Fig. 8 ein Bit reserviert ist.

In diesem Ausführungsbeispiel ist das Funktionregister 605 1 Byte groß, und es sind, von dem niederwertigsten Bit (LSB) beginnend, die folgenden Anforderungsbits für die nachfolgend erklärten anforderbaren Funktionen definiert:

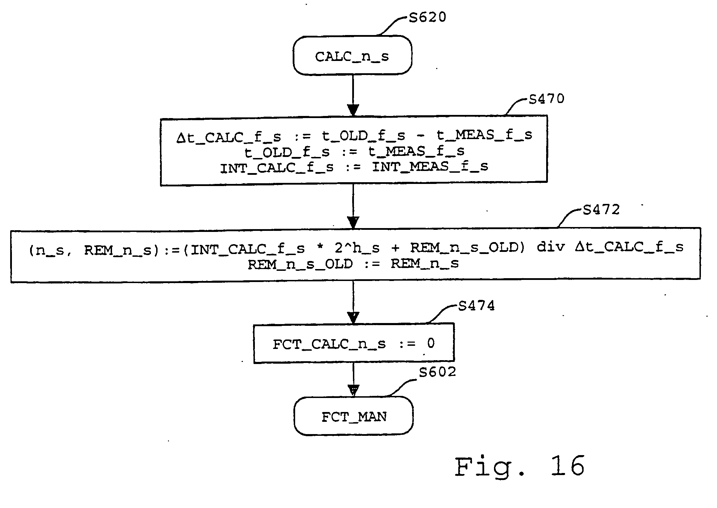

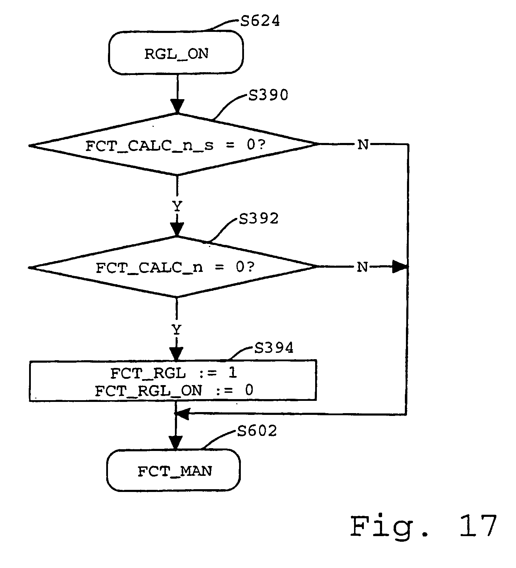

- FCT_XY für eine beliebige Funktion S612
- FCT_CALC_n für eine Istwertberechnungsfunktion CALC_n S616 (Fig. 15)
- FCT_CALC_n_s für eine Sollwertberechnungsfunktion CALC_n_s S620 (Fig. 16)
- FCT_RGL_ON für eine Reglerstart-Überprüfungsfunktion RGL_ON S624 (Fig. 17)

- FCT_RGL für eine Reglerfunktion RGL S628 (Fig. 18).

Die restlichen Bits Bit5 bis Bit7 sind für weitere anforderbare Funktionen reserviert, die gegebenenfalls in den Funktionsmanager 601 integriert werden können.

Die Istwertberechnungsfunktion CALC_n S616 (Fig. 15) dient zur Berechnung der Istdrehzahl n, die Sollwertberechnungsfunktion CALC_n_s S620 (Fig. 16) dient zur Berechnung der Solldrehzahl n_s, die Reglerstart-Überprüfungsfunktion RGL_ON S624 (Fig. 17) überprüft, ob die Bedingungen für den Start der folgenden Funktion RGL S628 (Fig. 18) vorliegen, und fordert diese gegebenenfalls an. Die Reglerfunktion RGL S628 schließlich berechnet den neuen Stellwert RGL_VAL (Fig. 7) und gibt diesen an das Stellglied SG 63 des Motors 32 aus.

Soll eine bestimmte anforderbare Funktion durch eine andere Funktion oder eine Interruptroutine angefordert werden, so wird das Bit der angeforderten Funktion in dem Funktionsregister 605 (Fig. 9) auf 1 gesetzt, z.B. FCT_XY = 1. Wenn der Funktionsmanager 601 bei einem Durchlauf keine andere anforderbare Funktion mit höherer Priorität findet, wird anschließend diese Funktion ausgeführt.

Ist eine angeforderte Funktion abgearbeitet, so setzt sie selbst ihr Anforderungsbit wieder auf 0, also z.B. FCT_XY = 0. Dies ermöglicht es, längere Funktionen, die nicht in einem Durchlauf abgearbeitet werden können, weil sie z.B. eine zu lange Zeit benötigen würden, aufzuteilen und in mehreren Aufrufen abzuarbeiten.

In Fig. 8 wird nach S606 in einer vorbestimmten Reihenfolge, von der wichtigsten anforderbaren Funktion ausgehend, jeweils geprüft, ob deren Anforderungsbit gesetzt ist. Ist dies bei einer Funktion der Fall, so wird diese ausgeführt, und daraufhin wird wieder an den Anfang FCT_MAN S602 des Funktionsmanagers 601 gesprungen. Die Reihenfolge der Überprüfung des Funktionsregisters 605 gibt die Priorisierung der anforderbaren Funktionen vor. Je höher eine solche Funktion in dem Funktionsmanager 601 steht, desto höher ist ihre Priorität.

Anhand eines Beispiels soll die Funktionsweise des Funktionsmanagers FCT_MAN 601 erläutert werden. Springt z.B. das Programm von S610 nach S614, so wird in S614 überprüft, ob das Funktionsregisterbit FCT_CALC_n = 1 ist, ob also die Istwertberechnung CALC_n S616 angefordert wurde, die in Fig. 15 dargestellt ist. Ist dies der Fall, so wird nach S616 gesprungen, und die Drehzahlberechnung wird durchgeführt. Bei Beendigung setzt die Drehzahlberechnung CALC_n S616 das Anforderungsbit FCT_CALC_n wieder auf 0 zurück, vgl. S374 in Fig. 15, und es wird wieder an den Anfang S602 des Funktionsmanagers 601 gesprungen.

War in keiner der Abfragen bis S626 ein Anforderungsbit gesetzt, so wird ohne eine Aktion nach S602 zurückgesprungen, und die Funktionen S604 und S606, die bei jedem Durchlauf des Funktionsmanagers 601 ausgeführt werden, werden erneut abgearbeitet.

Durch den Funktionsmanager erhält man eine optimale Ausnutzung der Ressourcen des μC 23.

**Ist- und Sollwertmessung**

Die Messung der Istfrequenz f und der Sollfrequenz f_s laufen gleich, aber unabhängig voneinander, ab. Man kann auch sagen, sie laufen quasiparallel ab, wobei quasi dafür steht, dass in diesem Ausführungsbeispiel kein echter Parallelprozessor verwendet wird, was im Rahmen der Erfindung ebenfalls möglich sein würde. Im folgenden wird zunächst die Istfrequenzmessung betrachtet. Die Istfrequenz ist ein Maß für die Drehzahl des Motors 32 (Fig. 3).

**Prinzip der Messung**

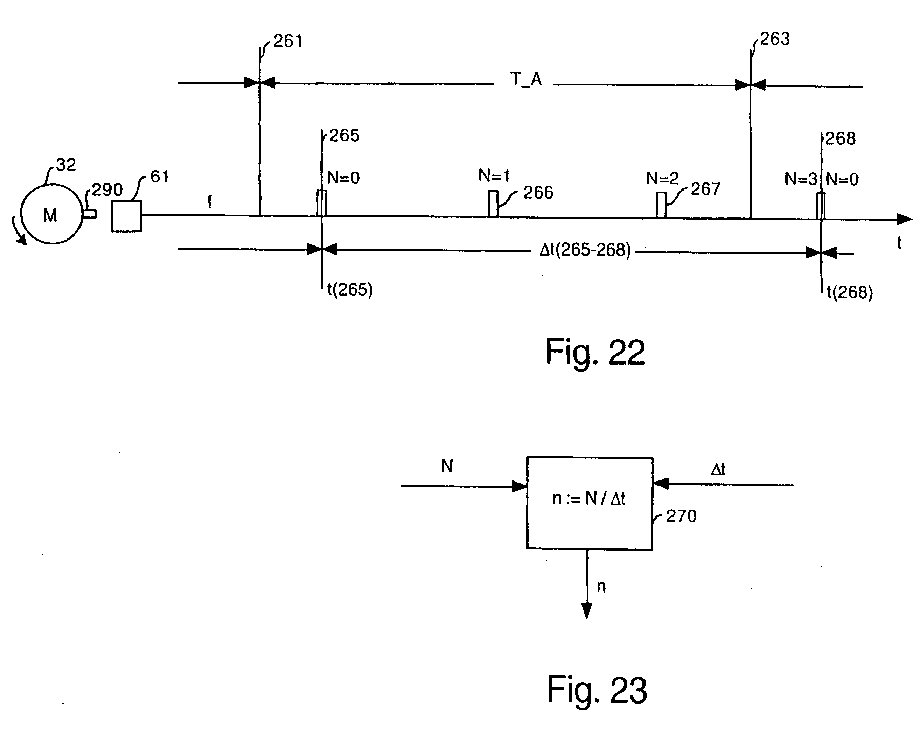

Fig. 22 zeigt einen Rotor 32 mit einer Marke 290, und einen Sensor 61 für die Marke 290, der als Rotorstellungssensor dient. Der Rotor 32 ist gewöhnlich Teil eines Motors M. Sofern es sich um einen elektronisch kommutierten Motor (ECM) handelt, hat dieser gewöhnlich einen Rotorstellungssensor 61, der dann auch für die vorliegende Erfindung verwendet werden kann.

Der Rotorstellungssensor 61 detektiert mit Hilfe der Marke 290 ein Rotorstellungssignal f. Das Rotorstellungssignal f weist Impulse an den Stellen 165, 166, 167 und 168 etc. auf, wobei zwischen jeweils zwei Impulsen eine Umdrehung des Rotors 32 stattgefunden hat. Die Zeitachse ist mit t bezeichnet. Diese Impulse stellen "Ereignisse" (events) bei der Drehung des Rotors 32 dar. Bei Fig. 22 wird pro Rotorumdrehung 1 Ereignis erzeugt, nämlich 1 Impuls.

Mit Hilfe des Rotorstellungssignals f wird wie folgt die Drehzahl des Rotors 32 gemessen. In regelmäßigen Abständen T_A wird ein Startsignal 261, 263 etc. erzeugt, mit dem jeweils eine neue Messung angefordert wird.

Auf das Startsignal an der Stelle 261 folgt der Impuls 265, und auf das Startsignal an der Stelle 263 der Impuls 268. Die Messung geschieht zwischen den Stellen 265 und 268. Gemessen werden die Anzahl N der Impulse des Rotorstellungssignals f, welche nach 265 bis einschließlich 268 auftreten, also hier N = 3, und die für diese Impulse benötigte Zeit $\Delta t(165\text{-}268)$. Hieraus lässt sich die Frequenz des Rotorstellungssignals f und damit die Drehzahl des Rotors 32 bestimmen. An den Stellen 265, 268 der Messung wird jeweils eine alte Messung beendet und eine neue Messung gestartet. Man geht also so vor, dass bei dem auf das Startsignal 261, 263 folgenden Impuls jeweils eine alte Messung beendet und simultan eine neue Messung begonnen wird.

Die Anzahl N der Impulse kann z.B. in einem Zähler gemessen werden, indem in diesem Zähler der Wert N am Ende jeder Messung auf Null zurückgesetzt wird und anschließend der Zählerwert N bei jedem Impuls um 1 erhöht wird.

Die Zeit $\Delta t$ kann z.B. gemessen werden, indem die Differenz zwischen der Zeit des Starts der Messung, z.B. t(265) an der Stelle 265, und der Zeit des Endes der Messung, z.B. t(268) an der Stelle 268, gebildet wird.

Beträgt z.B. t(265) = 17,7 ms und

t(268) = 87,7 ms,

so ist

$\Delta t$(265-268) = 87,7 ms - 17,7 ms = 70 ms.

Durch die Startsignale 261, 263, welche in festen Abständen T_A auftreten, wird ein Messfenster verwirklicht. Die Messungen finden jedoch nicht genau zu dem Zeitpunkt des jeweiligen Startsignals statt, sondern gemessen wird an einer geeigneten, auf das jeweilige Startsignal folgenden Stelle, an der ein Impuls ("Ereignis") des Rotorstellungssignals f auftritt. Bei einer Messung zum Zeitpunkt des jeweiligen Startsignals würden der Anfang und das Ende der Messung in der überwiegenden Anzahl der Fälle an einer Stelle zwischen zwei Impulsen des Rotorstellungssignals stattfinden. Dies würde zu einer Ungenauigkeit der Messung führen. Wartet man jedoch bis zum nächsten Impuls, so werden volle Perioden zwischen den Impulsen gemessen, was zu einer starken Erhöhung der Genauigkeit der Messung führt.

Fig. 23 zeigt schematisch eine Berechnung der Drehzahl n in einer Drehzahlberechnungsfunktion 270. Die Funktion 270 bekommt in zeitlichen Abständen, welche im Mittel die Dauer T_A haben, als Eingabe die Anzahl N der Impulse und die für diese Anzahl N benötigte Zeit $\Delta t$. Hieraus berechnet die Funktion 270 eine Drehzahlinformation n als Quotient aus der Anzahl N und der Zeit $\Delta t$

$$n = N / \Delta t \qquad\qquad (3)$$

## Die Einbeziehung der Modulo-Funktion in die Messung

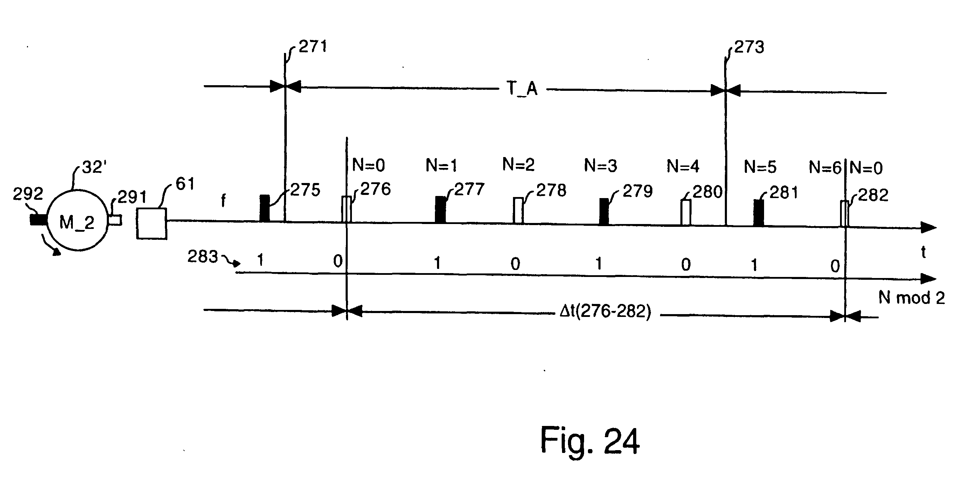

**Fig. 24** zeigt den Rotor 32' (eines Motors M_2) mit zwei Marken 291 und 292 und dem Rotorstellungssensor 61. Die Marken 291 und 292 sind ungefähr 180° mech. versetzt.

Der Rotorstellungssensor 61 erfasst mit Hilfe der Marken 291 und 292 ein Rotorstellungssignal f. Das Rotorstellungssignal f hat aufgrund der Marke 291 Impulse (weiß gefüllt dargestellt) an den Stellen 276, 278, 280 und 282 und aufgrund der Marke 292 Impulse (schwarz gefüllt dargestellt) an den Stellen 275, 277, 279 und 281. Zwischen jeweils zwei "weißen" Impulsen bzw. zwischen jeweils zwei "schwarzen" Impulsen hat sich der Rotor 32' einmal gedreht.

Da die Impulse, welche durch die Marken 291 und 292 generiert werden, nicht unterschieden werden können, kann allgemeiner gesagt werden, dass zwischen jedem Impuls und dem übernächsten Impuls, z.B. zwischen N = 1 und N = 3, eine volle Umdrehung des Rotors 32' stattfindet.

Der Messung der Drehzahl n des Rotors 32' liegen bei Fig. 24 folgende Überlegungen zugrunde:

Die Marken 291, 292 können niemals vollkommen symmetrisch angeordnet werden. Nimmt man an, dass die Marke 291 bei 0° mech. liegt, so müsste die Marke 292 exakt bei 180° mech. liegen. Infolge von mechanischen Fehlern kann sie aber z.B. bei 183° mech. positioniert sein. Hierdurch käme es bei einer Messung, welche an der Stelle 276 (Marke 291) startet und bei der Stelle 281 (Marke 292) endet, zu einem Messfehler, da dann der gemessene Winkelbereich nicht genau ein Vielfaches von 180° mech. ist.

Um diesem Problem zu begegnen, werden in Fig. 24 jeweils nur volle Umdrehungen gemessen, d.h. es wird immer zwischen der gleichen Art von Marke gemessen, und damit wird immer genau ein Vielfaches von 360° mech. gemessen. Die Messung, die bei 276 beginnt, nämlich nach dem Startimpuls 271, endet daher nicht an der Stelle 281, sondern an der Stelle 282, welche die nächste auf das Startsignal 273 folgende Stelle ist, an der, von dem Start der Messung an der Stelle 276 aus betrachtet, wieder eine volle Umdrehung stattgefunden hat.

Diese Bedingung kann mathematisch mit der Funktion MODULO (mod) beschrieben werden, wobei z.B.

$$N \bmod 2 = 0 \qquad\qquad (4)$$

bedeutet, dass bei einer Division des Wertes N durch 2 der Rest 0 übrigbleibt. So ist z.B. 0 mod 2 = 0, 1 mod 2 = 1, 2 mod 2 = 0, 3 mod 2 = 1 usw.. Ebenso ist 0 mod 4 = 0, 1 mod 4 = 1, 2 mod 4 = 2, 3 mod 4 = 3 und 4 mod 4 = 0, etc.

In Fig. 24 ist bei 283 N mod 2 unter den Impulsen 275 bis 282 eingetragen, und eine Messung endet/startet z.B. nur, wenn durch ein Startsignal 271, 273 eine Messung angefordert ist UND zusätzlich die Bedingung N mod 2 = 0 erfüllt ist. Allgemeiner gesagt, sollte bei Fig. 24 der Wert von N mod 2 bei Start und Stopp der Messung derselbe sein.

Hat ein Rotor eine Zahl von A Marken, so lautet die Bedingung der Gleichung (4) allgemein

$$N \bmod A = 0$$

bzw.

$$N \bmod A = \text{const.} \tag{5}$$

Im folgenden wird die Grösse A mit MOD_f bezeichnet, also A = MOD_f, und Gleichung (5) lautet dann

$$N \bmod \text{MOD\_f} = 0$$

bzw.

$$N \bmod \text{MOD\_f} = \text{const} \tag{5a}$$

Die Wahl der ersten Marke kann dabei entweder durch ein besonderes Signal erfolgen, oder es kann das erste gemessene Signal als impuls mit N = 0 gewählt werden. Aus der Erläuterung zu Fig. 13 wird dies noch deutlicher werden.

Die Messung erfolgt also bei Fig. 24 entweder, wie dargestellt, zwischen "weißen" Impulsen, oder, wie in Fig. 15 rechts dargestellt, zwischen "schwarzen" Impulsen. Beim Beispiel der Fig. 24 erfolgt die Messung zwischen den Impulsen 276 und 282. Dort werden N = 6 Impulse gezählt, und der zeitliche Abstand zwischen den Impulsen 276 und 282 wird ermittelt und beträgt $\Delta t(276\text{-}282)$. Aus diesen beiden Werten wird dann gemäss Gleichung (3) eine Drehzahlinformation n errechnet.

Es wird hervorgehoben, dass es in der Realität keine "weißen" oder "schwarzen" Impulse gibt, sondern dass dies ein didaktisches Hilfsmittel zur Erläuterung eines Aspekts der Erfindung ist.

**Was geschieht bei Störimpulsen?**

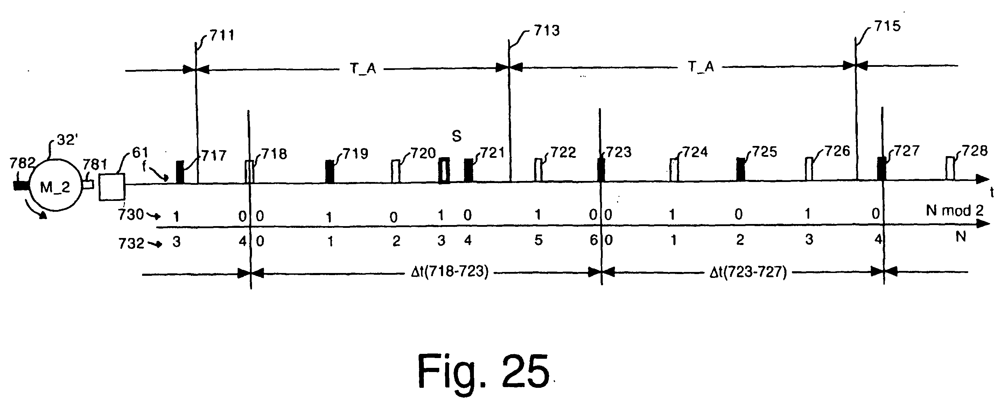

**Fig. 25** zeigt einen Rotor 32' mit zwei Marken 781 und 782 und dem Rotorstellungssensor 61 analog zu Fig. 24. Das Rotorstellungssignal f weist Ereignisse in Form von Impulsen an den Stellen 717, 718, 719, ..., 728 auf. Die Impulse werden abwechselnd von der weissen Marke 781 und der schwarzen Marke 782 erzeugt, wenn diese an dem Rotorstellungssensor 61 vorbeidrehen und sind deshalb - zum besseren Verständnis - weiss und schwarz dargestellt. Zusätzlich tritt ein Störimpuls S zwischen den Impulsen 720 und 721 auf. Weiterhin sind Steuersignale 711, 713 und 715 zur Anforderung einer Messung dargestellt.

Unter den Impulsen ist in der Reihe 732 der Wert des Zählers N für die Anzahl der Impulse und in der Reihe 730 das Ergebnis der Berechnung von N mod 2 angegeben.

Eine Messung endet/beginnt im Normalfall immer dann, wenn durch ein Steuersignal 711, 713 bzw. 715 eine Messung angefordert ist und zudem der Wert von N mod 2 gleich Null ist, wenn sich der Rotor 32' also seit der letzten Messung ein ganzzahliges Vielfaches einer Umdrehung gedreht hat.

Der Störimpuls S bewirkt, dass bei der Messung in dem Zeitraum $\Delta t(718\text{-}723)$ angenommen wird, dass der Rotor 32' zwischen den Impulsen 720 und 721 eine ganze Umdrehung zurückgelegt hat, obwohl er erst eine halbe Umdrehung zurückgelegt hat. Hierdurch wird nach dem Steuersignal 713 anstatt bei dem "weissen" Signal 722 bei dem "schwarzen" Signal 723 gemessen, da N mod 2 nach dem Störimpuls S nicht mehr bei den "weissen" Impulsen den Wert Null hat, sondern bei den "schwarzen" Impulsen.

Schon in dem folgenden Zeitraum $\Delta t(723\text{-}727)$ funktioniert die Messung jedoch wieder richtig, da jetzt jeweils bei "schwarzen" Impulsen gemessen wird. Es findet also durch den Störimpuls S eine Verschiebung derjenigen Stellung des Rotors 32' statt, an der gemessen wird. Dasselbe würde gelten, wenn ein Impuls fehlen würde. Das Messverfahren arbeitet also nach einem Fehlersignal S richtig weiter und misst weiterhin ein Vielfaches von einer ganzen Umdrehung. Dies stellt einen wichtigen Vorteil dieser Ausführungsform dar.

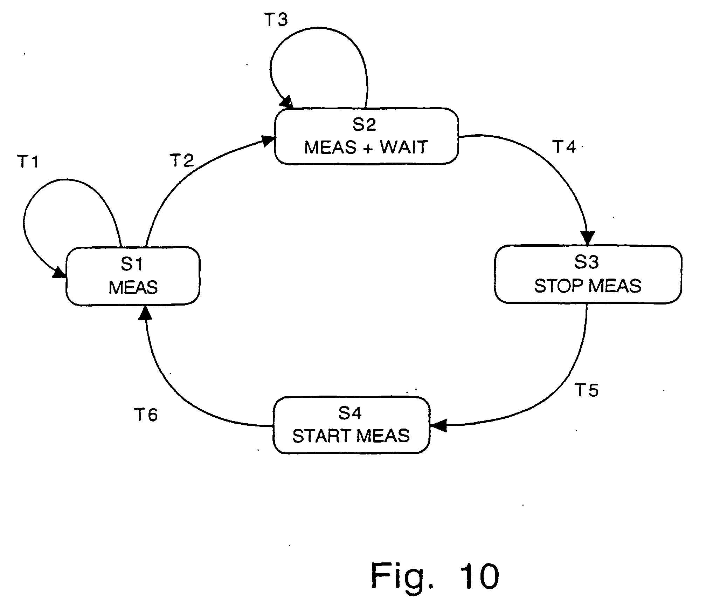

**Fig. 10** zeigt ein Zustandsdiagramm für die Messung der Istfrequenz. Das Zustandsdiagramm weist vier Zustände S1, S2, S3 und S4 sowie sechs Übergänge T1, T2, ..., T6 auf.

Zu jedem Übergang gehört ein Ereignis und eine Aktion.

Die folgende Tabelle 1 zeigt für jeden Übergang das zugehörige Ereignis und die zugehörige Aktion.

| Übergang | Ereignis | Aktion |
|---|---|---|
| T1 | Interrupt durch Flanke des Signals f | TIMER1 lesen und speichern, INT_CNT_f erhöhen |
| T2 | Interrupt durch TIMER0 nach Zeit T_A | Istwert-, Sollwertberechnung und Regler freigeben |
| T3 | Interrupt durch Flanke des Signals f | TIMER1 lesen und speichern, INT_CNT_f erhöhen |
| T4 | INT_CNT_f mod MOD_f = 0 | t_MEAS_f, INT_MEAS_f berechnen, CALC n starten |
| T5 | instantan | keine |
| T6 | instantan | Vorbereitung für neue Messung |

**Fig. 11** zeigt ein zugehöriges Diagramm mit einem Beispielablauf für die Messung der Sollfrequenz f_s und der Istfrequenz f.

**Fig. 11A** zeigt Interrupts 161, 163, 165 eines Timers TIMER0 (im µC 23), welche jeweils nach einer Zeit T_A, z.B. T_A = 25 ms, ausgelöst werden.

**Fig. 11B** zeigt die Sollfrequenz f_s, welche dem µC 32 z.B. von dem Frequenzgenerator 20 (Fig. 1) zugeführt wird. An den Stellen 167, 169 und 171 werden jeweils die beiden Variablen INT_MEAS_f_s für die Anzahl der Flanken seit der letzten Messung und t_MEAS_f_s mit dem mit Hilfe des Timers TIMER1 bestimmten Zeitpunkt der momentanen Messung an die Sollwertberechnung weitergegeben. Die in Klammern angegebenen Zahlen bezeichnen den jeweiligen Zeitpunkt bzw. Zeitbereich, für den der jeweilige Wert gilt. So wird z.B. zum Zeitpunkt 169 der Wert INT_MEAS_f_s (167-169), der die Anzahl der Flanken in dem Bereich von 167 bis 169 enthält, und der Wert t_MEAS_f_s(169), der den Zeitpunkt der Messung bei 169 enthält, an die Sollwertberechnung CALC_n_s S620 (Fig. 8) weitergegeben.

**Fig. 11C** zeigt analog zu Fig. 11B die Istfrequenz f, welche von dem Rotorstellungssensor 61 detektiert wird. An den Stellen 175, 177 und 179 werden INT_MEAS_f und t_MEAS_f bestimmt.

Anhand von Fig. 10, der Tabelle 1 und Fig. 11 wird nun die Frequenzmessung erläutert. Die Messungen der Sollfrequenz f_s und der Istfrequenz f laufen nach demselben Schema ab. Daher wird das Messprinzip zuerst anhand der Messung der Istfrequenz f erläutert.

**Messung der Istfrequenz f**

Zu dem in Fig. 11 beliebig gewählten Zeitpunkt t = 0 befindet sich die Istwertmessung im Zustand S1.

Bei jeder Flanke 110 (Fig. 4B) von f wird ein Hall-Interrupt 630 (Fig. 8) ausgelöst. Dieser bewirkt folgendes:

- Die Routine Hall-Interrupt S631 (Fig. 13) wird durch den Hall-Interrupt 630 ausgelöst,
- in der Routine Hall-Interrupt S631 wird der Zähler INT_CNT_f für die Anzahl der Flanken um einen Wert INC_f, z.B. INC_f = 1, erhöht (S322 in Fig. 13),
- in der Routine Hall-Interrupt S631 wird der augenblickliche Wert des Ringzählers TIMER1 gespeichert (S322 in Fig. 13).

Auf dem Zustandsdiagramm (Fig. 10) ist dies dargestellt als Übergang T1 von Zustand S1 zu S1. Das Ereignis ist hier ein durch eine Flanke 110 ausgelöster Hall-Interrupt 630, und die Aktion besteht in der Zählung der Flanke 110 im Flankenzähler INT_CNT_f, und der Speicherung des augenblicklichen Wertes des Ringzählers TIMER1.

Ein anderes Ereignis löst den Übergang T2 von Zustand S1 nach Zustand S2 aus. Das Ereignis ist ein Auftreten eines durch den Timer TIMER0 ausgelösten TIMER0-Interrupts. TIMER0 löst in vorgegebenen Abständen T_A (Fig. 11A) einen TIMER0-Interrupt 638 aus, z.B. an den Stellen 161, 163, 165. In der zugehörigen Interruptroutine TIMER0-Interrupt S639 (Fig. 8 und 12) werden die Istwertberechnung, Sollwertberechnung und der Regler freigegeben. TIMER0 definiert aufeinanderfolgende Fenster mit der Breite T_A.

Im folgenden soll die eigentliche Messung von INT_MEAS_f, t_MEAS_f stattfinden. Wie an den Stellen 175, 177 und 179 zu sehen ist, findet die jeweilige Messung nicht genau zu den Zeitpunkten 161, 163 und 165 der Anforderung statt, sondern zu einem geeigneten Zeitpunkt, welcher gewöhnlich zeitlich etwas später liegt als der Zeitpunkt der Anforderung.

Im Zustand S2 werden weiterhin die Flanken 110 des Signals f erfasst, und es findet bei jeder Flanke 110 ein Übergang T3 von S2 nach S2 analog zu T1 statt, in dem der augenblickliche Wert des Ringzählers TIMER1 ausgelesen und gespeichert und der Flankenzähler tNT_CNT_f erhöht wird.

Zu der endgültigen Messung der Werte INT_MEAS_f und t_MEAS_f muss eine weitere Bedingung erfüllt sein. Die Pole eines permanentmagnetischen, z.B. vierpoligen Rotors haben meistens nicht genau eine Erstreckung (Polbreite) von 90° mech., sondern weichen leicht hiervon ab. Die Winkelsumme aller Polwinkel ergibt jedoch immer 360° mech. Daher ist es vorteilhaft, z.B. bei einer Messung mit Hallsensoren nur jede volle Umdrehung, also bei einem vierpoligen Rotor jede vierte Flanke, zu messen, da man so sicher sein kann, dass immer genau an derselben Stelle des Rotors 32 gemessen wird. Für eine genauere Erklärung wird auf die Beschreibung zu Fig. 24 verwiesen.

Die Anzahl der Flanken 110 des Signals f wird in der Variablen INT_CNT_f gezählt, und die Bedingung, dass bei einem vierpoligen Rotor immer ein Vielfaches von ganzen Umdrehungen gemessen wird, kann gemäß der Beschreibung zu Fig. 24 und Gleichung (5) mit

$$INT\_CNT\_f \bmod 4 = 0 \qquad\qquad (5')$$

erreicht werden, oder alternativ mit

$$INT\_CNT\_f \bmod 8 = 0,$$

wobei im letzteren Fall immer frühestens nach zwei vollen Umdrehungen, oder einem Vielfachen hiervon, gemessen wird. Bei INT_CNT_f mod 12 = 0 würde frühestens nach drei vollen Umdrehungen gemessen, etc. Hierdurch würde jedoch die Dynamik eines Reglers verschlechtert.

Bei einem sechspoligen Rotor würde man dementsprechend z.B. mit INT_CNT_f mod 6 = 0 arbeiten, oder mit INT_CNT_f mod 12 = 0.

Falls also die Anzahl der Flanken ein Vielfaches von MOD_f, hier MOD_f = 4 ist, findet in Fig. 10 ein Übergang T4 von S2 nach S3 statt, die Anzahl der erfassten Flanken seit der letzten Messung, welche in INT_CNT_f gespeichert ist, wird in INT_MEAS_f gespeichert (S330 in Fig. 13), und der Zeitpunkt der aktuellen Messung wird in t_MEAS_f gespeichert. Die Werte INT_MEAS_f und t_MEAS_f werden daraufhin der Istdrehzahl-Berechung CALC_n S616 übergeben, die in Fig. 15 dargestellt ist.

Ist z.B. in Fig. 11 nach dem TIMER0-Interrupt 163 bei der Istfrequenz f zum Zeitpunkt 177 ein Vielfaches von MOD_f = 4 Flanken erfasst worden, also hier z.B. 8 Flanken (8 mod 4 = 0), so wird die Anzahl der Flanken seit der letzten Messung zum Zeitpunkt 177 in INT_MEAS_f(175-177) und der Zeitpunkt 177 der aktuellen Messung in t_MEAS_f(177) gespeichert.

Aus dem aktuellen Wert t_MEAS_f(177) und dem gespeicherten Wert t_MEAS_f(175) der letzten Messung kann die für die in der Variablen INT_MEAS_f(175-177) gezählten Flanken benötigte Zeit Δt_MEAS_f(175-177) bestimmt werden.

Eine alternative Möglichkeit, die Zeit Δt_MEAS_f zu bestimmen, liegt darin, die Zeit jeweils am Anfang einer Messung auf Null zurückzusetzen. Dies kann z.B. durch Setzen des Timers TIMER1 auf Null erfolgen. Am Ende der Messung entspricht die Zeit dann dem Wert Δt_MEAS_f. Hierdurch liegt an den Stellen 175, 177 und 179 direkt INT_MEAS_f und Δt_MEAS_f vor. Ein Nachteil des Zurücksetzens von TIMER1 liegt darin, dass er dann schlecht gleichzeitig für andere Messungen verwendet werden kann, so dass man ggf. weitere Zähler benötigt, was aber im Rahmen der vorliegenden Erfindung nicht ausgeschlossen ist.

Von Zustand S3, in welchem die letzte Messung abgeschlossen ist, führt ein instantaner Übergang T5 zu dem Zustand S4, in welchem eine neue Messung beginnt.

Vom Zustand S4 führt ein instantaner Übergang T6 zu dem Zustand S1, und die Frequenzmessung ist wieder im Ausgangszustand S1. Während T6 wird die nächste Messung vorbereitet. Es wird z.B. der Zähler INT_CNT_f (für die Zahl der Flanken 110) wieder auf Null zurückgesetzt.

**Messung der Sollfrequenz f_s**

Durch die TIMER0-Interrupts 638 an den Stellen 161, 163 und 165 werden sowohl die Istfrequenzmessung als auch die Sollfrequenzmessung angefordert. Die Messung der Sollfrequenz f_s läuft übereinstimmend mit der Messung der Istfrequenz ab, was auch aus den folgenden Flussdiagrammen ersichtlich ist.

Die Variablen der Sollwerterfassung sind gleich benannt wie die der Istwerterfassung, sie haben jedoch eine Endung "_s" hinzugefügt, z.B. INT_MEAS_f_s anstelle von INT_MEAS_f.

Auch bei einer Sollfrequenzvorgabe f_s kann es sinnvoll sein, ein Vielfaches einer festen Flankenzahl zu messen. So kann es z.B. innerhalb einer Periode der Sollfrequenz f_s zu Abweichungen kommen. Daher kann z.B. eine Messung von jeweils mindestens zwei Flanken vorteilhaft sein. Der Flankenzähler INT_CNT_f_s muss dann mit INT_CNT_f_s mod 2 = 0 überprüft werden.

Die Messung gemäß Fig. 10 und 11 hat mehrere Vorteile.

Bei interruptbasierten Messungen kann man zur Bestimmung der Drehzahl entweder bei jedem Interrupt oder nach einer festen Anzahl von Interrupts die Zeit zum vorherigen Interrupt messen und daraus die Drehzahl berechnen.

Hierdurch kommen bei immer höher werdender Drehzahl immer häufiger neue Messwerte, welche verarbeitet werden müssen. Bei sehr hohen Drehzahlen würde dies zu einer Überlastung des µC 23 und zur Nichtberücksichtigung von einzelnen Messwerten führen.

Bei dem vorliegenden Messverfahren wird in vorgegebenen Abständen T_A jeweils eine neue Messung eingeleitet. Der µC 23 wird dadurch bei allen Drehzahlen bzw. Frequenzen gleich belastet.

Weiterhin weist das vorliegende Verfahren den Vorteil auf, dass bei der Messung des Signals f bzw. f_s mindestens bis zum nächsten Interrupt gemessen wird. So wird nicht zu irgendeinem Zeitpunkt, der z.B. in der Mitte zwischen zwei Flanken liegt, gemessen, sondern es wird immer von Flanke zu Flanke gemessen, was die Genauigkeit der Messung erheblich erhöht.

Eine weitere Erhöhung der Genauigkeit ergibt die Messung von jeweils einem Vielfachen von MOD_f bzw. MOD_f_s Flanken, da so z.B. Messfehler durch Magnetisierungsfehler bei einem permanentmagnetischen Rotor bzw. durch Symmetriefehler der Sollfrequenzvorgabe vermieden werden. Dies bedeutet z.B. bei einem vierpoligen Motor, dass eine Messung frühestens bei der vierten, 8. oder 12. etc. Flanke erfolgt, nämlich immer dann, wenn X mod 4 = 0 ist (bei einem vierpoligen Rotor werden pro Umdrehung vier Flanken 110 erzeugt).

Ein weiterer großer Vorteil liegt darin, dass jeweils nach Ablauf einer Zeit T_A sowohl die Istwert- als auch die Sollwertmessung gestartet wird, da so die Resultate beider Messungen der Reglerfunktion RGL praktisch gleichzeitig zur Verfügung stehen. Bei einer Messung nach jeder Flanke würde das Signal mit der höheren Frequenz häufiger gemessen werden, was für die Weiterverarbeitung weniger günstig wäre.

Außerordentlich vorteilhaft ist die Verwendung desselben Timers (TIMER 1) für die Messung von f bzw. f_s, da eine Ungenauigkeit des Timers keine Ungenauigkeit bei dem Zeitverhältnis der Messung von f bzw. f_s bewirkt. Die Frequenzen f und f_s werden so mit der gleichen Zeitschiene gemessen. Eine solche Messung ermöglicht in sehr vorteilhafter Weise eine frequenzgesteuerte Drehzahlregelung mit Getriebefunktion. Eine derartige Messung mit demselben Timer wird nachfolgend an einem Beispiel beschrieben.

TIMER1 wird bevorzugt als Ringzähler ausgebildet, der ständig läuft.

**Flussdiagramme zur Messung von f und f_s**

Die Fig. 12 bis 14 zeigen Flussdiagramme zu einem Programm für die in Fig. 10 und 11 beschriebene Messung.

**Fig. 12** zeigt die Routine **TIMER0-Interrupt** S639 (Fig. 8), welche jeweils nach der Zeit T_A (Fig. 11) die Istwertmessung "MEAS f" 147 (Fig. 7), die Sollwertmessung "MEAS f_s" 141 (Fig. 7) und den von RGL_ON S624 und RGL S628 (jeweils Fig. 8) gebildeten digitalen Drehzahlregler n-CTRL 35 (Fig. 1 und 7) anfordert.

Es werden folgende Variablen benutzt

CNT_T_A          Interner Zähler für die Zeit T_A
T_A_TIME         Grenzwert für neue Messung
DO_MEAS_f        Flag zum Aufrufen der Istwertmessung
DO_MEAS_f_s      Flag zum Aufrufen der Sollwertmessung
FCT_RGL_ON       Funktionsregisterbit der Funktion RGL_ON S624 (vgl. Fig. 9).

Bei jedem Auftreten eines TIMER0-Interrupts 638 (Fig. 8) wird die TIMER0-Interruptroutine S639 ausgeführt, die in Fig. 12 dargestellt ist.

In S352 können ggf. zusätzliche, hier nicht ausgeführte Schritte durchlaufen werden, falls durch den TIMER0 auch andere Programmteile gesteuert werden sollen.

In S354 beginnt ein Subtimer Subtimer_T_A. Subtimer bedeutet, dass durch die im folgenden erläuterten Schritte S356, S358 und S362 die eigentliche Aktion in S360 erst nach einer bestimmten Anzahl von TIMER0-Interrupts ausgelöst wird. Dies hat den Vorteil, dass der Timer TIMER0 auch für andere Zwecke verwendet werden kann, welche häufiger aufgerufen werden müssen.

In S356 wird der interne Zähler CNT_T_A um 1 erhöht.

In S358 wird überprüft, ob der Zähler CNT_T_A größer oder gleich dem - oben definierten - Wert T_A_TIME ist.

Falls nein, so wird sofort an das Ende S364 gesprungen, und die TIMER0-Interruptroutine wird mit dem Befehl "RETI" verlassen.

Falls jedoch in S358 der Zähler CNT_T_A den Wert T_A_TIME erreicht hat, so werden in S360 DO_MEAS_f_s, DO_MEAS_f und FCT_RGL_ON auf 1 gesetzt.

Mit DO_MEAS_f_s = 1 wird der Interruptroutine f_s-Interrupt S635 (Fig. 14) mitgeteilt, dass eine Messung der Sollfrequenz f_s gestartet werden soll. Mit DO_MEAS_f = 1 wird der Interruptroutine Hall-Interrupt S631 (Fig. 13) mitgeteilt, dass eine Messung der Istfrequenz f gestartet werden soll. Mit FCT_RGL = 1 wird die Startfunktion RGL_ON S624 (Fig. 17) gestartet, welche bestimmt, wann die Reglerfunktion RGL S628 (Fig. 18) gestartet wird.

Ein Beispiel: Wenn der TIMER0-Interrupt alle 10 µs ausgelöst wird und der Wert T_A_TIME = 2500 ist, findet der Aufruf in S360 alle 25 ms statt.

Die Zeit T_A muss an den jeweiligen Motor angepasst werden. Produziert der Rotorstellungssensor 61 z.B. viele Ereignisse pro Umdrehung des Rotors 32, und dreht der Rotor 32 schnell, so kann T_A kürzer gewählt werden. Dreht der Rotor 32 jedoch langsam, so muss T_A länger, z.B. T_A = 250 ms, gewählt werden. Die Frequenz f_s muss in der gleichen Weise berücksichtigt werden.

In S362 wird der Zähler CNT_T_A wieder auf Null zurückgesetzt, um den Subtimer Subtimer_T_A neu zu starten.

In Fig. 11 findet der Aufruf von S360 an den Stellen 161, 163 und 165 statt.

**Fig. 13** zeigt ein Ausführungsbeispiel für die Interruptroutine **Hall-Interrupt** S631, welche bei jedem durch das Auftreten einer Flanke 110 (Fig. 4B) des Signals f ausgelösten Interrupt ausgeführt wird. Dieser Interrupt wird so bezeichnet, weil er gewöhnlich durch das Signal eines Hallgenerators 61 ausgelöst wird. Fig. 29 zeigt ein Beispiel hierfür. Selbstverständlich könnte er ebenso durch das Signal eines optischen oder mechanischen Sensors ausgelöst werden, und man könnte ihn auch als sensorgesteuerten Interrupt bezeichnen.

Die Routine Hall-Interrupt S631 sorgt bei diesem Beispiel in den Schritten S304 bis S314 für die Kommutierung eines elektronisch kommutierten Motors 32, und in den Schritten S320 bis S332 für die Messung der Istfrequenz f.

Es werden folgende Variablen benutzt

INT_CNT_f       Interruptzähler für die Erfassung der Flanken des Signals f
INC_f            Inkrementwert
t_END_f          Zeitpunkt des letzten Interrupts der Erfassung
MOD_f            Anzahl der Interrupts für mod-Berechnung, vgl. Gleichung (5a)
t_MEAS_f         Gemessene Zeit des letzten Interrupts
INT_MEAS_f       Zahl der gemessenen Interrupts seit der letzten Messung
DO_MEAS_f        Flag zum Aufrufen der Istwertmessung
FCT_CALC_n       Funktionsregisterbit der Funktion CALC_n S616 (Fig. 8 und 9)

In S302 können beliebige Schritte ausgeführt werden.

Die Routine Hall-Interrupt S631 sorgt bei einem elektronisch kommutierten Motor (ein solcher ist in Fig. 29 schematisch dargestellt) in COMMUT S304 für die elektronische Kommutierung. Diese entfällt bei einem Kollektormotor, wie er in Fig. 6 dargestellt ist.

In S306 wird mit HALL = 1 überprüft, ob das Signal f (Fig. 4B) auf HIGH ist. Falls ja, so wird in S308 der Anschluss B5 des µC 23 (Fig. 3) so eingestellt, dass er bei der nächsten Flanke von HIGH nach LOW einen Interrupt auslöst. (Alternativ ist auch ein sogenannter Interrupt on Change möglich, d.h. bei jeder Flanke des Signals HALL am Port B5, egal in welcher Richtung, findet ein Interrupt statt.) In S310 findet schließlich die Kommutierung des Motors M 32 statt, indem OUT1 auf 1 und OUT2 auf 0 gesetzt wird. War in S306 HALL = 0, so wird in S312 der Anschluss B5 auf eine umgekehrte Flanke eingestellt, und in S314 wird OUT1 auf 0 und OUT2 auf 1 gesetzt. Die Kommutierung mit den beiden Signalen OUT1 und OUT2 wurde bereits bei Fig. 29 ausführlich beschrieben.

In MEAS_f S320 beginnt die Erfassung und Messung des Signals f. In S322 wird der Interruptzähler INT_CNT_f , welcher z.B. 1 Byte groß ist, um den Wert INC_f, z.B. INC_f = 1, erhöht, und der Wert t_TIMER1 von TIMER1 wird in t_END_f gespeichert. Damit sind sowohl die Anzahl der Interrupts als auch die momentane Zeit erfasst.

In S324 wird mit INT_CNT_f mod MOD_f = 0 überprüft, ob der Wert im Interruptzähler INT_CNT_f ein Vielfaches von MOD_f ist. Bei MOD_f = 4 ist z.B. INT_CNT_f = 20 ein Vielfaches von MOD_f, also 20 mod 4 = 0. Falls INT_CNT_f nicht ein Vielfaches von MOD_f ist, so wird an das Ende S334 der Interruptroutine gesprungen. Falls INT_CNT_f ein Vielfaches von MOD_f ist, so wird in S326 überprüft, ob DO_MEAS_f = 1 ist, ob also in dem Schritt S360 der Interruptroutine TIMER0-Interrupt S639 (Fig. 12) eine Messung der Istfrequenz f angefordert wurde. Falls nein, soll noch nicht gemessen werden, und es wird an das Ende S334 gesprungen. Falls ja, so wird in S328 anhand des Funktionsregisterbits FCT_CALC_n überprüft, ob die letzte Drehzahlberechnung bereits abgeschlossen ist. Falls FCT_CALC_n = 1 ist, so wird an das Ende S334 gesprungen. Dies verhindert, dass Messungen verlorengehen, wenn die Drehzahlberechnung "CALC_n" S616 zu viel Zeit benötigt. Dieser Sonderfall tritt jedoch im normalen Betrieb nicht auf.

In S330 werden die Variablen t_MEAS_f und INT_MEAS_f gesetzt, welche der Drehzahlberechnung CALC_n S616 (Fig. 15) übergeben werden.

Hierzu wird t_MEAS_f auf den letzten erfassten Timerwert t_END_f des Ringzählers TIMER1 gesetzt, INT_MEAS_f wird auf den Wert des Interruptzählers INT_CNT_f gesetzt, und INT_CNT_f wird auf Null zurückgesetzt.

In S332 wird die Drehzahlberechnung CALC_n S616 (Fig. 15) durch Setzen von FCT_CALC_n auf 1 angefordert, und die Messanforderung wird durch Zurücksetzen von DO_MEAS_f auf Null zurückgesetzt, da die Messung abgeschlossen ist.

Die Routinen TIMER0-Interrupt S639 (Fig. 12) und HALL-Interrupt S631 (Fig. 13) bilden somit zusammen eine Messung der Istfrequenz f gemäß dem Zustandsdiagramm der Fig. 10.

Falls der µC 23 die Operation mod nicht beherrscht, bestehen andere Möglichkeiten.

Bei vielen µCs ergibt eine ganzzahlige Division mit div als Ergebnis sowohl den ganzzahligen Quotienten als auch den nicht-negativen Rest. So ergibt z.B. 7 div 4 als Ergebnis den Quotienten 1 und den Rest 3. Bei solchen µCs kann die Operation div zur Berechnung des Restes verwendet werden.

Eine weitere Möglichkeit der Berechnung von X mod MOD_f besteht z.B. in der Verwendung einer weiteren Variablen MOD_CNT, welche bei jeder Erhöhung der Variablen X ebenfalls erhöht wird, und welche bei Erreichen von MOD_f jeweils auf Null zurückgesetzt wird. Die Variable MOD_CNT enthält dann das Ergebnis von X mod MOD_f.

**Fig. 14** zeigt ein Beispiel für die Interruptroutine **f_s-Interrupt** S635.

Diese ist bis auf das Fehlen des Kommutierungsteils (Schritte S304 bis S314 der Fig. 13) wie die Interruptroutine HALL-Interrupt S631 (Fig. 13) aufgebaut, und sie wird deshalb nicht nochmals beschrieben. Die Bezugszeichen der Schritte sind um 100 erhöht, so dass z.B. der Schritt S332 aus Fig. 13 dem Schritt S432 aus Fig. 14 entspricht.

Es werden folgende Variablen benutzt

| | |
|---|---|
| INT_CNT_f_s | Interruptzähler für die Erfassung der Flanken der Sollfrequenz |
| INC_f_s | Inkrementwert |
| t_END_f_s | Zeitpunkt des letzten Interrupts der Erfassung |
| MOD_f_s | Anzahl der Interrupts für mod-Berechnung |
| t_MEAS_f_s | Gemessene Zeit des letzten Interrupts |
| INT_MEAS_f_s | Anzahl der Interrupts seit der letzten Messung |
| DO_MEAS_f_s | Flag zum Aufrufen der Sollwertmessung |
| FCT_CALC_n_s | Funktionsregisterbit für die Funktion CALC_n_s S620 |

**Fig. 15** zeigt die Routine **CALC_n** S616, welche nach der Messung des Timerwerts t_MEAS_f und der Anzahl der Flanken 110 (Fig. 4) des Signals f in INT_MEAS_f durch die Routine Hall-Interrupt (S332 in Fig. 13) angefordert wird.

Es werden folgende Variablen benutzt

| | |
|---|---|
| $\Delta$t_CALC_f | Zeitdifferenz zur letzten Messung |
| t_OLD_f | Zeitpunkt der letzten Messung |
| t_MEAS_f | Zeitpunkt der momentanen Messung |
| INT_CALC_f | Anzahl der Interrupts seit der letzten Messung für die Berechnung |
| INT_MEAS_f | Übergebene Anzahl der Interrupts seit der letzten Messung |
| n | Drehzahl des Motors M |
| REM_n | Rest der ganzzahligen Division |
| h | Hochzahl für Parametrierung von INT_CALC_f |
| REM_n_OLD | Rest der ganzzahligen Division der letzten Berechnung |

In S370 wird die Differenz zwischen dem Timerwert t_OLD_f der letzten Messung und dem aktuellen Timerwert t_MEAS_f berechnet und in der Variablen $\Delta$t_CALC_f gespeichert, welche dem Wert $\Delta$t_MEAS_f aus Fig. 11 entspricht. Die Differenz wird bei einem Ringzähler üblicherweise mit Hilfe des Zweierkomplements gebildet. Der aktuelle Timerwert t_MEAS_f wird daraufhin für die nächste Messung in t_OLD_f gespeichert, und die gemessene Anzahl der Interrupts INT_MEAS_f wird in INT_CALC_f gespeichert.

In S372 geschieht die Berechnung der Drehzahl n. Diese ist proportional zu dem Quotienten aus der Zahl der Interrupts INT_CALC_f, einem Maß für die Anzahl der Umdrehungen, und der hierfür benötigten Zeit $\Delta$t_CALC_f. Es gilt

$$n = const * INT\_CALC\_f / \Delta t\_CALC\_f \tag{6}$$

const ist eine Proportionalitätskonstante.

Für die Berechnung der Drehzahl n wird eine ganzzahlige Division div verwendet, welche als Ergebnis den ganzzahligen Quotienten n und den positiven Rest REM_n ergibt. Für eine Beschreibung des Operators div siehe Fig. 13.

Weiterhin wird der Interruptzähler INT_CALC_f, welcher in diesem Ausführungsbeispiel z.B. 4 Byte groß ist, mit einem Faktor $2^h$, z.B. h = 24, parametriert. Es kann anstelle von $2^h$ natürlich jeder andere Faktor gewählt werden. Die Multiplikation mit $2^h$ kann jedoch in binärer Darstellung bevorzugt durch eine Verschiebung des Wertes um h Stellen nach links ersetzt werden.

Durch die Parametrierung werden die sich durch die Division ergebenden Drehzahlen n z.B. in 16 Bit gut aufgelöst. Der Exponent h muss hierzu auf den jeweiligen Motor abgestimmt werden.

Als Beispiel folgt die Berechnung der Drehzahl für den Bereich zwischen den Stellen 175 und 177 aus Fig. 11: INT_MEAS_f ist ein Byte groß, INT_CALC_f vier Byte und $\Delta$t_CALC_f zwei Byte.

INT_MEAS_f(175-177) hat hier den Wert 8, es wurden also seit der letzten Messung zum Zeitpunkt t_MEAS_f (175) acht Flanken 110 des Signals f (Fig. 11C) gezählt. INT_CALC_f bekommt in S370 den Wert INT_MEAS_f (175-177) = 8 zugewiesen. In S372 wird INT_CALC_f bei h = 19 mit 2 ^ 19 = 524.288 parametriert und erhält den Wert 4.194.304.

$\Delta$t_MEAS_f(175-177) hat den Wert 26.700, welcher bei einer Auflösung des Ringzählers TIMER1 von 1 µs einer Zeit von 26,7 ms entspricht. $\Delta$t_CALC_f bekommt in S370 den Wert 26.700, welcher sich aus der Differenz zwischen alter und momentaner Messung ergibt, zugeordnet.

Die Division von INT_CALC_f durch $\Delta$t_CALC_f ergibt die Drehzahl n = 157 und den Rest REM_n = 2404.

Die physikalische Drehzahl n_phys entspricht der Anzahl der Umdrehungen pro Minute. Aus 8 Hallwechseln geteilt durch 4 Hallwechsel pro Umdrehung (vierpoliger Rotor) ergeben sich 2 Umdrehungen, und die hierfür benötigte Zeit beträgt 0,0267 s. Damit ergibt sich eine physikalische Drehzahl n_phys = 2 / 0,0267 U/s = 74,906 U/s = 4494,4 U/min.

In der Berechnung wird auch der Rest REM_n_OLD der vorhergehenden Drehzahlberechnung durch Addition zu dem Produkt aus INT_CALC_f und const_f berücksichtigt.

In dem obigen Beispiel weicht z.B. die berechnete Drehzahl n von der tatsächlichen Drehzahl etwas ab, da die Division die ganze Zahl 157 anstelle des eigentlichen Ergebnisses von ca. 157,09 ergibt. Die Differenz geht jedoch nicht verloren, sondern sie wird bei der folgenden Division in S372 durch die Addition des Restes REM_n_OLD der letzten Division zum Zähler (Englisch: numerator) berücksichtigt.

Durch die Berücksichtigung des Restes REM_n_OLD wird in vorteilhafter Weise erreicht, dass keine Information verlorengeht, und sie führt zu einer messbaren Verbesserung des Reglers, sofern sie verwendet wird.

Nach der Berechnung von n und REM_n wird in S372 der Rest REM_n in REM_n_OLD für die nächste Berechnung gespeichert.

In S374 wird das Funktionsregisterbit FCT_CALC_n (Fig. 9; Fig. 13, S332) wieder auf Null zurückgesetzt, da die Drehzahlberechnung abgeschlossen ist.

Daraufhin wird an den Anfang S602 des Funktionsmanagers (Fig. 8) gesprungen.

**Fig. 16** zeigt ein Flussdiagramm zur Berechnung der Solldrehzahl n_s.

Es werden folgende Variablen benutzt

| | |
|---|---|
| t_CALC_f_s | Zeitdifferenz zur letzten Messung |
| t_OLD_f_s | Zeitpunkt der letzten Messung |
| t_MEAS_f_s | Zeitpunkt der momentanen Messung |
| INT_CALC_f_s | Anzahl der Interrupts seit der letzten Messung für die Berechnung |
| INT_MEAS_f_s | Übergebene Anzahl der Interrupts seit der letzten Messung |
| n_s | Solldrehzahl (gewünschte Drehzahl des Motors M) |
| REM_n_s | Rest der ganzzahligen Division |
| h_s | Hochzahl für Parametrierung von INT_CALC_f_s |
| REM_n_s_OLD | Rest der ganzzahligen Division der letzten Berechnung |

Die Berechnung der Solldrehzahl n_s ist identisch mit der Berechnung der Drehzahl n gemäß Fig. 15. Die Bezugszeichen der Fig. 16 entsprechen den um 100 erhöhten Bezugszeichen der Fig. 15. Der Wert h_s zur Parametrierung von INT_CALC_f wird im Normalfall gleich dem Wert h aus Fig. 15 gewählt, da die Solldrehzahl und die Istdrehzahl vergleichbar sein sollen. Durch eine Wahl von h_s ungleich h könnte eine relative Parametrierung stattfinden, welche jedoch im Normalfall nicht gewählt wird.

Die Schritte von Fig. 16 werden nicht nochmals beschrieben, um unnötige Längen zu vermeiden. Auf Fig. 15 und die zugehörige Beschreibung wird verwiesen.

Da die Messung der Sollfrequenz f_s und der Istfrequenz f in der gleichen Weise und quasiparallel abläuft, hat man nach jeder durch den TIMER0-Interrupt ausgelösten Messung einen Wert für die Solldrehzahl n_s und einen Wert für die Drehzahl n. Die Werte n und n_s sind vergleichbar, da die Zeiten mit Hilfe desselben Timers TIMER1 und praktisch gleichzeitig gemessen wurden. Aufgrund der verwendeten Messmethode sind sie zudem sehr genau.

**Gesamtregler**

**Start des Reglers durch die Funktion RGL_ON**

**Fig. 17** zeigt ein Flussdiagramm für ein Ausführungsbeispiel der Funktion RGL_ON S624 der Fig. 8, welche bestimmt, wann die Reglerfunktion RGL S628 (Fig. 18) gestartet wird.

Da die Erfassung und Messung der Istfrequenz f und der Sollfrequenz f_s und damit auch die Berechnung der Drehzahl n und Solldrehzahl n_s unabhängig voneinander ablaufen und nicht zum gleichen Zeitpunkt enden, muss in der Funktion RGL_ON S624 bestimmt werden, wann die Reglerfunktion RGL S628 gestartet wird. In diesem Ausführungsbeispiel wird die Reglerfunktion RGL S628 gestartet, wenn sowohl die Istdrehzahlberechnung CALC_n S616 als auch die Solldrehzahlberechnung CALC_n_s S620 abgeschlossen sind.

Es werden folgende Variablen benutzt

| | |
|---|---|
| FCT_CALC_n_s | Funktionsregisterbit für die Funktion CALC_n_s S620, vgl. Fig. 9 |
| FCT_CALC_n | Funktionsregisterbit für die Funktion CALC_n S616, vgl. Fig. 9 |
| FCT_RGL | Funktionsregisterbit für die Funktion RGL S628, vgl. Fig. 9 |
| FCT_RGL_ON | Funktionsregisterbit für die Funktion RGL_ON S624, vgl. Fig. 9 |

In S390 wird anhand des Funktionsregisterbits FCT_CALC_n_s überprüft, ob die Solldrehzahlberechnung CALC_n_s S620 fertig ist. Falls nein, so wird zurück zum Anfang S602 des Funktionsmanagers (Fig. 8) gesprungen. Falls ja, so wird in S392 anhand des Funktionsregisterbits FCT_CALC_n überprüft, ob die Drehzahlberechnung CALC_n S616 abgeschlossen ist. Falls nein, so wird zurück zum Anfang S602 des Funktionsmanagers gesprungen. Falls ja, so liegen sowohl die Drehzahl n als auch die Solldrehzahl n_s vor, und die Reglerfunktion RGL S628 wird durch Setzen des Funktionsregisterbits FCT_RGL auf 1 angefordert. Das Funktionsregisterbit FCT _RGL_ON wird auf Null zurückgesetzt, da die Funktion RGL_ON S624 abgearbeitet ist.

Es wird also mit dem Start der Reglerfunktion RGL S628 gewartet, bis die Solldrehzahl n_s und die Drehzahl n berechnet sind.

**Reglerfunktion RGL mit "elektronischem Getriebe"**

**Fig. 18** zeigt ein Flussdiagramm für eine Ausführungsform der Reglerfunktion RGL S628 (Fig. 8), welche aus der Drehzahl n und der Solldrehzahl n_s einen Stellwert RGL_VAL berechnet und diesen ausgibt.

Es werden folgende Variablen benutzt

| | |
|---|---|
| RGL_DIFF | Regeldifferenz |
| X | Getriebefaktor |
| RGL_PROP | Proportionalanteil |
| RGL_P | Proportionalfaktor |
| RGL_INT | Integralanteil |
| RGL_I | Integralfaktor |
| RGL_VAL | Vom Regler berechneter Stellwert |
| RGL_MAX | Maximaler Stellwert |

In S530 wird die Regeldifferenz RGL_DIFF als

$$RGL\_DIFF := n\_s * X - n \qquad (7)$$

berechnet.

Durch die Multiplikation der Solldrehzahl n_s mit X wird eine Getriebefunktion verwirklicht. Mit X = 2 wird z. B. erreicht, dass die Solldrehzahl n_s der halben gewünschten Drehzahl n des Motors 32 entspricht, oder anders gesagt, dass der Motor M genau doppelt so schnell läuft wie der Sollwert n_s, und mit X = 1/2 wird z.B. erreicht, dass die Solldrehzahl n_s der doppelten Drehzahl n entspricht, d.h. der Motor M dreht sich mit dem halben Wert der Drehzahl, die durch n_s vorgegeben wird. Dies wird an einem Zahlenbeispiel nachfolgend erläutert.

Die Drehzahl n und die Solldrehzahl n_s werden durch diesen Schritt in ein bestimmtes Verhältnis

$$n / n\_s = X \qquad (8)$$

gesetzt. Für die Istfrequenz f und die Sollfrequenz f_s bedeutet dies ebenfalls ein festes Verhältnis, z.B.

$$f\_s / f = y/z \qquad (1)$$

wie in Fig. 1 erläutert.

Wie sich aus S530 direkt ergibt, könnte man die Regeldifferenz auch anders berechnen, z.B. nach der Gleichung

$$RGL\_DIFF: = n\_s - Y * n \qquad (7a),$$

wie das in Fig. 7 bei 145' angedeutet ist, oder nach der Gleichung

$$RGL\_DIFF: = A * n\_s - B * n \qquad (7b),$$

oder unter Verwendung einer geeigneten mathematischen Funktion, z.B. ln(n_s), oder einer Funktion der Zeit, z.B.

$$RGL\_DIFF: = (n\_s * sin\ t) - n \qquad (7c),$$

wobei dann die Drehzahl zwischen der positiven Drehzahl n_s und der negativen Drehzahl -(n_s) periodisch oszillieren würde. Selbstverständlich setzt dies einen Motor voraus, der in beiden Drehrichtung laufen kann. Ein solcher Motor 32" ist als Beispiel in Fig. 29 dargestellt. Die meisten elektronisch kommutierten Motoren laufen in beiden Drehrichtungen und eignen sich für solche Anwendungen.

Ebenso kann ein Getriebefaktor eingeführt werden, indem man z.B. bei der Sollfrequenz f_s nur jedes zweite "Ereignis" zählt, und dasselbe gilt analog für die Istfrequenz f. Da numerische Werte miteinander verglichen werden, ist jede Art von bekannter mathematischer Manipulation dieser numerischen Werte möglich, wobei sich im einzelnen immer wieder besondere Vorteile ergeben werden.

Im folgenden werden einige weitere Möglichkeiten der Ausführung eines "elektronischen Getriebes" dargestellt und erläutert.

Die Multiplikation von n_s mit X kann z.B. als Festkomma-Multiplikation ausgeführt werden. Bei der Festkomma-Multiplikation wird bei der Variablen X an einer festen Stelle ein Komma angenommen, so dass die Bits rechts von dem Komma einer Multiplikation mit 1/2, 1/4 etc. entsprechen. Der Vorteil der Festkomma-Multiplikation ist, dass keine Nachkommastellen verlorengehen.

**Zahlenbeispiel**

Vom Sollwertgeber 20 (Fig. 1) wird eine Frequenz f_s zugeführt, die einer Solldrehzahl von 3000 U/min entspricht. Der Motor 32 soll jedoch mit einem Getriebefaktor X laufen, der 0,5 beträgt, also mit 1500 U/min.

Aus der Frequenz f_s wird in Fig. 7 im Teil 143 (entspricht den Flußdiagrammen der Fig. 14 und 15) eine Solldrehzahl n_s von 3000,00 U/min berechnet. Intern wird im Rechner - wegen der höheren Genauigkeit - die Zahl 300.000 verwendet, was hexadezimal der Zahl 493E0 entspricht. Diese Zahl wird mit dem Getriebefaktor X = 0,5 multipliziert, und man erhält folglich als Sollwert X * n_s den hexadezimalen Wert 249F0.

Der Motor 32 dreht sich im Augenblick mit 1499,99 U/min. Im Rechner wird - wegen der höheren Genauigkeit - die Zahl 149.999 verwendet, und zwar als hexadezimale Zahl 249EF. Dies entspricht in Fig. 7 der tatsächlichen Drehzahl n.

Im Differenzbildner 151 wird nun gemäß S530 (Fig. 18) die Regeldifferenz RGL_DIFF gebildet, also

$$n\_s * X - n = 249F0 - 249EF = 1\ [dezimal]$$

(Der Wert 1 ist im Dezimalsystem angegeben, um die Verständlichkeit zu erhöhen). Da die Werte für X * n_s und n in diesem Beispiel zuvor mit 100 multipliziert worden waren, muss dieser Wert wieder durch 100 dividiert werden, d.h. der tatsächliche Wert der Regeldifferenz beträgt 1/100 = 0,01 U/min.

Dieser numerische Wert wird gemäß S532 (Fig. 18) im PI-Regter weiterverarbeitet, und da die Drehzahl etwas zu niedrig ist, wird die Größe RGL_VAL durch den PI-Regler erhöht, um die Drehzahl auf exakt 1500 U/min zu bringen.

Durch die Schritte S534 bis S540 wird die Größe RGL_VAL innerhalb der zulässigen Grenzen 0 und RGL_MAX gehalten.

Obwohl also als Frequenz f_s ein Sollwert von 3000 U/min vorgegeben wird, wird der Motor auf 1500 U/min geregelt, da ein "Getriebefaktor" X von 0,5 eingestellt ist. In der gleichen Weise könnte auch ein anderer Getriebefaktor eingestellt werden, z.B. 0,333, und der Motor würde dann auf 1000 U/min geregelt werden.

Aus dem Beispiel sieht man auch, dass man ebensogut den Wert für n_s unverändert lassen könnte, und dafür den Wert für n bei diesem Beispiel mit 2 multiplizieren könnte. Der Wert für die Regeldifferenz würde dann doppelt so groß, aber der Ablauf des Regelvorgangs wäre derselbe.

Das Verhältnis n / n_s kann - zusätzlich oder alternativ - auch bei der Frequenzmessung und Drehzahlberechnung beeinflusst werden, indem z.B. die Variablen h (S372 in Fig. 15) und h_s (S472 in Fig. 16) unterschiedlich gewählt werden.

Auch die Berücksichtigung des Wertes von MOD_f bei der Messung der Istfrequenz f (S324 in Fig. 13) und des Wertes von MOD_f_s bei der Messung der Sollfrequenz f_s (S 424 in Fig. 14) kann eine Änderung des Verhältnisses der Frequenzen f und f_s und damit auch der Drehzahlen n und n_s bewirken.

Der Ort, an dem das gewünschte Verhältnis der Drehzahlen n und n_s bzw. der Frequenzen f und f_s gebildet wird, ist für die vorliegende Erfindung nicht von Bedeutung. Das Verhältnis muss aber an einer geeigneten Stelle gebildet werden.

In S352 der Fig. 18 ist ein digitaler PI-Regler dargestellt.

Der Proportionalanteil RGL_PROP wird durch Multiplikation der Regeldifferenz RGL_DIFF mit dem Proportionalfaktor RGL_P berechnet.

Der neue Integralanteil RGL_INT wird durch Addition des vorhergehenden Integralanteils zu der mit dem Integralfaktor RGL_I multiplizierten Regeldifferenz RGL_DIFF berechnet. Bevorzugt steht dem Integralanteil RGL_INT so viel Speicher zur Verfügung, dass keine Information der Regeldifferenz verloren geht.

Der Stellwert RGL_VAL ergibt sich aus der Summe des Proportionalanteils RGL_PROP und des Integralanteils RGL_INT.

In den Schritten S534 bis S540 wird eine Bereichsüberprüfung des Stellwerts RGL_VAL durchgeführt.

Ist der Stellwert RGL_VAL in S534 kleiner als Null, so wird er in S536 auf Null gesetzt.

Ist der Stellwert RGL_VAL in S538 größer als der maximal zulässige Wert RGL_MAX, so wird er in S540 auf RGL_MAX gesetzt. Dies dient dazu, beim Hochlauf eines Motors, wo große Regeldifferenzen vorliegen können, den Stellwert RGL_VAL auf den Maximalwert RGL_MAX zu begrenzen.

Liegt der Wert von RGL_VAL innerhalb eines zulässigen Bereichs, so wird er unverändert verwendet.

In S542 wird das Register PWM_SW des μC-internen PWM-Generators auf den Stellwert RGL_VAL gesetzt, und das PWM-Signal PWM_SW wird, wie bei Fig. 5 beschrieben, ausgegeben.

Die Reglerfunktion S628 ist damit abgearbeitet, und das Funktionsregisterbit FCT_RGL wird in S544 zurückgesetzt.

Daraufhin wird an den Anfang S602 des Funktionsmanagers (Fig. 8) zurückgesprungen.

Statt des beschriebenen PI-Reglers könnte z.B. auch ein PID-Regler oder ein anderer Regler verwendet werden. Vorteilhaft sind digitale Regler, bei denen alle Bits der Regeldifferenz RGL_DIFF berücksichtigt werden, was hier durch den Integralanteil RGL_INT gewährleistet wird. Die Reglerfaktoren RGL_P und RGL_I können getrennt eingestellt werden, um den Regler optimal an die jeweilige Aufgabe anzupassen.

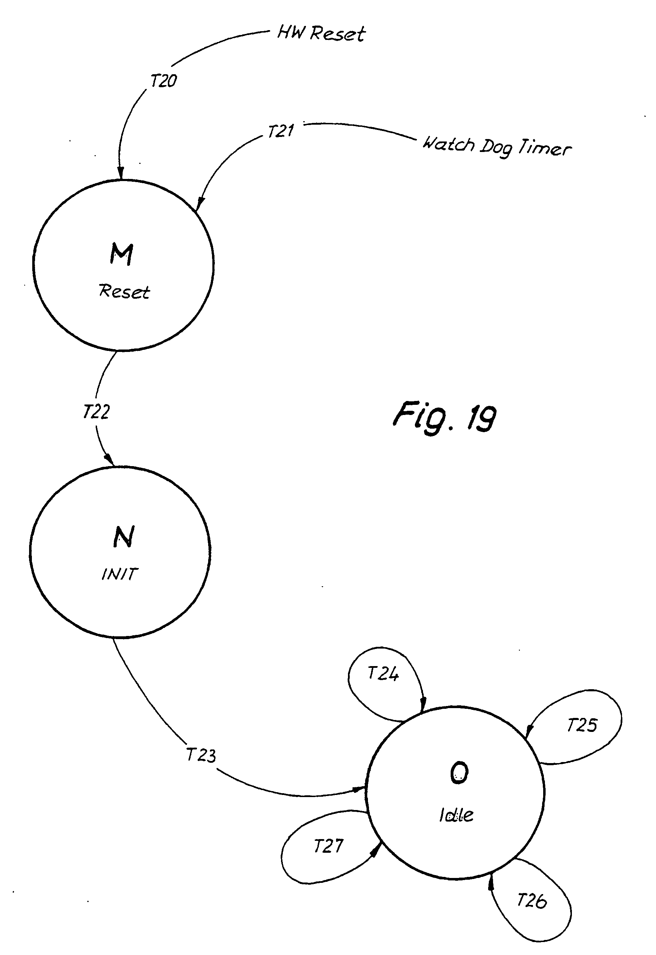

**Fig. 19** zeigt ein Zustandsdiagramm, welches die beschriebenen komplexen Funktionsabläufe der vorhergehenden Figuren in einfacher und verständlicher Weise zusammenfasst. Die nachfolgende **Tabelle 2** gibt die erforderlichen Erläuterungen zu diesem Zustandsdiagramm und ist weitgehend selbsterklärend. WDT bedeutet Watch Dog Timer.

| Übergang | Ereignis | Aktion | Von.. nach |
|---|---|---|---|
| T20 | Hardware-Reset | Sprung zur Adresse 00h des Programms | -> M |
| T21 | Watchdog-Timer Reset | Sprung zur Adresse 00h des Programms | -> M |
| T22 | Unmittelbarer Zustandswechsel ohne Ereignis | Keine Aktion | M -> N |
| T23 | Unmittelbarer Zustandswechsel ohne Ereignis | Initialisierung. Ggf. Holen von Parametern aus EEPROM 80 | N --> O |

(fortgesetzt)

| Übergang | Ereignis | Aktion | Von.. nach |
|---|---|---|---|
| T24 | Berechnung Istwert gestartet | Berechnung Istwert ausführen. Zähler INT_CALC_f rücksetzen. Berechnung Istwert stoppen und sperren. | O --> O |
| T25 | Berechnung Sollwert gestartet | Berechnung Sollwert ausführen. Zähler INT_CALC_f_s rücksetzen. Berechnung Sollwert stoppen und sperren. | O -> O |
| T26 | Berechnung von Sollwert und Istwert gestoppt. Regler freigegeben. | Regler starten | O -> O |
| T27 | Regler gestartet | S530 (X * n_s) Regler RGL (Fig. 18) S542 (Stellwertausgabe) S544 (Regler stoppen und sperren) | O -> O |

Im Zustand O (Idle) ist das Programm aktionsbereit und führt je nach Bedarf verschiedene Aktionen durch. Bei T24 wird z.B. die Berechnung des Istwerts der Frequenz ausgeführt, der Zähler INT_CALC_f wird rückgesetzt, und anschließend wird die Istwertberechnung so lange gesperrt, bis eine neue Messung durchgeführt worden ist. Beim Übergang T25 werden dieselben Aktionen für den Sollwert ausgeführt.

Bei T26 werden die Berechnungen von Soll- und Istwert gestoppt, und der Regler RGL (Fig. 18) wird gestartet. Bei T27 ist dann der Regler gestartet. Im Schritt S530 wird die Getriebeübersetzung X berücksichtigt. Die Berechnungen im PI-Regler werden ausgeführt, der Stellwert wird in S542 ausgegeben, und in S544 wird der Regler gestoppt und vorläufig gesperrt, bis nach der nächsten Messung neue Werte vorliegen.

Die Zustände M und N werden gewöhnlich nur beim Einschalten durchlaufen, da dann ein Hardware-Reset stattfindet. Wenn der Watchdog (nicht dargestellt) ein unregelmäßiges Verhalten des µC 23 feststellt, werden die Aktionen T21, T22 und T23 abgearbeitet, um den µC 23 wieder in seinen normalen Betriebszustand O zu versetzen.

**Beispiel für einen Regler mit möglicher Solldrehzahl n_s = 0**

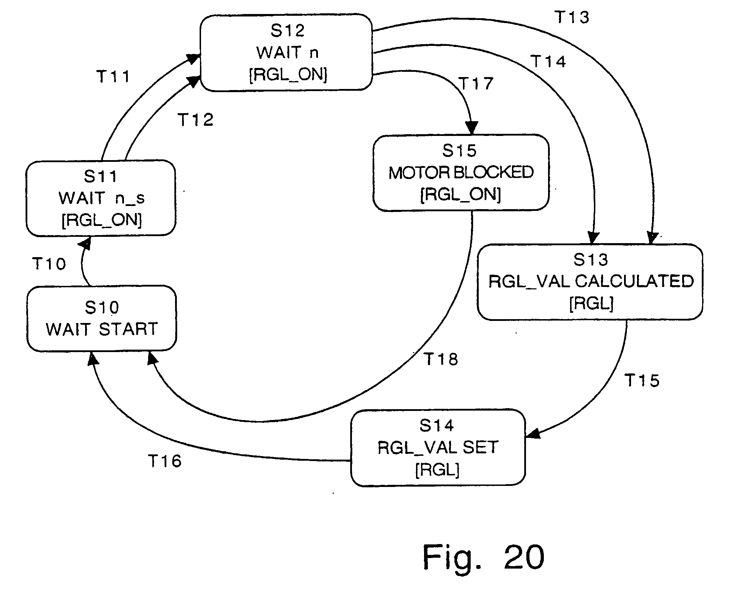

**Fig. 20** zeigt ein Zustandsdiagramm für einen Regler, bei welchem auch die Solldrehzahl n_s = 0 eingestellt werden kann.

Die Funktion RGL_ON S624 aus Fig. 17 wartet mit dem Start der Reglerfunktion RGL S628, bis ein Wert sowohl die Solldrehzahl n_s als auch die Drehzahl n vorliegt.

Dies bereitet bei Motoren, welche auch auf die Drehzahl n = 0 heruntergeregelt werden sollen, Schwierigkeiten, da, wenn die Signale f bzw. f_s die Frequenz Null haben, keine Interrupts ausgelöst werden, da keine Flanken der Signale f bzw. f_s vorliegen.

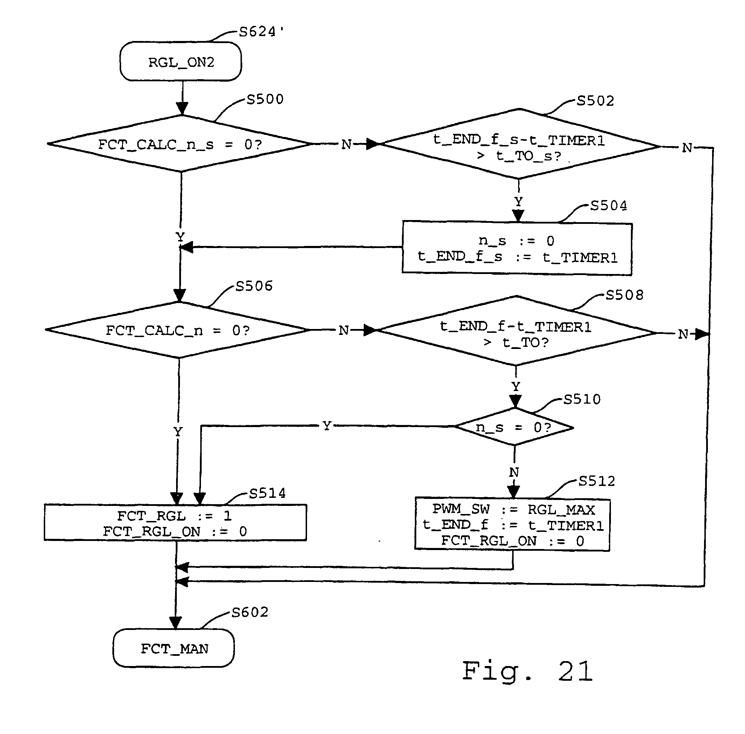

Der Regler aus Fig. 21 ermöglicht eine Regelung auf die Drehzahl Null, und stellt daher eine bevorzugte Weiterbildung dar.

Das Zustandsdiagramm enthält sechs Zustände S10 bis S15 und neun Übergänge T10 bis T18.

In der folgenden **Tabelle 3** sind die Übergänge T10 bis T18 mit den zugehörigen Ereignissen und Aktionen beschrieben. Diese Tabelle ist, ebenso wie die Tabellen 1 und 2, aus sich selbst heraus verständlich.

| Übergang | Ereignis | Aktion |
|---|---|---|
| T10 | Der Regler wurde durch TIMER0-Interrupt gestartet | RGL_ON wird gestartet, Sprung zu S11 |
| T11 | Solldrehzahl n_ liegt vor | Sprung zu S12 |
| T12 | Time-Out-Zeit für Messung: von n_s wurde überschritten | n_s := 0; Sprung zu S12 |
| T13 | Drehzahl n liegt vor | Regler starten; Stellwert berechnen; Sprung zu S13 |
| T14 | Time-Out-Zeit für Messung von n wurde überschritten und n_s = 0 | n := 0; Regler starten; Stellwert berechnen; Sprung zu S13 |

(fortgesetzt)

| Übergang | Ereignis | Aktion |
|---|---|---|
| T15 | linstantan | Stellwert ausgeben; Sprung zu S14 |
| T16 | instantan | Regler beenden; Sprung zu S10 |
| T17 | Time-Out-Zeit für Messung von n wurde überschritten und n_s <> 0 | Maximalen Stellwert ausgeben; Sprung zu S 15 |
| T18 | instantan | RGL_ON beenden; Sprung zu S10 |

Im Zustand S10 wird auf den Start des Reglers gewartet.

Bei einem Start des Reglers, z.B. durch die Routine TIMER0-Interrupt S639 aus Fig. 12, geschieht ein Sprung zum Zustand S11, und es wird auf die Solldrehzahl n_s gewartet.

Falls ein Wert für die Solldrehzahl n_s vorliegt, findet der Übergang T11 zum Zustand S12 statt.

Wird jedoch in S11 eine Time-Out-Zeit überschritten, ohne dass ein Wert für die Solldrehzahl n_s vorliegt, so findet der Übergang T12 zum Zustand S12 statt, in welchem Übergang T12 die Solldrehzahl n_s auf Null gesetzt wird.

Im Zustand S12 wird auf die Drehzahl n des Motors M gewartet. Falls ein Wert für n vorliegt, findet der Übergang T13 nach S13 statt, die Reglerfunktion RGL S628 wird gestartet, und ein neuer Stellwert RGL_VAL wird berechnet.

Vom Zustand S13 findet ein instantaner Übergang T15 nach S14 statt, und der berechnete Stellwert RGL_VAL wird ausgegeben.

Vom Zustand S14 findet ein instantaner Übergang T16 nach S10 statt, und es wird auf den neuen Start gewartet.

Wird im Zustand S12 eine Time-Out-Zeit überschritten, so hat der Motor die Drehzahl n = 0.

Es werden bei n = 0 zwei Fälle unterschieden. Ist auch die Solldrehzahl n_s = 0, so findet der Übergang T14 nach S13 statt, und die Regelung RGL S628 berechnet einen neuen Stellwert RGL_VAL.

Ist jedoch die Drehzahl n = 0 und die Solldrehzahl n_s ungleich Null, so ist entweder der Motor M blockiert oder er soll gestartet werden. Es findet ein Übergang T17 nach S15 statt, und ein maximaler Stellwert wird ausgegeben.

Vom Zustand S15 findet ein instantaner Übergang T18 zum Zustand S10 statt, und es wird auf den nächsten Start gewartet.

**Fig. 21** zeigt ein Flussdiagramm für eine an Fig. 20 angepasste Routine RGL_ON2 S624', also für den Fall, dass auch n_s = 0 berücksichtigt werden soll.

In S500 wird überprüft, ob die Solldrehzahlberechnungsroutine CALC_n_s S620 (Fig. 16) abgearbeitet ist, ob also eine Solldrehzahl n_s vorliegt.

Falls ja, so wird nach S506 gesprungen.

Falls nein, so wird in S502 überprüft, ob seit der letzten Messung eine Time-Out-Zeit t_TO_s überschritten wurde. Hierzu wird die Differenz zwischen dem Zeitpunkt der letzten Messung t_END_f_s (vgl. Fig. 14) und dem momentanen Zeitpunkt des Timers TIMER1 berechnet und mit der Time-Out-Zeit t_TO_s verglichen.

Ist die Time-Out-Zeit t_TO_s noch nicht überschritten, so wird zum Anfang S602 des Funktionsmanagers (Fig. 8) gesprungen und weiter auf die Solldrehzahl n_s gewartet.

Ist die Time-Out-Zeit t_TO_s jedoch überschritten, so wird in S504 die Solldrehzahl n_s auf Null gesetzt. Weiterhin wird der Zeitpunkt t_END_f_s der letzten Messung auf den momentanen Wert t_TIMER1 von TIMER1 gesetzt, damit der TIMER1 nicht den Wert t_END_f_s überrundet. Daraufhin wird zu S506 gesprungen.

In S506 wird analog zu S500 überprüft, ob ein Wert für die Drehzahl n vorliegt.

Falls ja, so wird in S514 die Reglerfunktion RGL S628 (Fig. 18) durch Setzen des Funktionsregisterbits FCT_RGL auf 1 angefordert, und die Routine RGL_ON2 wird durch das Zurücksetzen von FCT_RGL_ON auf Null beendet.

Liegt in S506 ein Wert für die Drehzahl n nicht vor, so wird in S508 analog zu S502 überprüft, ob seit der letzten Messung der Drehzahl n zum Zeitpunkt t_END_f die Time-Out-Zeit t_TO überschritten wurde.

Falls nein, so wird nach S602 (Fig. 8) gesprungen, und es wird weiter auf einen Wert für die Drehzahl n gewartet.

Bei einer Überschreitung der Time-Out-Zeit t_TO wird in S510 überprüft, ob die Solldrehzahl n_s = 0 ist.

Falls ja, so wird nach S514 gesprungen, und die Reglerfunktion RGL S628 wird mit den Werten n = 0 und n_s = 0 aufgerufen.

Falls nein, so ist entweder der Motor M blockiert, oder er soll gerade gestartet werden. Daher wird in S512 das Register PWM_SW des PWM-Generators des μC23 auf den maximalen Stellwert RGL_MAX gesetzt. Der Wert t_END_f wird analog zu S504 auf den momentanen Timerwert t_TIMER1 gesetzt, um einen Überlauf zu vermeiden, und die Routine RGL_ON2 S624' wird durch Setzen von FCT_RGL_ON auf Null und Sprung zu S602 beendet.

An der Reglerfunktion RGL S628 müssen bei dieser Variante keine weiteren Änderungen vorgenommen werden.

Die Time-Out-Zeiten t_TO_s und t_TO müssen entsprechend den Anforderungen des Reglers und des Motors gewählt werden. Z.B. kann man mit einer relativ kurzen Time-Out-Zeit dafür sorgen, dass der Motor unterhalb einer definierten minimalen Drehzahl abgeschaltet wird. Manche Motoren sind bei niedrigen Drehzahlen schwer zu regeln, z.B. Ottomotoren, weil sie dann zum Schwingen neigen, und es kann dann erwünscht sein, diese Drehzahlbereiche nicht zuzulassen.

Ein typischer Wert von t_TO ist 100 ms, entsprechend einer Motordrehzahl von ca. 50 U/min. Ein Wert von 1000 ms würde einer Drehzahl von ca 5 U/min entsprechen. Bei einem Elektromotor kann aber ein solch großer Wert zur thermischen Überlastung der Endstufentransistoren (Transistoren 740, 744 in Fig. 29) führen.

**Parametrierung des Motors**

Alle bisher erläuterten Variablen können vom Hersteller vorgegeben werden. Man sagt, dass der Hersteller den Motor "parametriert". Die Variablen können in einem nichtflüchtigen Speicher, z.B. in einem ROM, Flash-ROM oder dem EEPROM 80 der Fig. 3, vorliegen, oder man kann sie z.B. durch Dip-Switches einstellen. Beim Start des Motors werden sie dann z.B. im Schritt INIT S602 (Fig. 8) in das RAM des µC 23 geladen.

Weiterhin können die verwendeten Variablen ggf. über den Bus B (Fig. 3) verändert werden. Über diesen externen Bus B kann ggf. eine Änderung der Variablen im EEPROM 80 durchgeführt werden. Alternativ kann das EEPROM 80 vor seiner Montage vom Hersteller programmiert werden. Dabei können auch andere Variablen programmiert werden, z.B. der Proportionalfaktor RGL_P des Reglers, der Integralfaktor RGL_I, und die Gesamtverstärkung des Reglers (Fig. 18). Bei Verwendung verschiedener Motoren kann das sehr wichtig sein, um einen optimalen Antrieb zu erhalten.

Besonders wichtig ist die Möglichkeit, die Variablen MOD_f, MOD_f_s und X beeinflussen zu können. Mit MOD_f und MOD_f_s ist es möglich, den Regler auf verschiedene Polzahlen der verwendeten Rotoren und unterschiedliche Arten von Sollfrequenzgebern 20 einzustellen. Würde z.B. f_s von dem zweipoligen Rotor 732 und dem Hallgenerator 61 der Fig. 29 erzeugt, so würde man MOD_f_s auf 2 (oder ggf. auch auf 4) einstellen, um ein erstklassiges Resultat des Regelvorgangs zu erhalten.

Auf diese Weise kann dasselbe Programm für unterschiedliche Motortypen verwendet werden, indem die Parameter an den verwendeten Motortyp und den verwendeten Sollwertgeber angepasst werden. Die Verwendung desselben Programms für verschiedene Motortypen spart Produktions- und Entwicklungskosten, und der Hersteller kann sehr flexibel auf Kundenwünsche reagieren. Distributoren oder bevorzugten Kunden kann es auch gestattet werden, das EEPROM 80 selbst zu programmieren, z.B. bei Versuchen zur Optimierung eines Antriebs. Durch eine Kennwortfunktion kann eine unerwünschte Programmierung durch Benutzer verhindert werden.

Die Parametrierung des Getriebefaktors X ermöglicht die Verwendung desselben Sollfrequenzgebers 20 für mehrere Motoren, welche in einem festen Drehzahlverhältnis zueinander laufen müssen, welches jedoch von Motor zu Motor unterschiedlich sein kann. Mit Hilfe des Getriebefaktors X ist z.B. eine andauernde Straffung während des Transports einer Materialbahn (z.B. Kunststofffolien oder Stoff) möglich, indem bei einem ersten Motor ein Getriebefaktor X = 1,000 und bei einem zweiten, in Bewegungsrichtung vorderen Motor ein Getriebefaktor X = 1,001 gewählt wird. Hierdurch dreht der zweite Motor minimal schneller, was eine Straffung der transportierten Bahn bewirkt.

Die Regelung mittels der Sollfrequenz f_s wird umso dynamischer, je höher diese Frequenz ist. Andererseits wird mit einer höheren Sollfrequenz auch der µC 23 stärker durch Rechenvorgänge belastet. Ein Verhältnis zwischen Sollfrequenz f_s und Istfrequenz f von f_s / f $\geq$ 5 / 1 hat sich für Motoren, welche schnell auf Änderungen der Sollfrequenz reagieren sollen, als vorteilhaft erwiesen. Unter Frequenz wird dabei die Anzahl der Ereignisse pro Zeiteinheit verstanden, z.B. bei einem Hallsignal (Fig. 4) die Zahl der Flanken 110 pro Sekunde.

**Fig. 26** zeigt ein Beispiel für die Verwendung dreier erfindungsgemäßer Motoren. Eine Sollfrequenz f_s von einem Frequenzgenerator 180 wird drei erfindungsgemäßen Motoren 181, 183 und 185 über eine Leitung 187 zugeführt. Der Rotor des Motors 181 ist zweipolig, der des Motors 183 vierpolig und der des Motors 185 sechspolig. Verschiedene Motoren sind z.B. nötig, wenn an verschiedenen Stellen unterschiedlich leistungsstarke Motoren benötigt werden.

In diesem Ausführungsbeispiel sollen alle drei Motoren mit der gleichen, durch die Sollfrequenz vorgegebenen Drehzahl laufen. Hierzu werden z.B. die Getriebefaktoren X(181) des Motors 181, X(183) des Motors 183 und X(185) des Motors 185, auf X(181) = 1, X(183) = 2 und X(185) = 3 gesetzt.

**Fig. 27** zeigt schematisch ein Fotokopiergerät mit drei erfindungsgemäßen Motoren M1, M2 und M3, welche über die Leitung 187 von einem Frequenzgenerator 180 eine Sollfrequenz f_s vorgegeben bekommen. Falls der Motor M2, welcher z.B. eine Walze antreibt, eine andere Drehzahl als die Motoren M1 und M3 benötigt, so kann dies über einen Getriebefaktor X eingestellt werden.

Für ein solches Gerät ist es vorteilhaft, wenn ein Regler gemäß Fig. 20 verwendet wird, mit dem die Drehzahl der Motoren mittels der Sollfrequenz f_s auf Null geregelt werden kann.

**Fig. 28** zeigt ein weiteres Ausführungsbeispiel mit drei Motoren M1, M2 und M3. Der Motor M1 gibt hierbei ein sogenanntes Tachosignal aus. Ein Tachosignal kann z.B. erzeugt werden, indem das Signal des Rotorstellungssensors 61 ausgegeben wird. Mit Hilfe des Tachosignals können weitere erfindungsgemäße Motoren M2, M3 in einem festen Verhältnis zu der Drehzahl des Motors M1 geregelt werden. So wird auch ohne einen speziellen Frequenzgenerator erreicht, dass die drei Motoren in einem festen Drehzahlverhältnis zueinander laufen, weil der Motor M1 als Frequenzgenerator dient.

Bei der Erfindung wird also eine Sollwertinformation, welche in der Frequenz eines Sollfrequenzsignals enthalten ist, einem µC zugeführt. Ein Motor, für den dieser Sollwert bestimmt ist, liefert seinerseits ein Frequenzsignal zurück, welches als Information die Istdrehzahl dieses Motors enthält. Dieses Frequenzsignal kann z.B. von einem Tachogenerator kommen, einem Resolver, einem motorinternen Sensor, z.B. einem Hallgenerator für die Steuerung der Kommutierung des Motors, oder anderen Arten von Sensoren.

Sollfrequenz und Istfrequenz werden fortlaufend und annähernd synchron im µC erfasst und in drehzahlproportionale numerische Werte umgerechnet. Diese numerischen Werte können nun mit vorgegebenen Parametern manipuliert werden, gewöhnlich durch Multiplikation oder Division. (Diese Parameter können z.B. in einem EEPROM gespeichert sein.) Man erhält so z.B. ein Vielfaches der erfassten Sollfrequenz, oder einen Bruchteil der erfassten Sollfrequenz, oder ein Vielfaches der erfassten Istfrequenz, oder einen Bruchteil der erfassten Istfrequenz. Diese manipulierten Werte werden einem Drehzahlregler zugeführt, und auf diese Weise kann eine Getriebefunktion realisiert werden. Um die Regeleigenschaften anzupassen oder zu variieren, können außerdem Regelparameter sehr leicht verändert werden, die das Regelverhalten des Systems beeinflussen.

Die manipulierten Werte werden im Drehzahlregler miteinander verglichen, die Regeldifferenz wird aus ihnen gebildet, diese wird in einem PI-Regler, oder einem PID-Regler, verarbeitet, wie das in S532 ausführlich an einem Beispiel dargestellt ist, und der im Regler generierte Stellwert wird z.B. in ein PWM-Register geschrieben. Ein entsprechendes PWM-Signal wird als Stellwert ausgegeben und beim beschriebenen Ausführungsbeispiel über ein RC-Filter 65, 67 in ein analoges Gleichspannungssignal umgewandelt. Dieses wird einem Stellglied zugeführt welches die Energiezufuhr des Motors steuert. Der Motor liefert seinerseits eine vorgegebene Zahl von Impulsen oder sonstigen Signalen ("Ereignissen") an den µC zurück, und diese liefern dem Regler eine exakte digitale Information über die aktuelle Drehzahl des Motors.

Naturgemäß sind im Rahmen der vorliegenden Erfindung vielfache Modifikationen möglich. Die Einstellung des Getriebefaktors X ist an vielen Stellen möglich, wie erläutert, und die Istfrequenz (entsprechend der Istdrehzahl) kann auf vielfältige Weise erzeugt werden.

**Patentansprüche**

1. Verfahren zum Regeln der Drehzahl eines Motors,

   - dem ein digitaler Drehzahlregler zugeordnet ist, und
   - der im Betrieb ein Istwertsignal für die Drehzahl in Form eines Drehzahl-Frequenzsignals liefert,

   auf einen in Form eines Sollwert-Frequenzsignals vorgegebenen Drehzahl-Sollwert,
   mit folgenden Schritten:

   In einem ersten Zeitabschnitt wird aus dem Drehzahl-Frequenzsignal ein erster numerischer Frequenzwert ermittelt, welcher die Drehzahl des Motors charakterisiert; in einem zweiten Zeitabschnitt, welcher mit dem ersten Zeitabschnitt überlappt, wird aus dem Sollwert-Frequenzsignal ein zweiter numerischer Frequenzwert ermittelt, welcher die Frequenz des Sollwert-Frequenzsignals charakterisiert; mittels erstem und zweitem numerischem Frequenzwert wird im digitalen Drehzahlregler die Drehzahl des Motors auf eine Drehzahl geregelt, welche dem Sollwert-Frequenzsignal nach einer vorgegebenen mathematischen Beziehung zugeordnet ist.

2. Verfahren nach Anspruch 1, bei welchem zur Ermittlung der numerischen Frequenzwerte eine Zeitmessung zwischen vorgegebenen Ereignissen des betreffenden Frequenzsignals vorgenommen wird.

3. Verfahren nach Anspruch 2, bei welchem Flanken des betreffenden Frequenzsignals als Ereignisse dienen, zwischen welchen eine Zeitmessung stattfindet.

4. Verfahren nach Anspruch 2 oder 3, bei welchem für die Zeitmessung zur Ermittlung des ersten numerischen Frequenzwerts und für die Zeitmessung zur Ermittlung des zweiten numerischen Frequenzwerts dasselbe Zeitnormal verwendet wird.

5. Verfahren nach einem der vorhergehenden Ansprüche zur Bestimmung der Frequenz eines Frequenzsignals, welches bei konstanter Frequenz pro Zeiteinheit eine feste Anzahl von Ereignissen nach Art von Impulsen, Flanken oder dergleichen aufweist,
mit folgenden Schritten:

   a) Zu einem ersten, vorgegebenen Zeitpunkt wird die Messung einer Frequenzinformation eingeleitet;
   b) ein zweiter Zeitpunkt wird ermittelt, an dem ein dem ersten, vorgegebenen Zeitpunkt folgendes Ereignis des Frequenzsignals auftritt;
   c) die Anzahl der auf den zweiten Zeitpunkt folgenden Ereignisse des Frequenzsignals wird erfasst;
   d) zu einem dritten, vorgegebenen Zeitpunkt wird die Beendigung der Messung der Frequenzformation eingeleitet;
   e) ein vierter Zeitpunkt wird ermittelt, an dem ein dem dritten, vorgegebenen Zeitpunkt folgendes Ereignis des Frequenzsignals auftritt;
   f) aus dem zeitlichen Abstand zwischen zweitem Zeitpunkt und viertem Zeitpunkt sowie der Anzahl der Ereignisse des Frequenzsignals zwischen diesen Zeitpunkten wird die Frequenzinformation berechnet.

6. Verfahren nach Anspruch 5, bei welchem für die Ermittlung des vierten Zeitpunkts als dem dritten, vorgegebenen Zeitpunkt folgendes Ereignis das nächstfolgende Ereignis des Frequenzsignals gewählt wird.

7. Verfahren nach Anspruch 5, bei welchem für die Ermittlung des vierten Zeitpunkts als dem dritten, vorgegebenen Zeitpunkt folgendes Ereignis dasjenige nächste Ereignis des Frequenzsignals gewählt wird, bei welchem die Anzahl der Ereignisse seit dem zweiten Zeitpunkt gleich einem Produkt a · N ist, wobei a und N ganze Zahlen sind, von denen die eine mindestens gleich 1 und die andere mindestens gleich 2 ist.

8. Verfahren nach Anspruch 7, bei welchem bei einem Drehzahl-Frequenzsignal (f) die Zahl N einer festen Anzahl von Ereignissen pro Umdrehung des Rotors entspricht.

9. Verfahren nach einem oder mehreren der vorhergehenden Ansprüche 5 bis 8, bei welchem fortlaufend Messungen gemäß Anspruch 5 durchgeführt werden.

10. Verfahren nach Anspruch 9, bei welchem die ersten, vorgegebenen Zeitpunkte aufeinanderfolgender Messungen vorgegebene zeitliche Abstände (T_A) aufweisen,
und bei welchem die dritten, vorgegebenen Zeitpunkte jeweils einen im wesentlichen konstanten zeitlichen Abstand von den zugeordneten ersten,vorgegebenen Zeitpunkten haben.

11. Verfahren nach Ansprüche 9 oder 10, bei welchem der dritte, vorgegebene Zeitpunkt einer ersten Messung dem ersten, vorgegebenen Zeitpunkt einer darauffolgenden zweiten Messung entspricht.

12. Verfahren nach Ansprüche 11, bei welchem der vierte Zeitpunkt einer ersten Messung dem zweiten Zeitpunkt einer darauffolgenden zweiten Messung entspricht.

13. Verfahren nach einem oder mehreren der vorhergehenden Ansprüche, bei welchem zum Generieren einer Frequenzinformation eine Division der Anzahl (N) der Ereignisse des Frequenzsignals zwischen dem zweiten und dem vierten Zeitpunkt durch den zeitlichen Abstand ($\Delta t$) zwischen diesen beiden Zeitpunkten vorgenommen wird.

14. Verfahren nach Anspruch 13, bei welchem die Drehzahlinformation durch eine Multiplikation mit einem konstanten Faktor parametriert wird.

15. Verfahren nach Anspruch 14, bei welchem der konstante Faktor so gewählt ist, dass die Drehzahlinformation im wesentlichen einer physikalischen Drehzahl entspricht, z.B. U/min oder U/sec.

16. Verfahren nach einem der Ansprüche 13 bis 15, bei welchem die Division mit einem der Anzahl der Impulse zwischen dem zweiten und dem vierten Zeitpunkt proportionalen Zähler (Englisch: numerator) und einem der Zeitdauer zwischen zweitem und vierten Zeitpunkt proportionalen Nenner (Englisch: denominator) als Ergebnis eine ganzzahlige Frequenzinformation und einen Rest ergibt, und bei welchem der sich ergebende Rest durch Addition zum Zähler (Englisch: numerator) der nachfolgenden Messung berücksichtigt wird.

**17.** Verfahren zur Gewinnung einer Information über die Drehzahl eines rotierenden, im folgenden Rotor genannten Objekts, nach einem oder mehreren der vorhergehenden Ansprüche, mit einer Anordnung zur Erzeugung eines Drehzahlsignals (f), welches pro Rotorumdrehung mindestens ein Ereignis nach Art eines Impulses, einer Signalflanke oder dgl. aufweist, und mit folgenden Schritten:

   a) Während einer ersten Messperiode (T_M1) wird die Zahl (N) der Ereignisse des Drehzahlsignals (f) erfasst;
   b) die zeitliche Dauer ($\Delta$t) der ersten Massperlode (T_M1) wird erfasst;
   c) durch eine ganzzahlige Division ("div"), bei der die Zahl der Ereignisse während der ersten Messdauer (T_M1) im Zähler (Englisch: numerator) und die zeitliche Dauer der ersten Messperiode (T_M1) im Nenner (Englisch: denominator) steht, werden als Ergebnis eine erste ganzzahlige Drehzahlinformation und ein Rest erzeugt (Fig. 15: S372; Fig. 16: S472);
   c) bei der Auswertung einer anschliessenden Messung wird dieser Rest (REM_n_OLD; REM_n_s_OLD) bei der dann stattfindenden ganzzahligen Division durch Addition zum Zähler (Englisch: numerator) berücksichtigt.

**18.** Verfahren nach Anspruch 17, bei welchem die Zahl (N) der Ereignisse vor der ganzzahligen Division (S372; S472) mit einem konstanten Faktor (2^h; 2^h_s) multipliziert wird, welcher größer ist als 1, um ein im Verhältnis zum Rest (REM_n; REM_n_s) großes Resultat der ganzzahligen Division zu erhalten.

**19.** Verfahren nach Anspruch 18, bei welchem der konstante Faktor eine Zweierpotenz (2^h; 2^h_s) ist.

**20.** Verfahren nach Anspruch 19, bei welchem der Exponent (h; h_s) der Zweierpotenz eine einstellbare Variable ist.

**21.** Verfahren nach einem der vorhergehenden Ansprüche, bei welchem die Drehzahl des Motors so geregelt wird, dass die Frequenz des Drehzahl-Frequenzsignals (f) und die Frequenz des Sollwert-Frequenzsignals (f_s) in einem vorgegebenen Verhältnis (y/z) zueinander stehen.

**22.** Verfahren nach Anspruch 21, bei welchem das Verhältnis zwischen den Frequenzen f und f_s durch mindestens einen Parameter beeinflusst wird.

**23.** Verfahren nach Anspruch 22, bei welchem das Verhältnis zwischen den Frequenzen f und f_s im Regler durch mindestens einen Faktor (X; Y) vorgegeben wird.

**24.** Verfahren nach Anspruch 23, bei welchem der mindestens eine Parameter in einem nichtflüchtigen Speicher gespeichert wird.

**25.** Verfahren nach einem der vorhergehenden Ansprüche zur Frequenzermittlung bei einer Mehrzahl von Signalen (f und f_s), welche Signale Frequenzinformationen nach Art von Impulsen, Flanken oder dergleichen aufweisen, mit folgenden Schritten:

   a) Für mindestens zwei dieser Signale wird zu einem ersten, vorgegebenen Zeitpunkt die Messung ihrer Frequenz eingeleitet;
   b) für jedes dieser Signale wird ein zweiter Zeitpunkt ermittelt, an dem eine dem ersten, vorgegebenen Zeitpunkt folgende Frequenzinformation dieses Signals auftritt;
   c) die Zahl der auf den zweiten Zeitpunkt folgenden Frequenzinformationen jedes dieser Signale wird getrennt erfasst;
   d) zu einem dritten, vorgegebenen Zeitpunkt wird für diese Signale die Beendigung der Messung der Frequenz eingeleitet;
   e) für jedes dieser Signale wird ein vierter Zeitpunkt ermittelt, an dem eine dem dritten, vorgegebenen Zeitpunkt folgende Frequenzinformation dieses Signals auftritt;
   f) aus dem zeitlichen Abstand zwischen zweitem Zeitpunkt und viertem Zeitpunkt sowie der Zahl der Frequenzinforinationen des betreffenden Signals zwischen diesen Zeitpunkten wird für jedes der gemessenen Signale eine seine Frequenz charakterisierende Größe bestimmt.

**26.** Verfahren nach Anspruch 25, bei welchem für die Ermittlung des vierten Zeitpunkts als dem dritten, vorgegebenen Zeitpunkt folgende Frequenzinformation die nächstfolgende Frequenzinformation des betreffenden Signals gewählt wird.

**27.** Verfahren nach Anspruch 25, bei welchem für die Ermittlung des vierten Zeitpunkts als dem dritten, vorgegebenen Zeitpunkt folgende Frequenzinformation diejenige nächste Frequenzinformation des betreffenden Signals gewählt wird, bei welcher die Anzahl der Frequenzinformationen seit dem zweiten Zeitpunkt einem ganzzahligen Vielfachen einer ganzen Zahl aus der Reihe 2, 3, 4, ... entspricht.

**28.** Verfahren nach einem der Ansprüche 25 bis 27, bei welchem fortlaufend Messungen vorgenommen werden und die dritten, vorgegebenen Zeitpunkte jeweils einen im wesentlichen konstanten zeitlichen Abstand (T_A) von den zugeordneten ersten,vorgegebenen Zeitpunkten haben.

**29.** Verfahren nach Anspruch 28, bei welchem der dritte, vorgegebene Zeitpunkt der Messung eines Signals dem ersten, vorgegebenen Zeitpunkt einer anschließenden Messung entspricht.

**30.** Verfahren nach Anspruch 28 oder 29, bei welchem der vierte Zeitpunkt einer Messung dem zweiten Zeitpunkt einer anschließenden Messung desselben Signals entspricht.

**31.** Verfahren nach einem der Ansprüche 25 bis 30, bei welchem die ersten, vorgegebenen Zeitpunkte für die Einleitung der Messung der Mehrzahl von Signalen im wesentlichen identisch sind.

**32.** Verfahren nach einem der Ansprüche 25 bis 31, bei welchem die dritten, vorgegebenen Zeitpunkte für die Einleitung der Beendigung der Messung der Mehrzahl von Signalen im wesentlichen identisch sind.

**33.** Verfahren nach einem der vorhergehenden Ansprüche, bei welchem die Drehzahl des Motors durch Vorgabe des Frequenzwertes Null für das Sollwertsignal auf Null geregelt wird.

**34.** Vorrichtung zur Durchführung eines Verfahrens nach einem der vorhergehenden Ansprüche,
bei welchem zur Gewinnung einer Information über die Drehzahl eines rotierenden, im folgenden Rotor (32; 32'; 32") genannten Objekts ein Sensor (61) vorgesehen ist, welcher ein Drehzahl-Signal (f) liefert, das pro Umdrehung des Rotors (32; 32'; 32") eine vorgegebene Zahl von Ereignissen (Fig. 10: 110) aufweist,
mit einer Quelle (23) für Steuersignale (Fig. 10: 191, 193, 195),
mit einem Zähler (INT_CNT_f) für Ereignisse (110) des Drehzahl-Signals (f),
mit einer programmgesteuerten Vorrichtung (23) zum Auswerten der genannten Signale, welcher ein Programm zugeordnet ist, das zur Ausführung folgender Schritte ausgebildet ist:

a) Durch ein erstes Steuersignal (Fig. 10: 191) wird die Messung einer Drehzahlinformation eingeleitet;
b) ein erster Zeitpunkt (Fig. 10: 197) wird ermittelt, an dem ein dem ersten Steuersignal (Fig. 10: 191) folgendes Ereignis (110) des Drehzahl-Signats (f) auftritt;
c) die Anzahl der folgenden Ereignisse (110) des Drehzahl-Signals (f) wird durch den Zähler (INT_CNT_f) für Ereignisse (110) des Drehzahl-Signals (f) erfasst;
d) durch ein zweites Steuersignal (Fig. 10: 193) wird die Beendigung der Messung der Drehzahlinformation eingeleitet;
e) ein zweiter Zeitpunkt (Fig. 10: 199) wird ermittelt, an dem ein dem zweiten Steuersignal (Fig. 10: 193) folgendes Ereignis des Drehzahl-Signals (f) auftritt;
f) aus dem zeitlichen Abstand (Fig. 10: $\Delta$t_MEAS_f(197-199)) zwischen erstem Zeitpunkt (Fig. 10: 197) und zweitem Zeitpunkt (Fig. 10: 199) sowie der Anzahl (N) der Ereignisse (110) des Drehzahl-Signals (f) zwischen diesen beiden Zeitpunkten wird eine Drehzahlinformation (n) berechnet.

**35.** Vorrichtung nach Anspruch 34, bei welcher der Geber für die Steuersignale einen Timer (TIMER0) aufweist.

**36.** Vorrichtung nach Anspruch 35, bei welcher der Timer (TIMER0) dazu ausgebildet ist, als Steuersignale Interrupt-Vorgänge (TIMER0-Interrupt) auszulösen.

**37.** Vorrichtung nach einem oder mehreren der Ansprüche 34 bis 36, bei welcher zur Messung des zeitlichen Abstands zwischen erstem und zweitem Zeitpunkt ein Timer (TIMER1) vorgesehen ist.

**38.** Vorrichtung nach Anspruch 37, bei welcher der Timer (TIMER1) zur Messung des zeitlichen Abstands zwischen erstem und zweitem Zeitpunkt als Ringzähler ausgebildet ist.

39. Vorrichtung nach Anspruch 38, bei welcher der Ringzähler (TIMER1) fortlaufend zählt, und das Ende einer abgeschlossenen Messung mit dem Beginn einer neuen Messung im wesentlichen identisch ist.

40. Vorrichtung nach einem oder mehreren der Ansprüche 34 bis 39, bei welcher als Drehzahl-Signal ein Signal eines elektronisch kommutierten Motors dient.

41. Vorrichtung nach einem oder mehreren der Ansprüche 34 bis 40, bei welcher der Zähler (INT_CNT_f) für Ereignisse (110) des Drehzahl-Signals (f)
in der programmgesteuerten Vorrichtung (23) vorgesehen ist.

42. Motor, mit einer Vorrichtung nach einem der Ansprüche 34 bis 41, bei welchem die Drehzahl durch ein Sollwertsignal in Form einer Frequenz (f_s) **dadurch** auf Null regelbar ist, dass diesem Sollwertsignal der Frequenzwert Null gegeben wird.

**Claims**

1. Method for regulating the rotational speed of a motor

   - which has associated therewith a digital rotational speed controller, and
   - which in operation supplies an actual value signal for the rotational speed in the form of a rotational speed frequency signal,

   to a predetermined rotational speed set value in the form of a set value frequency signal, with the following steps:

   in a first portion of time the rotational speed frequency signal is used to determine a first numerical frequency value which characterises the rotational speed of the motor;
   in a second portion of time which overlaps with the first portion of time, the set value frequency signal is used to determine a second numerical frequency value which characterises the frequency of the set value frequency signal;
   the first and second numerical frequency values are used in the digital rotational speed controller to regulate the rotational speed of the motor to a rotational speed which is associated with the set value frequency signal in accordance with a predetermined mathematical relation.

2. Method according to claim 1, in which a time measurement is carried out between predetermined events of the frequency signal concerned to determine the numerical frequency values.

3. Method according to claim 2, in which flanks of the frequency signal concerned serve as events between which a time measurement takes place.

4. Method according to claim 2 or 3, in which the same time normal is used for the time measurement to determine the first numerical frequency value and for the time measurement to determine the second numerical frequency value.

5. Method according to one of the preceding claims for determining the frequency of a frequency signal which at a constant frequency per unit of time comprises a fixed number of events such as pulses, flanks or the like, with the following steps:

   a) at a first predetermined point in time the measurement of an item of frequency information is initiated;
   b) a second point in time is determined at which an event of the frequency signal following the first predetermined point in time occurs;
   c) the number of the events of the frequency signal following the second point in time is detected;
   d) at a third predetermined point in time the termination of the measurement of the item of frequency information is initiated;
   e) a fourth point in time is determined at which an event of the frequency signal following the third predetermined point in time occurs;
   f) the frequency information is calculated from the time gap between the second point in time and the fourth point in time and the number of the events of the frequency signal between these points in time.

6. Method according to claim 5, in which the event chosen as the event following the third predetermined point in time to determine the fourth point in time is the next following event of the frequency signal.

7. Method according to claim 5, in which the event chosen as the event following the third predetermined point in time to determine the fourth point in time is the next event of the frequency signal at which the number of the events since the second point in time is equal to a product a · N, a and N being integers one of which is at least equal to 1 and the other at least equal to 2.

8. Method according to claim 7, in which with a rotational speed frequency signal (f) the number N corresponds to a fixed number of events per revolution of the rotor.

9. Method according to one or more of the preceding claims 5 to 8, in which measurements are carried out according to claim 5 continuously.

10. Method according to claim 9, in which the first predetermined points in time of successive measurements comprise predetermined time gaps (T_A),
and in which the third predetermined points in time each have an essentially constant time gap from the associated first predetermined points in time.

11. Method according to claim 9 or 10, in which the third predetermined point in time of a first measurement corresponds to the first predetermined point in time of a following second measurement.

12. Method according to claim 11, in which the fourth point in time of a first measurement corresponds to the second point in time of a following second measurement.

13. Method according to one or more of the preceding claims, in which the number (N) of the events of the frequency signal between the second and the fourth point in time is divided by the time gap (Δt) between these two points in time to generate an item of frequency information.

14. Method according to claim 13, in which the rotational speed information is parameterised by multiplication with a constant factor.

15. Method according to claim 14, in which the constant factor is chosen so that the rotational speed information essentially corresponds to a physical rotational speed, e.g. revolutions per minute or revolutions per second.

16. Method according to one of claims 13 to 15, in which the division with a numerator proportional to the number of pulses between the second and the fourth point in time and a denominator proportional to the period of time between the second and the fourth point in time results in an integral item of frequency information and a remainder, and in which the resulting remainder is taken into account by addition to the numerator of the following measurement.

17. Method for obtaining information about the rotational speed of a rotating object referred to in the following as a rotor, according to one or more of the preceding claims,
with an arrangement for producing a rotational speed signal (f) which for each revolution of the rotor comprises at least one event such as a pulse, a signal flank or the like, and with the following steps:

   a) during a first measuring period (T_M1) the number (N) of the events of the rotational speed signal (f) is detected;
   b) the length of time (Δt) of the first measuring period (T_M1) is detected;
   c) a first integral item of rotational speed information and a remainder are produced as a result by an integral division ("div") during which the number of the events during the first measuring period (T_M1) stands in the numerator and the period of time of the first measuring period (T_M1) stands in the denominator (fig. 15: S372; fig. 16: S472);
   d) during the evaluation of a following measurement this remainder (REM_n_OLD; REM_n_s_OLD) is taken into account in the integral division taking place then by addition to the numerator.

18. Method according to claim 17, in which the number (N) of the events before the integral division (S372; S472) is multiplied with a constant factor (2^h; 2^h_s) which is greater than 1 in order to obtain a result for the integral division which is large in relation to the remainder (REM_n; REM_n_s).

19. Method according to claim 18, in which the constant factor is a power of two (2^h; 2^h_s).

20. Method according to claim 19, in which the exponent (h; h_s) of the power of two is an adjustable variable.

21. Method according to one of the preceding claims, in which the rotational speed of the motor is regulated so that the frequency of the rotational speed frequency signal (f) and the frequency of the set value frequency signal (f_s) stand in a predetermined ratio (y/z) to one another.

22. Method according to claim 21, in which the ratio between the frequencies f and f_s is influenced by at least one parameter.

23. Method according to claim 22, in which the ratio between the frequencies f and f_s is predetermined in the controller by at least one factor (X; Y).

24. Method according to claim 23, in which the at least one parameter is stored in a non-volatile memory.

25. Method according to one of the preceding claims for determining the frequency with a plurality of signals (f and f_s), which signals comprise frequency information such as pulses, flanks or the like, with the following steps:

a) for at least two of the signals the measurement of their frequency is initiated at a first predetermined point in time;
b) for each of these signals a second point in time is determined at which an item of frequency information of this signal following the first predetermined point in time occurs;
c) the number of the items of frequency information of each of these signals following the second point in time is detected separately;
d) at a third predetermined point in time the termination of the measurement of the frequency is initiated for these signals;
e) for each of these signals a fourth point in time is determined at which an item of frequency information of this signal following the third predetermined point in time occurs;
f) a variable characterising its frequency is determined for each of the measured signals from the time gap between the second point in time and the fourth point in time and the number of items of frequency information of the signal concerned between these points in time.

26. Method according to claim 25, in which the item of frequency information chosen as the item of frequency information following the third predetermined point in time to determine the fourth point in time is the next following item of frequency information of the signal concerned.

27. Method according to claim 25, in which the item of frequency information chosen as the item of frequency information following the third predetermined point in time to determine the fourth point in time is the next item of frequency information of the signal concerned at which the number of the items of frequency information since the second point in time corresponds to an integral multiple of an integer in the series 2, 3, 4, ....

28. Method according to one of claims 25 to 27, in which measurements are carried out continuously and the third predetermined points in time each have an essentially constant time gap (T_A) from the associated first predetermined points in time.

29. Method according to claim 28, in which the third predetermined point in time of the measurement of a signal corresponds to the first predetermined point in time of a following measurement.

30. Method according to claim 28 or 29, in which the fourth point in time of a measurement corresponds to the second point in time of a following measurement of the same signal.

31. Method according to one of claims 25 to 30, in which the first predetermined points in time for initiation of the measurement of the plurality of signals are essentially identical.

32. Method according to one of claims 25 to 31, in which the third predetermined points in time for initiation of the termination of the measurement of the plurality of signals are essentially identical.

33. Method according to one of the preceding claims, in which the rotational speed of the motor is regulated to zero by setting the frequency value zero for the set value signal.

34. Device for implementing a method according to one of the preceding claims, in which a sensor (61) is provided to obtain an item of information about the rotational speed of a rotating object referred to in the following as a rotor (32; 32'; 32"), which sensor supplies a rotational speed signal (f) which comprises a predetermined number of events (fig. 10: 110) for each revolution of the rotor (32; 32'; 32"),
with a source (23) for control signals (fig. 10: 191, 193, 195),
with a counter (INT_CNT_f) for events (110) of the rotational speed signal (f),
with a programme-controlled device (23) for evaluating the named signals which has associated therewith a programme which is designed to execute the following steps:

a) the measurement of an item of rotational speed information is initiated by a first control signal (fig. 10: 191);
b) a first point in time (fig. 10: 197) is determined at which an event (110) of the rotational speed signal (f) following the first control signal (fig. 10: 191) occurs;
c) the number of the following events (110) of the rotational speed signal (f) is detected by the counter (INT_CNT_f) for events (110) of the rotational speed signal (f);
d) the termination of the measurement of the item of rotational speed information is initiated by a second control signal (fig. 10: 193);
e) a second point in time (fig. 10: 199) is determined at which an event of the rotational speed signal (f) following the second control signal (fig. 10: 193) occurs;
f) an item of rotational speed information (n) is calculated from the time gap (fig. 10:

$\Delta t\_MEAS\_f(197\text{-}199)$) between a first point in time (fig. 10: 197) and a second point in time (fig. 10: 199) and the number (N) of the events (110) of the rotational speed signal (f) between these two points in time.

35. Device according to claim 34, in which the transmitter for the control signals comprises a timer (TIMER0).

36. Device according to claim 35, in which the timer (TIMER0) is designed to initiate interrupt operations (TIMER0-Interrupt) as control signals.

37. Device according to one or more of claims 34 to 36, in which a timer (TIMER1) is provided for measuring the time gap between the first and the second point in time.

38. Device according to claim 37, in which the timer (TIMER1) for measuring the time gap between the first and the second point in time is embodied as a ring counter.

39. Device according to claim 38, in which the ring counter (TIMER1) counts continuously, and the end of a completed measurement is essentially identical to the beginning of a new measurement.

40. Device according to one or more of claims 34 to 39, in which a signal of an electronically commutated motor is used as the rotational speed signal.

41. Device according to one or more of claims 34 to 40, in which the counter (INT_CNT_f) for events (110) of the rotational speed signal (f) is provided in the programme-controlled device (23).

42. Motor with a device according to one of claims 34 to 41, in which the rotational speed can be regulated to zero by a set value signal in the form of a frequency (f_s) in that this set value signal is given the frequency value zero.

**Revendications**

1. Procédé de régulation de la vitesse de rotation d'un moteur

   - auquel est associé un régulateur de vitesse numérique et
   - qui délivre en fonctionnement un signal de valeur réelle pour la vitesse de rotation sous la forme d'un signal vitesse de rotation/fréquence

à une valeur de consigne de vitesse de rotation donnée sous la forme d'un signal de fréquence de consigne, comprenant les pas suivants :

dans un premier intervalle de temps, on détermine à partir du signal vitesse de rotation/fréquence une première valeur de fréquence numérique qui caractérise la vitesse de rotation du moteur ;
dans un deuxième intervalle de temps, qui recouvre le premier intervalle de temps, on détermine à partir du signal de fréquence de consigne une deuxième valeur de fréquence numérique qui caractérise la fréquence du signal de fréquence de consigne ;
on règle dans le régulateur de vitesse numérique, au moyen de la première et de la deuxième valeur de fréquence numérique, la vitesse de rotation du moteur à une vitesse de rotation qui est associée au signal de fréquence de consigne selon une relation mathématique donnée.

2. Procédé selon la revendication 1, dans lequel, pour déterminer les valeurs de fréquence numériques, on effectue une mesure de temps entre des événements donnés du signal de fréquence concerné.

3. Procédé selon la revendication 2, dans lequel on utilise des flancs du signal de fréquence concerné comme événements entre lesquels on effectue une mesure de temps.

4. Procédé selon la revendication 2 ou 3, dans lequel on utilise le même étalon de temps pour la mesure du temps servant à déterminer la première valeur de fréquence numérique et pour la mesure du temps servant à déterminer la deuxième valeur de fréquence numérique.

5. Procédé selon l'une des revendications précédentes pour déterminer la fréquence d'un signal de fréquence qui présente, pour une fréquence constante, un nombre fixe d'événements à la manière d'impulsions, de flancs ou analogues par unité de temps, comprenant les pas suivants :

a) à un premier instant donné, on déclenche la mesure d'une information de fréquence ;
b) on détermine un deuxième instant auquel survient un événement du signal de fréquence suivant le premier instant donné ;
c) on saisit le nombre d'événements du signal de fréquence suivant le deuxième instant donné ;
d) à un troisième instant donné, on déclenche la fin de la mesure de l'information de fréquence ;
e) on détermine un quatrième instant auquel survient un événement du signal de fréquence suivant le troisième instant donné ;
f) on calcule l'information de fréquence à partir de l'intervalle de temps entre le deuxième instant et le quatrième instant ainsi que du nombre d'événements du signal de fréquence entre ces instants.

6. Procédé selon la revendication 5, dans lequel on choisit pour la détermination du quatrième instant, comme événement suivant le troisième instant donné, l'événement suivant du signal de fréquence.

7. Procédé selon la revendication 5, dans lequel on choisit pour la détermination du quatrième instant, comme événement suivant le troisième instant donné, l'événement suivant du signal de fréquence auquel le nombre d'événements depuis le deuxième instant est égal à un produit a · N, où a et N sont des nombre entiers dont l'un est au moins égal à 1 et l'autre au moins égal à 2.

8. Procédé selon la revendication 7, dans lequel, à un signal vitesse de rotation/fréquence (f), le nombre N correspond à un nombre fixe d'événements par tour du rotor.

9. Procédé selon l'une ou plusieurs des revendications précédentes 5 à 8, dans lequel on effectue en continu des mesures selon la revendication 5.

10. Procédé selon la revendication 9, dans lequel les premiers instants donnés de mesures successives présentent des intervalles de temps (T_A) donnés,
et dans lequel les troisièmes instants donnés présentent chaque fois un intervalle de temps essentiellement constant par rapport aux premiers instants donnés associés.

11. Procédé selon la revendication 9 ou 10, dans lequel le troisième instant donné d'une première mesure correspond au premier instant donné d'une deuxième mesure suivante.

**12.** Procédé selon la revendication 11, dans lequel le quatrième instant d'une première mesure correspond au deuxième instant d'une deuxième mesure suivante.

**13.** Procédé selon l'une ou plusieurs des revendications précédentes, dans lequel, pour générer une information de fréquence, on effectue une division du nombre (N) d'événements du signal de fréquence entre le deuxième et le quatrième instant par l'intervalle de temps (Δt) entre ces deux instants.

**14.** Procédé selon la revendication 13, dans lequel l'information de vitesse de rotation est paramétrée par une multiplication par un facteur constant.

**15.** Procédé selon la revendication 14, dans lequel le facteur constant est choisi de telle manière que l'information de vitesse de rotation corresponde essentiellement à une vitesse de rotation physique, p. ex. tr/min ou tr/sec.

**16.** Procédé selon l'une des revendications 13 à 15, dans lequel la division avec un numérateur (en anglais : numerator) proportionnel au nombre d'impulsions entre le deuxième et le quatrième instant et un dénominateur (en anglais : denominator) proportionnel à la durée entre le deuxième et le quatrième instant donne pour résultat une information de fréquence entière et un reste, et dans lequel on tient compte du reste obtenu en l'additionnant au numérateur (en anglais : numerator) de la mesure suivante.

**17.** Procédé pour obtenir une information sur la vitesse de rotation d'un objet en rotation, appelé dans la suite rotor, selon l'une ou plusieurs des revendications précédentes,
avec un dispositif pour générer un signal de vitesse de rotation (f) qui présente au moins un événement à la manière d'une impulsion, d'un flanc de signal ou analogue par tour de rotor, et comprenant les pas suivants :

   a) on saisit pendant une première période de mesure (T_M1) le nombre (N) d'événements du signal de vitesse de rotation (f) ;
   b) on saisit la durée (Δt) de la première période de mesure (T_M1) ;
   c) par une division entière (« div »), dans laquelle le nombre d'événements pendant la première période de mesure (T_M1) est au numérateur (en anglais : numerator) et la durée de la première période de mesure (T_M1) est au dénominateur (en anglais : denominator), on génère comme résultat une première information de vitesse de rotation entière et un reste (fig. 15 : S372 ; fig. 16 : S472) ;
   d) lors de l'évaluation d'une mesure suivante, on tient compte de ce reste (REM_n_OLD ; REM_n_s_OLD) en l'additionnant au numérateur (en anglais : numerator) lors de la division entière effectuée à ce moment-là.

**18.** Procédé selon la revendication 17, dans lequel le nombre (N) d'événements est multiplié par un facteur constant (2^h ; 2^h_s) qui est plus grand que 1 avant la division entière (S372 ; S472) pour obtenir un résultat de la division entière grand par rapport au reste (REM_n ; REM_n_s).

**19.** Procédé selon la revendication 18, dans lequel le facteur constant est une puissance de deux (2^h ; 2^h_s).

**20.** Procédé selon la revendication 19, dans lequel l'exposant (h ; h_s) de la puissance de deux est une variable réglable.

**21.** Procédé selon l'une des revendications précédentes, dans lequel la vitesse de rotation du moteur est réglée de telle manière que la fréquence du signal vitesse de rotation/fréquence (f) et la fréquence du signal de fréquence de consigne (f_s) soient dans un rapport donné (y/z).

**22.** Procédé selon la revendication 21, dans lequel le rapport entre les fréquences f et f_s est influencé par au moins un paramètre.

**23.** Procédé selon la revendication 22, dans lequel le rapport entre les fréquences f et f _s est donné par au moins un facteur (X ; Y) dans le régulateur.

**24.** Procédé selon la revendication 23, dans lequel l'au moins un paramètre est stocké dans une mémoire non volatile.

**25.** Procédé selon l'une des revendications précédentes pour déterminer la fréquence dans le cas d'une pluralité de signaux (f et f_s), lesquels signaux présentent des informations de fréquence à la manière d'impulsions, de flancs ou analogues, comprenant les pas suivants :

a) pour au moins deux de ces signaux, on déclenche à un premier instant donné la mesure de leur fréquence ;

b) pour chacun de ces signaux, on détermine un deuxième instant auquel survient une information de fréquence de ce signal suivant le premier instant donné ;

c) on saisit séparément le nombre d'informations de fréquence suivant le deuxième instant de chacun de ces signaux ;

d) à un troisième instant donné, on déclenche la fin de la mesure de la fréquence pour ces signaux ;

c) on détermine pour chacun de ces signaux un quatrième instant auquel survient une information de fréquence de ce signal suivant le troisième instant donné ;

f) on détermine pour chacun des signaux mesurés une grandeur caractéristique de sa fréquence à partir de l'intervalle de temps entre le deuxième instant et le quatrième instant ainsi que du nombre d'informations de fréquence du signal concerné entre ces instants.

26. Procédé selon la revendication 25, dans lequel on choisit pour la détermination du quatrième instant, comme information de fréquence suivant le troisième instant donné, l'information de fréquence suivante du signal concerné.

27. Procédé selon la revendication 25, dans lequel on choisit pour la détermination du quatrième instant, comme information de fréquence suivant le troisième instant donné, l'information de fréquence suivante du signal concerné à laquelle le nombre d'informations de fréquence depuis le deuxième instant correspond à un multiple entier d'un chiffre entier de la série 2, 3, 4...

28. Procédé selon l'une des revendications précédentes 25 à 27, dans lequel on effectue en continu des mesures et les troisièmes instants donnés présentent chaque fois un intervalle de temps (T_A) essentiellement constant par rapport aux premiers instants donnés associés.

29. Procédé selon la revendication 28, dans lequel le troisième instant donné de la mesure d'un signal correspond au premier instant donné d'une mesure suivante.

30. Procédé selon la revendication 28 ou 29, dans lequel le quatrième instant d'une mesure correspond au deuxième instant d'une mesure suivante du même signal.

31. Procédé selon l'une des revendications 25 à 30, dans lequel les premiers instants donnés pour le déclenchement de la mesure de la pluralité de signaux sont essentiellement identiques.

32. Procédé selon l'une des revendications 25 à 31, dans lequel les troisièmes instants donnés pour le déclenchement de la fin de la mesure de la pluralité de signaux sont essentiellement identiques.

33. Procédé selon l'une des revendications précédentes, dans lequel la vitesse de rotation du moteur est réglée à zéro par fixation de la valeur de fréquence nulle pour le signal de consigne.

34. Dispositif pour réaliser un procédé selon l'une des revendications précédentes,

dans lequel, pour obtenir une information sur la vitesse de rotation d'un objet en rotation, appelé dans la suite rotor (32 ; 32', 32"), il est prévu un capteur (61) qui délivre un signal de vitesse de rotation (f) qui présente un nombre donné d'événements (fig. 10 : 110) par rotation du rotor (32 ; 32', 32"),

avec une source (23) de signaux de commande (fig. 10 : 191, 193, 195),

avec un compteur (INT_CNT_f) des événements (110) du signal de vitesse de rotation (f),

avec un dispositif commandé par programme (23) pour évaluer les signaux mentionnés, auquel est associé un programme qui est conçu pour exécuter les pas suivants :

a) la mesure d'une information de vitesse de rotation est déclenchée par un premier signal de commande (fig. 10 : 191) ;

b) un premier instant (fig. 10 : 197) auquel survient un événement (110) du signal de vitesse de rotation (f) suivant le premier signal de commande (fig. 10 : 191) est déterminé ;

c) le nombre d'événements (110) suivants du signal de vitesse de rotation (f) est saisi à l'aide du compteur (INT_CNT_f) des événements (110) du signal de vitesse de rotation (f) ;

d) la fin de la mesure de l'information de vitesse de rotation est déclenchée par un deuxième signal de commande (fig. 10 : 193) ;

e) un deuxième instant (fig. 10 : 199) auquel survient un événement du signal de vitesse de rotation (f) suivant le deuxième signal de commande (fig. 10 : 193) est déterminé ;

f) une information de vitesse de rotation (n) est calculée à partir de l'intervalle de temps (fig. 10 : $\Delta t\_MEAS\_f$ (197-199)) entre le premier instant (fig. 10 : 197) et le deuxième instant (fig. 10 : 199) ainsi que du nombre (N) d'événements (110) du signal de vitesse de rotation (f) entre ces deux instants.

**35.** Dispositif selon la revendication 34, dans lequel le générateur des signaux de commande présente un timer (TIMER0).

**36.** Dispositif selon la revendication 35, dans lequel le timer (TIMER0) est conçu pour déclencher des interruptions (TIMER0-Interrupt) comme signaux de commande.

**37.** Dispositif selon l'une ou plusieurs des revendications 34 à 36, dans lequel il est prévu un timer (TIMER1) pour la mesure de l'intervalle de temps entre le premier et le deuxième instant.

**38.** Dispositif selon la revendication 37, dans lequel le timer (TIMER1) pour la mesure de l'intervalle de temps entre le premier et le deuxième instant est conçu comme un compteur annulaire.

**39.** Dispositif selon la revendication 38, dans lequel le compteur annulaire (TIMER1) compte en continu et la fin d'une mesure terminée est essentiellement identique au début d'une nouvelle mesure.

**40.** Dispositif selon l'une ou plusieurs des revendications 34 à 39, dans lequel on utilise comme signal de vitesse de rotation un signal d'un moteur à commutation électronique.

**41.** Dispositif selon l'une ou plusieurs des revendications 34 à 40, dans lequel le compteur (INT_CNT_f) des événements (110) du signal de vitesse de rotation (f) est prévu dans le dispositif commandé par programme (23).

**42.** Moteur avec un dispositif selon l'une ou plusieurs des revendications 34 à 41, dans lequel la vitesse de rotation est réglable à zéro par un signal de consigne sous la forme d'une fréquence (f_s) en donnant à ce signal de consigne la valeur de fréquence nulle.

Fig. 1

Fig. 2

Fig. 3

Fig. 4A

Fig. 4B

Fig. 4

EP 1 214 602 B1

EP 1 214 602 B1

t_on

T

HIGH

121   123   125   PWM_SW

LOW

t

Fig. 5A

Fig. 5

U

MAX

SW

Fig. 5B

0

t

Fig.6

Fig.6A

Fig.6B

Fig.6C

Fig. 7

Fig. 8

| Bit7 | Bit6 | Bit5 | Bit4 | Bit3 | Bit2 | Bit1 | Bit0 |
|------|------|------|------|------|------|------|------|
| X | X | X | FCT_RGL | FCT_RGL_ON | FCT_CALC_n_s | FCT_CALC_n | FCT_XY |
| MSB | | | | | | | LSB |

605

Fig. 9

Fig. 10

Fig. 11

EP 1 214 602 B1

S639

TIMER0-Interrupt

S352

```
. . .
```

S354

Subtimer_T_A

S356

CNT_T_A := CNT_T_A + 1

S358

CNT_T_A >= T_A_TIME?   —N

Y

S360

DO_MEAS_f_s := 1
DO_MEAS_f := 1
FCT_RGL_ON := 1

S362

CNT_T_A := 0

S364

RETI

Fig. 12

```
                    ┌─────────────────┐  ╱S631
                    │  Hall-Interrupt │
                    └─────────────────┘
                             │  ╱S302
                    ┌─────────────────┐
                    │       ...       │
                    └─────────────────┘
                             │  ╱S304
                      ┌───────────┐
                      │  COMMUT   │
                      └───────────┘
                             │  ╱S306
                            ╱ ╲
                     Y    ╱     ╲    N
              ┌────────── ╲ HALL=1? ╱ ──────────┐
   S308       │            ╲     ╱               │     S312
       ╲      ▼             ╲ ╱                  ▼    ╱
   ┌──────────────┐                      ┌──────────────┐
   │ HALL_INT :=  │                      │ HALL_INT :=  │
   │ (HIGH -> LOW)│                      │ (LOW -> HIGH)│
   └──────────────┘                      └──────────────┘
          │                                     │
   ┌──────────────┐                      ┌──────────────┐
   │  OUT1 := 1   │                      │  OUT1 := 0   │
   │  OUT2 := 0   │                      │  OUT2 := 1   │
   └──────────────┘                      └──────────────┘
    ╱     │                                     │      ╲
  S310    └────────────────┬────────────────────┘     S314
                           │      ╱S320
                    ┌───────────┐
                    │   MEAS_f  │
                    └───────────┘
                           │         ╱S322
      ┌────────────────────────────────────────┐
      │  INT_CNT_f := INT_CNT_f + INC_f         │
      │      t_END_f := t_TIMER1                │
      └────────────────────────────────────────┘
                           │    ╱S324
                          ╱ ╲
                        ╱     ╲
              ┌──────╱ INT_CNT_f mod ╲──────── N ──────┐
              │      ╲  MOD_f = 0?   ╱                  │
              │        ╲           ╱                    │
              │          ╲   Y   ╱                      │
              │             ▼    ╱S326                  │
              │            ╱ ╲                          │
              │          ╱     ╲                        │
              ├──────╱ DO_MEAS_f = 1? ╲──── N ──────────┤
              │      ╲               ╱                  │
              │        ╲    Y      ╱                    │
              │           ▼   ╱S328                     │
              │          ╱ ╲                            │
              │        ╱     ╲                          │
              ├────╱ FCT_CALC_n = 0? ╲──── N ───────────┤
              │    ╲               ╱                    │
              │      ╲    Y      ╱                      │
              │         ▼    ╱S330                      │
      ┌────────────────────────────────────┐           │
      │     t_MEAS_f := t_END_f            │           │
      │   INT_MEAS_f := INT_CNT_f          │           │
      │     INT_CNT_f := 0                 │           │
      └────────────────────────────────────┘           │
                      │       ╱S332                     │
      ┌────────────────────────────────────┐           │
      │     FCT_CALC_n := 1                │           │
      │     DO_MEAS_f := 0                 │           │
      └────────────────────────────────────┘           │
                      │                                 │
                      └──────────────┬──────────────────┘
                              ┌───────────┐  ╱S334
                              │   RETI    │
                              └───────────┘
```

Fig. 13

S635

f_s-Interrupt

S402

...

S420

MEAS_f_s

S422

INT_CNT_f_s := INT_CNT_f_s + INC_f_s
t_END_f_s := t_TIMER1

S424

INT_CNT_f_s MOD
MOD_f_s = 0? ——N

Y

S426

DO_MEAS_f_s = 1? ——N

Y

S428

FCT_CALC_n_s = 0? ——N

Y

S430

t_MEAS_f_s := t_END_f_s
INT_MEAS_f_s := INT_CNT_f_s
INT_CNT_f_s := 0

S432

FCT_CALC_n_s := 1
DO_MEAS_f_s := 0

S434

RETI

Fig. 14

Fig. 15

S620

CALC_n_s

S470

Δt_CALC_f_s := t_OLD_f_s - t_MEAS_f_s
t_OLD_f_s := t_MEAS_f_s
INT_CALC_f_s := INT_MEAS_f_s

S472

(n_s, REM_n_s):=(INT_CALC_f_s * 2^h_s + REM_n_s_OLD) div Δt_CALC_f_s
REM_n_s_OLD := REM_n_s

S474

FCT_CALC_n_s := 0

S602

FCT_MAN

Fig. 16

S624

RGL_ON

S390

FCT_CALC_n_s = 0? ──N

Y

S392

FCT_CALC_n = 0? ──N→

Y

S394

FCT_RGL := 1
FCT_RGL_ON := 0

S602

FCT_MAN

Fig. 17

S628

RGL

S530

RGL_DIFF := n_s * X - n

S532

RGL_PROP := RGL_DIFF * RGL_P
RGL_INT := RGL_INT + RGL_DIFF * RGL_I
RGL_VAL := RGL_PROP + RGL_INT

S534

RGL_VAL < 0?  →Y→  S536  RGL_VAL := 0

N

S538

RGL_VAL > RGL_MAX?  →Y→  S540  RGL_VAL := RGL_MAX

N

S542

PWM_SW := RGL_VAL

S544

FCT_RGL := 0

S602

FCT_MAN

Fig. 18

Fig. 19

Fig. 20

S624'

RGL_ON2

S500

FCT_CALC_n_s = 0? —N→

S502

$t\_END\_f\_s - t\_TIMER1 > t\_TO\_s?$ —N→

Y

S504

$n\_s := 0$
$t\_END\_f\_s := t\_TIMER1$

Y

S506

FCT_CALC_n = 0? —N→

S508

$t\_END\_f - t\_TIMER1 > t\_TO?$ —N→

Y

S510

—Y— $n\_s = 0?$

N

S512

PWM_SW := RGL_MAX
$t\_END\_f := t\_TIMER1$
FCT_RGL_ON := 0

Y

S514

FCT_RGL := 1
FCT_RGL_ON := 0

S602

FCT_MAN

Fig. 21

56

Fig. 22

Fig. 23

EP 1 214 602 B1

Fig. 24

Fig. 25

EP 1 214 602 B1

Fig. 26

EP 1 214 602 B1

Fig. 27

Fig. 28

Fig. 29

EP 1 214 602 B1